(19) Europäisches Patentamt
European Patent Office
Office européen des brevets

(11) EP 2 290 373 A1

(12) **EUROPEAN PATENT APPLICATION**

(43) Date of publication:
**02.03.2011 Bulletin 2011/09**

(21) Application number: **10173210.5**

(22) Date of filing: **18.08.2010**

(51) Int Cl.:
***G01P 3/50*** *(2006.01)* ***G01C 21/16*** *(2006.01)*
***G01C 21/26*** *(2006.01)* ***G01P 3/22*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **28.08.2009 JP 2009198593**

(71) Applicant: **Sony Corporation**
**Tokyo 108-0075 (JP)**

(72) Inventor: **Ohkubo, Masashi**
**TOKYO 108-0075 (JP)**

(74) Representative: **Beder, Jens**
**Mitscherlich & Partner**
**Patent-und Rechtsanwälte**
**Sonnenstraße 33**
**80331 München (DE)**

(54) **Velocity calculation device, velocity calculation method and associated navigation device**

(57) A velocity calculation device for a Personal Navigation Device (PND) includes a vertical direction acceleration detection unit (4) that is mounted on the PND, which is fixed on a mobile object, to detect the acceleration of a vertical direction generated corresponding to the unevenness of a surface on which the mobile object moves; a horizontal direction angular velocity detection unit (5) that is mounted on the PND fixed on the mobile object to detect the angular velocity around a horizontal axis perpendicular to a direction of travel of the mobile object generated corresponding to the unevenness of the surface on which the mobile object moves; and a velocity calculation unit (22) for calculating the velocity in the direction of travel of the mobile object based on the acceleration of the vertical direction and the angular velocity around the horizontal axis.

FIG. 7

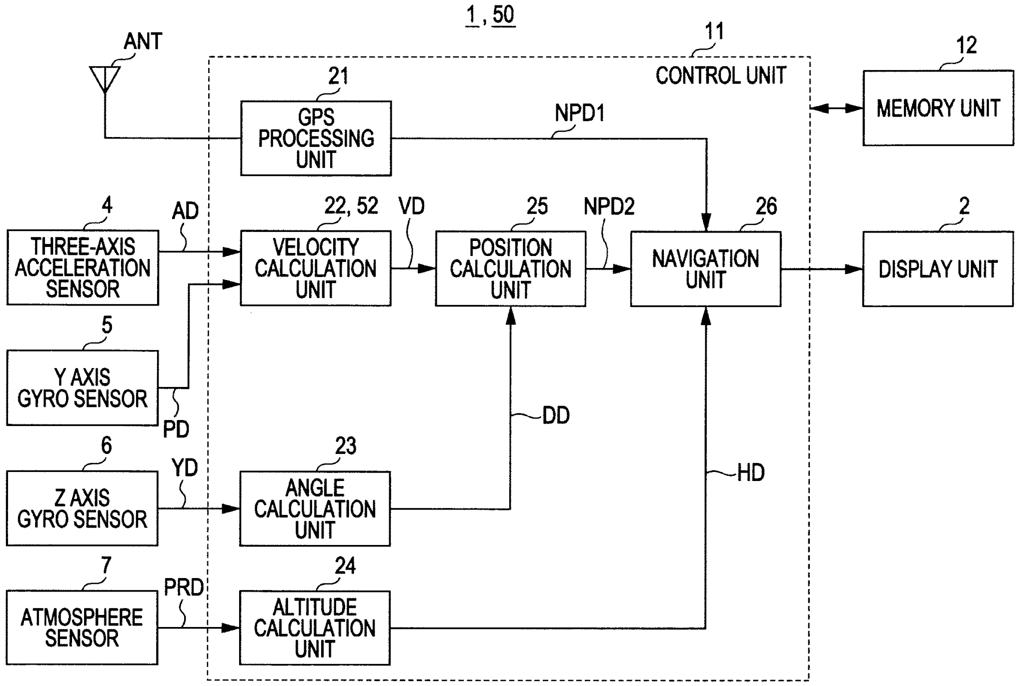


EP 2 290 373 A1

## Description

BACKGROUND OF THE INVENTION

1. Field of the Invention

The present invention relates to a velocity calculation device, a velocity calculation method and a navigation device, and, for example, is very suitable for applying to a portable navigation device.

2. Description of the Related Art

Hitherto, in navigation device, position measurement signals (hereinafter, also called GPS signals) are received from a plurality of GPS (Global Positioning System) satellites to calculate the present positions of mobile objects based on the GPS signals.

However, in such navigation device, when the mobile object with the navigation device mounted thereon enters, for example, a tunnel or a basement garage, it is difficult to receive the GPS signals from the GPS satellites, and therefore it is difficult to calculate the present position of the mobile object based on the GPS signals.

Thus, among the navigation devices, there is a navigation device in which even when it is difficult to receive the GPS signals, at the time of cornering, the velocitys in the direction of travel are calculated on the basis of acceleration in a horizontal direction perpendicular to the direction of travel of the mobile object and angular velocitys around a vertical axis perpendicular to the direction of travel to calculate the present positions based on the velocitys in the direction of travel (for example, Japanese Unexamined Patent Application Publication No. 2008-76389).

SUMMARY OF THE INVENTION

However, in the above-mentioned navigation device, the velocitys in the direction of travel can be calculated at the time of cornering, but the velocitys in the direction of travel are difficult to be calculated at the time of going straight. Thus, there is a problem in that the velocitys in the direction of travel are difficult to be calculated without fail under the overall moving environment.

Thus, it is desirable to suggest a velocity calculation device, a velocity calculation method, and a navigation device that can calculate the velocitys of the mobile object with a high degree of precision under the overall moving environment regardless of the moving environment.

The velocity calculation device according to an embodiment of the present invention includes a vertical direction acceleration detection unit that is mounted on a mobile object to detect acceleration of a vertical direction generated corresponding to the unevenness of a surface on which the mobile object moves, a horizontal direction angular velocity detection unit that is mounted on the mobile object to detect the angular velocity around a horizontal axis perpendicular to a direction of travel of the mobile object generated corresponding to the unevenness of the surface on which the mobile object movess, and a velocity calculation unit for calculating the velocity in the direction of travel of the mobile object based on the acceleration of the vertical direction and the angular velocity around the horizontal axis.

In addition, the velocity calculation method according to an embodiment of the present invention includes the steps of detecting acceleration of a vertical direction generated in a mobile object corresponding to the unevenness of the surface on which the mobile object moves; detecting angular velocity around a horizontal axis perpendicular to a direction of travel of the mobile object generated in the mobile object corresponding to the unevenness of the surface on which the mobile object moves; and calculating the velocity in the direction of travel of the mobile object based on the acceleration of the vertical direction and the angular velocity around the horizontal axis.

Furthermore, the navigation device according to an embodiment of the present invention includes a vertical direction acceleration detection unit that detects acceleration of a vertical direction generated in a mobile object corresponding to the unevenness of surface on which the mobile object movess; a horizontal angular velocity detection unit that detects angular velocity around a horizontal axis perpendicular to a direction of travel of the mobile object generated in the mobile object corresponding to the unevenness of surface on which the mobile object movess; a velocity calculation unit that calculates the velocity in the direction of travel of mobile object based on the acceleration of the vertical direction and the angular velocity around the horizontal axis; a vertical direction angular velocity detection unit that calculates the angular velocity around a vertical axis perpendicular to the direction of travel; an angle calculation unit that calculates the angle through which the mobile object has rotated based on the angular velocity around the vertical axis; and a position calculation unit that calculates the position of a mobile object based on the velocity in the direction of travel calculated by the velocity calculation unit and the angle calculated by the angle calculation unit.

As a result, it is possible to detect the acceleration of the vertical direction generated corresponding to the unevenness of the surface on which the mobile object movess and the angular velocitys around the horizontal axis perpendicular to the direction of travel to calculate the velocity of the direction of travel of the mobile object under the overall moving environment based on the acceleration of the vertical direction and the angular velocity around the horizontal axis.

According to an embodiment of the present invention, it is possible to realize the velocity calculation device, the velocity calculation method and the navigation device which can calculate the velocitys of the mobile object with a high degree of precision under the overall moving environment regardless of the moving environment, by detecting the acceleration of the vertical direction generated corresponding to the unevenness of the surface on which the mobile object movess and the angular velocitys around the horizontal axis perpendicular to the direction of travel to calculate the velocity of the direction of travel of the mobile object under the overall moving environment based on the acceleration of the vertical direction and the angular velocitys around the horizontal axis.

BRIEF DESCRIPTION OF THE DRAWINGS

Figs. 1A and 1B are schematic diagrams showing a figure when running on a bumpy surface on which the mobile object moves.
Fig. 2 is a schematic diagram showing a figure when running on a curve.
Fig. 3 is a schematic diagram showing a present position calculation method using the velocity and the angle.
Fig. 4 is a schematic diagram showing the overall configuration of a PND.
Fig. 5 is a schematic diagram showing the definition of the coordinate system of a PND.
Fig. 6 is a schematic diagram showing a sensor configuration in a PND.
Fig. 7 is a schematic diagram showing a circuit configuration in a PND.
Fig. 8 is a schematic diagram showing the configuration of a velocity calculation unit.
Fig. 9 is a schematic diagram showing a relationship of an altitude and an angle.
Figs. 10A and 10B are schematic diagrams showing a figure of a surface on which the mobile object moves angle at the time of low velocity.
Figs. 11A and 11B are schematic diagrams showing a figure of a surface on which the mobile object moves angle at the time of high velocity.
Fig. 12 is a schematic diagram showing a figure of a surface on which the mobile object moves angle at the time of ultra low velocity.
Fig. 13 is a schematic diagram showing of a figure of the vibration due to a cradle.
Fig. 14 is a schematic diagram showing an additional acceleration and an additional angular velocity after processing a high-pass filter.
Figs. 15A to 15H are schematic diagrams showing an additional angular velocity in which a Fourier transform is performed for each of 4096 data points.
Figs. 16A to 16H are schematic diagrams showing an additional acceleration in which a Fourier transform is performed for each of 4096 data points.
Figs. 17A to 17D are schematic diagrams showing a comparison example of a low-pass filter with respect to an additional acceleration.
Figs. 18A to 18D are schematic diagrams showing a comparison example of a low-pass filter with respect to an additional angular velocity.
Fig. 19 is a schematic diagram showing a relationship of front acceleration and rear acceleration at the time of low velocity.
Figs. 20A and 20B are schematic diagrams showing a relationship of front acceleration and rear acceleration at the time of middle velocity and high velocity.
Figs. 21A to 21F are schematic diagrams showing a simulation example of acceleration, a pitch rate and a velocity according to three kinds of installation positions.
Fig. 22 is a schematic diagram showing a relationship of a maximum value and a minimum value.
Fig. 23 is a schematic diagram showing a relationship of a velocity and the number of data.
Figs. 24A and 24B are schematic diagrams showing a figure of acceleration and pitch rate according to a length of another circular arc.
Fig. 25 is a flow chart that is provided for the description of a present position calculation processing order using a velocity calculation processing.
Figs. 26A and 26B are schematic diagrams showing an example of a measurement result of acceleration, angular velocity and velocity.
Figs. 27A and 27B are schematic diagrams showing comparison (1) of a measurement result and a reference.
Figs. 28A and 28B are schematic diagrams showing comparison (2) of a measurement result and a reference.

Figs. 29A and 29B schematic diagrams showing comparison (3) of a measurement result and a reference.
Figs. 30A and 30B are schematic diagrams showing comparison (4) of a measurement result and a reference.
Figs. 31A and 31B are schematic diagrams showing comparison (5) of a measurement result and a reference.
Figs. 32A to 32C are schematic diagrams showing comparison (1) of a measurement result and a reference at the time of curve.
Figs. 33A to 33C are schematic diagrams showing comparison (2) of a measurement result and a reference at the time of curve.
Figs. 34A to 34C are schematic diagrams showing comparison (3) of a measurement result and a reference at the time of curve.
Figs. 35A and 35B are schematic diagrams showing a comparison of a path on a map and a running trace.
Fig. 36 is a schematic diagram showing a comparison of a velocity and a distance based on a measurement result from PND mounted on a light mobile object and GPS signal.
Fig. 37 is a schematic diagram showing a comparison of a velocity and a distance based on a measurement result from a PND mounted on a minivan and GPS signal.
Fig. 38 is a schematic diagram showing a configuration of a velocity calculation unit according to a second embodiment.
Figs. 39A and 39B are schematic diagrams showing cut-off frequencies for each velocity regions.
Fig. 40 is a schematic diagram showing a comparison of a velocity and a distance based on a measurement result when each cut-off frequency is fixed and GPS signal.
Fig. 41 is a schematic diagram showing a comparison of a velocity and a distance based on a measurement result when each cut-off frequency is changed and GPS signal.
Fig. 42 is a schematic diagram showing a use example according to another embodiment.

DESCRIPTION OF THE PREFERRED EMBODIMENTS

Hereinafter, forms (hereinafter, referred to as "embodiment") for carrying out the invention will be described based on the drawings. Furthermore, the description will be provided in the following order.

1. First Embodiment (a navigation device, an example in which a cut-off frequency is fixed)
2. Second Embodiment (a navigation device, an example in which a cut-off frequency is switched corresponding to a velocity).
3. Another Embodiment

<1. First Embodiment>

[1-1. Basic Principle]

In an embodiment of the present invention, the description will given of a basic principle in which the velocitys and the current positions of the mobile object are calculated using a portable navigation device (hereinafter, this is also called PND (Personal Navigation Device) as a navigation device by means of the PND.

[1-1-1. Velocity Calculation Principle]

In practice, a mobile object, which is driving on the moving rarely runs on the flat movings, but in reality runs on the movings with the overall concave shapes shown in Fig. 1A and on a moving with the overall convex shape shown in Fig. 1B.

Herein, in coordinate systems of the mobile objects, a front and rear direction of the mobile object is indicated by an X axis, a horizontal direction perpendicular to the X axis is indicated by a Y axis, and up and down direction is indicated by a Z axis.

The PND, which is, for example, mounted on a dash board of the mobile object, detects an acceleration $\alpha_z$ in the lower direction along the Z axis, for example, at a sampling frequency of 50 [Hz] by a three-axis acceleration sensor provided on the PND when the mobile object runs on the moving with the concave shape (Fig. 1A).

Furthermore, the PND detects an angular velocity (hereinafter, also referred to as "pitch rate") $\omega y$ around the Y axis perpendicular to the direction of travel at the sampling frequency of 50 [Hz] by means of a Y axis gyro sensor provided on the PND.

Herein, in the PND, the acceleration $\alpha_z$ of the lower direction along the Z axis is defined by positiveness, and the pitch rate $\omega_y$ when longitudinally rotating on an imaginary circle formed along the surface on which the mobile object moves with the concave shape as shown in Fig. 1A upward with respect to the direction of travel is defined by positiveness.

In the PND, the velocity V of the direction of travel can be calculated by 50 times each second using the acceleration $\alpha_z$ detected by the three-axis acceleration sensor and the pitch rate $\omega y$ detected by the Y axis gyro sensor by the following equation.

$$V = \alpha_z / \omega_y \ldots (1)$$

Furthermore, the PND detects an acceleration $\alpha_z$' in the upper direction along the Z axis by means of the three-axis acceleration sensor provided on the PND, for example, at the sampling frequency of 50 [Hz] when the mobile object runs on the moving with the convex shape (Fig. 1B), and detects the pitch rate $\omega_y$, around the Y axis by means of the Y axis gyro sensor provided on the PND, for example, at the sampling frequency of 50 [Hz].

In addition, in the PND, the velocity V' of the direction of travel can be calculated by 50 times each second using the acceleration $\alpha_z$' detected by the three-axis acceleration sensor and the pitch rate $\omega_y$' detected by the Y axis gyro sensor by the following equation.

$$V' = \alpha_z' / \omega_y' \ldots (2)$$

Herein, for the convenience of the description, the negative acceleration $\alpha_z$ is described as the acceleration $\alpha_z$' in fact, the three-axis acceleration sensor, however, performs the detection by setting the acceleration $\alpha_z$' as the negative value of acceleration $\alpha_z$. In addition, even with respect to the pitch rate $\omega_y$', similarly, the negative pitch rate $\omega_y$ is described as the pitch rate $\omega_y$', in fact, Y axis gyro sensor, however, performs the detection by setting the pitch rate $\omega_y$' as the negative value of the pitch rate $\omega_y$. Thus, in fact, the velocity V' is also calculated as the velocity V.

[1-1-2. Present Position Calculation Principle]

Next, the description will be given to the present position calculation principle that calculates the present position based on the velocity V calculated from the above-mentioned velocity calculation principle and the angular velocity of the Z axis rotation.

As shown in Fig. 2, the PND detects an angular velocity (hereinafter called "yaw rate") $\omega_z$ of the Z axis rotation by means of the Z axis gyro sensor provided on the PND, for example, at the sampling frequency of 50 [Hz] when the mobile object, for example, turns to the left side.

Next, as shown in Fig. 3, the PND finds the change amount from the prior position P0 to the present position P1 on the basis of the angle $\theta$ which can be obtained by adding the sampling period (in this case, 0.02 [s]) to the velocity V in the preceding position P0 and the yaw rate $\omega_z$ detected by the gyro sensor. In addition, the PND can calculate the present position P1 by adding the change amount to the preceding position P0.

[1-2. Configuration of PND]

The description will be given for a specific configuration of a car navigation device that calculates the velocity and the present position of the mobile object using the above-mentioned basic principles of the present invention.

[1-2-1. Exterior Configuration of PND]

As shown in Fig. 4, the PND 1 has a display unit 2 provided on the front surface of the PND 1, and can display map images etc. corresponding to map data stored in, for example, an inactive memory (not shown) built in the PND 1 with respect to the display unit 2.

Furthermore, the PND 1 is held by a cradle 3, which is attached on a dash board of a mobile object via a sucker 3A, and the PND 1 and the cradle 3 are mechanically and electrically connected with each other.

As a result, the PND 1 operates by means of electric power of a power supply which is supplied from a battery of the mobile object via the cradle 3, and operates even in an independent state by the electric power supplied from the built-in battery when being detached from the cradle 3.

Herein, the PND 1 is installed so that the display unit 2 is nearly perpendicular to the direction of travel of mobile object. At this time, as shown in Fig. 5, the coordinate system of the PND 1 is such that the front and rear direction (direction of travel) of the mobile object is indicated by the X axis, the horizontal direction perpendicular to the X axis is indicated by the Y axis, and the up and down direction is indicated by the Z axis.

In the coordinate system, the direction of travel of mobile object is defined as the positiveness of the X axis, the right side direction is defined as the positiveness of the Y axis, and the far lower direction is defined as the positiveness of the Z axis.

[1-2-2. Sensor Configuration of PND]

As shown in Fig. 6, the PND 1 has a three-axis acceleration sensor 4, a Y axis gyro sensor 5, a Z axis gyro sensor 6 and an atmospheric pressure sensor 7 provided therein.
The three-axis acceleration sensor 4 is adapted to detect the acceleration $\alpha X$ along the X axis, the acceleration $\alpha_y$ along the Y axis, and the acceleration $\alpha_z$ along the Z axis as the voltage values.
Furthermore, the Y axis gyro sensor 5, the Z axis gyro sensor 6, and the atmospheric pressure sensor 7 are adapted to detect the pitch rate $\omega_y$ around the Y axis, the yaw rate $\omega_z$ around the Z axis, and the peripheral atmospheric pressure PR as the voltage values.

[1-2-3. Circuit Configuration of PND]

As shown in Fig. 7, a control unit 11 of the PND 1 includes a CPU (Central Processing Unit) to generally control the whole by a basic program read from a memory unit 12 that has, for example, an inactive memory, etc.
Furthermore, the PND 1 is adapted to execute a velocity calculation processing described below or the like according to various application programs read from the memory unit 12 by the control unit 11.
The control unit 11 is adapted to function as a GPS processing unit 21, a velocity calculation unit 22, an angle calculation unit 23, an altitude calculation unit 24, a position calculation unit 25, and a navigation unit 26 when executing the velocity calculation processing or the like.
In the PND 1, GPS signals from a plurality of GPS satellites received by a GPS antenna ANT are sent to a GPS processing unit 21 of the control unit 11.
The GPS processing unit 21 finds present position data NPD1 by accurately positioning the present position of the mobile object based on orbital data, which is obtained by demodulating a plurality of GPS signals, and distance data from the plurality of GPS satellites to the mobile object and sends it to the navigation unit 26.
The navigation unit 26 displays the map images by reading out the surrounding map data including the present position of the mobile object based on the present position data NPD1 from the memory unit 12 to create the map images including the present positions and then output the map images to the display unit 2.
Incidentally, the three-axis acceleration sensor 4 detects the acceleration $\alpha_x$, $\alpha_y$ and $\alpha_z$ at the sampling frequency of, for example, 50 [Hz] to send the acceleration data AD in which the acceleration $\alpha_z$ among the accelerations $\alpha_x$, $\alpha_y$ and $\alpha_z$ is displayed to the velocity calculation unit 22 of the control unit 11.
The Y axis gyro sensor 5 detects the pitch rate $\omega_y$, for example, at the sampling frequency of 50 [Hz] to send the pitch rate data PD in which the pitch rate $\omega_y$ is indicated to the velocity calculation unit 22 of the control unit 11.
The velocity calculation unit 22 calculates the velocity V to 50 times per second using the equation (1) based on the acceleration $\alpha_z$ which corresponds to the acceleration data AD supplied from the three-axis acceleration sensor 4 and the pitch rate $\omega_y$ which corresponds to the pitch rate data PD supplied from the Y axis gyro sensor 5, to send the velocity data VD in which the velocity V is indicated to the position calculation unit 25.
The Z axis gyro sensor 6 detects the yaw rate $\omega_z$, for example, at the sampling frequency of 50 [Hz] to send the yaw rate data YD in which the yaw rate $\omega_z$ is indicated to the angle calculation unit 23 of the control unit 11.
The angle calculation unit 23 calculates the angle $\theta$ at the time when the mobile object turns to the right or left by adding the sampling period (in this case, 0.02 [s]) to the yaw rate $\omega_z$, which corresponds to the yaw rate data YD supplied from the Z axis gyro sensor 6, to send the angle data DD in which the angle $\theta$ is displayed to the position calculation unit 25.
The position calculation unit 25 finds the change amount from the preceding position P0 to the present position P1 as shown in Fig. 3 based on the velocity V which corresponds to the velocity data VD supplied from the velocity calculation unit 22 and the angle $\theta$ which corresponds to the angle data DD supplied from the angle calculation unit 23. In addition, the position calculation unit 25 calculates the present position P1 by adding the change amount to the preceding position P0 to send the present position data NPD2 in which the present position P1 is displayed to the navigation unit 26.
On the other hand, an atmospheric pressure sensor 7 detects the peripheral atmospheric pressure PR, for example at the sampling frequency of 50 [Hz] to send the atmospheric pressure data PRD in which the atmospheric pressure PR is displayed to the altitude calculation unit 24.
The altitude calculation unit 24 calculates the altitude of the mobile object based on the atmospheric pressure PR corresponding to the atmospheric pressure data PRD supplied from the atmospheric pressure sensor 7 to send the altitude data in which the altitude data HD is displayed to the navigation unit 26.

The navigation unit 26 is adapted to display the map images by reading out the peripheral map data including the present positions of the mobile object from the memory unit 12 based on the present position data NPD2 supplied from the position calculation unit 25 and the altitude data HD supplied from the altitude calculation unit 24 to create the map images including the present positions and then outputting the map images to the display unit 2.

[1-3. Velocity Calculation Processing]

Next, the description will be specifically given to the velocity calculation processing in which the velocity V is calculated by the velocity calculation unit 22 based on the acceleration $\alpha_z$ corresponding to the acceleration data AD supplied from the three-axis acceleration sensor 4 and the pitch rate $\omega_y$ corresponding to the pitch rate data PD supplied from the Y axis gyro sensor 5.

As shown in Fig. 8, when the velocity calculation processing is performed, the velocity calculation unit 22 functions as a data acquisition unit 31, a high-pass filter unit 32, a low-pass filter unit 33, a velocity calculation unit 34, a planarization and noise removing unit 35 and a velocity output unit 36.

The data acquisition unit 31 of the velocity calculation unit 22 acquires the acceleration data AD supplied from the three-axis acceleration sensor 4 and the pitch rate data PD supplied from the Y axis gyro sensor 5 to send the acceleration data AD and the pitch rate data PD to the high-pass filter 32.

The high-pass filter unit 32 cuts direct current components of the acceleration data AD and the pitch rate data PD supplied from the data acquisition unit 31 to send the consequently obtained acceleration data AD1 and pitch rate data PD1 to the low-pass filter unit 33.

The low-pass filter unit 33 performs a low-pass filter processing described later with respect to the acceleration data AD1 and the pitch rate data PD1 supplied from the high-pass filter unit 32 to send the consequently obtained acceleration data AD2 and pitch rate data PD2 to the velocity calculation unit 34.

The velocity calculation unit 34 performs a velocity calculation processing described later with respect to the acceleration data AD2 and the pitch rate data PD2 supplied from the low-pass filter unit 33 to send the consequently obtained velocity data VD1 to the planarization and noise removing unit 35.

The planarization and noise removing unit 35 performs the planarization and noise removing processing with respect to the velocity data VD1 supplied from the velocity calculation unit 34 to send the consequently obtained velocity data VD to the velocity output unit 36.

The velocity output unit 36 sends the velocity data VD supplied from the planarization and noise removing unit 35 as data indicating the velocity V of the mobile object to the position calculation unit 25.

As described above, the velocity calculation unit 22 is adapted to calculate the velocity V of the mobile object on the basis of the acceleration data AD supplied from the three-axis acceleration sensor 4 and the pitch rate data PD supplied from the Y axis gyro sensor 5.

[1-3-1. Low-pass Filter Processing]

Next, the description will be specifically given to the low-pass filter processing which is performed with respect to the acceleration data AD1 and the pitch rate data PD1 supplied from the high-pass filter unit 32 by means of the low-pass filter unit 33.

Incidentally, the relationship of altitude H, which is based on the atmospheric pressure PR corresponding to the atmospheric data PRD acquired by the atmospheric pressure sensor 7, and angle $\varphi$ relative to the horizontal direction around the Y axis, which is based on the pitch rate $\omega_y$ corresponding to the pitch rate data PD acquired by the Y axis gyro sensor 5, is shown in Fig. 9. Herein, the angle $\varphi$ defines the upper direction in regard to the direction of travel (X axis) as positive.

When the altitude H suddenly drops from about 12001 data points (240 [s]) in Fig. 9, that is, when the mobile object goes down a downhill moving, as is apparent from the fact that the angle $\varphi$ also suddenly drops from about 0.5 [deg] to about -2.5 [deg], there is a correlation between the altitude H and the angle $\varphi$.

As described above, when the altitude H changes, the angle $\varphi$ also changes along with the change in altitude H, hence it is apparent that the PND 1 can detect the unevenness of the movings surface in the direction of travel of the mobile object by means of the Y axis gyro sensor 5.

Next, only the angle $\varphi$ in Fig. 9 is shown in Fig. 10A. Furthermore, Fig. 10B shows the angle $\varphi$ from 5001 data point to 6001 data point in Fig. 10A, and at this time, the mobile object runs at a low velocity of less than 20 [km] an hour. As is also apparent from Fig. 10B, the angle $\varphi$ vibrates once or twice a second.

Thus, in the PND 1 mounted on the mobile object, when the mobile object runs at a low velocity of less than 20 [km] an hour, the angle $\varphi$, which is based on the pitch rate $\omega_y$ corresponding to the pitch rate data PD demanded by the Y axis gyro sensor 5, is detected as the vibration of 1 to 2 [Hz].

In addition, similar to Fig. 10A, only the angle $\varphi$ in Fig. 9 is shown in Fig. 11A. In Fig. 11B, the angle $\varphi$ from

22001 data point of Fig. 11A to 23001 data point is shown, and at this time, the mobile object runs at a high velocity of equal to or more than 60 [km] an hour.

As a result, in the PND 1, when the mobile object runs at a high velocity of equal to or more than 60 [km] an hour, the angle φ, which is based on the pitch rate $\omega_y$ corresponding to the pitch rate data PD demanded by the Y axis gyro sensor 5, is detected as the vibration of 1 to 2 [Hz].

Furthermore, in the PND 1, as shown in Fig. 12, when the mobile object runs at an ultra low velocity of less than 10 [km] an hour, the angle φ, which is based on the pitch rate $\omega_y$ corresponding to the pitch rate data PD demanded by the Y axis gyro sensor 5, is also detected as the vibration of 1 to 2 [Hz].

Thus, in the PND 1, when the pitch rate $\omega_y$ is detected by the Y axis gyro sensor 5, the pitch rate $\omega_y$ is detected by the vibration of 1 to 2 [Hz] regardless of the running velocity of the mobile object.

Incidentally, the PND 1 is held by the cradle 3 which is attached on the dash board of the mobile object via the sucker 3A. As shown in Fig. 13, the cradle 3 is configured so that a main body portion 3B is provided on the upper part of the sucker 3A, and a PND supporting portion 3D is provided, one end of which is supported by a supporting point 3C provided at a prescribed height of the main body portion 3B to support the PND 1 by the other end.

Thus, when the mobile object vibrates according to the unevenness of the surface on which the mobile object moves, the PND 1 vibrates in the up and down direction around the supporting point 3C of the PND supporting portion 3D, for example, at the acceleration $\alpha_c$ and the angular velocity $\omega_c$.

Thus, in fact, the three-axis acceleration sensor 4 detects acceleration (hereinafter, referred to as "additional acceleration") $\alpha_{cz}$ in which the acceleration $\alpha_c$ is added due to the vibration around the supporting point 3C of the PND supporting portion 3D with respect to the acceleration $\alpha_z$ (Fig. 1) in the Z axis direction which is generated by the vibration of the mobile object according to the unevenness of the surface on which the mobile object moves.

In addition, the Y axis gyro sensor 5 detects angular velocity (hereinafter, referred to as "additional angular velocity") $\omega_{cy}$ in which the angular velocity $\omega_c$ is added due to the vibration around the supporting point 3C of the PND supporting portion 3D with respect to the pitch rate $\omega_y$ (Fig. 1) around the Y axis which is generated by the vibration of the mobile object according to the unevenness of the surface on which the mobile object moves.

Thus, the low-pass filter unit 33 acquires the acceleration data AD1 in which the additional acceleration $\alpha_{cz}$ is indicated, and the pitch rate data PD1 in which the additional angular velocity $\omega_{cy}$ is indicated, via the data acquisition unit 31 and the high-pass filter unit 32.

Herein, the additional acceleration $\alpha_{cz}$ corresponding to the acceleration data AD1 and the additional angular velocity $\omega_{cy}$ corresponding to the pitch rate data PD1 after the high-pass filter processing being performed by the high-pass filter unit 32 are shown in Fig. 14. Furthermore, Figs. 15A to 15H show graphs in which the additional angular velocity $\omega_{cy}$ shown in Fig. 14 is subjected to Fourier transform for each of 4096 data points.

Specifically, Fig. 15A is a graph that performs Fourier transform in regard to the additional angular velocity $\omega_{cy}$ up to 1 to 4096 data points in Fig. 14. As described above, Figs. 15B, 15C and 15D are graphs that perform Fourier transform in regard to the additional angular velocity $\omega_{cy}$ for up to 4097 to 8192 data points, 8193 to 12288 data points and 12289 to 16384 data points in Fig. 14.

Furthermore, Figs. 15E, 15F, 15G and 15H are graphs that perform Fourier transform in regard to the additional angular velocity $\omega_{cy}$ for up to 16385 to 20480 data points, 20481 to 24576 data points, 24577 to 28672 data points, and 28673 to 32768 data points in Fig. 14.

Among Figs. 15A to 15H, as remarkably indicated in Figs. 15C to 15H, a frequency component of 1 to 2 [Hz] and frequency component of about 15 [Hz] indicate large values.

That is, the PND 1 detects the pitch rate $\omega_y$, which vibrates at 1 to 2 [Hz] according to the unevenness of the surface on which the mobile object moves, the angular velocity $\omega_c$ which vibrates at about 15 [Hz] by the cradle 3 for holding the PND 1, and the synthesized additional angular velocity $\omega_{cy}$ by means of the Y axis gyro sensor 5.

On the other hand, Figs. 16A to 16H show graphs in which the additional acceleration $\alpha_{cz}$ shown in Fig. 14 is subjected to Fourier transform for each of the 4096 data points.

Specifically, Fig. 16A is a graph that performs Fourier transform in regard to the additional acceleration $\alpha_{cz}$ for up to 1 to 4096 data points in Fig. 14. As described above, Figs. 16B, 16C and 16D are graphs that perform Fourier transform in regard to the additional acceleration $\alpha_{cz}$ up to 4097 to 8192 data points, 8193 to 12288 data points and 12289 to 16384 data points in Fig. 14.

Furthermore, Figs. 16E, 16F, 16G and 16H are graphs that perform Fourier transform in regard to the additional acceleration $\alpha_{cz}$ for up to 16385 to 20480 data points, 20481 to 24576 data points, 24577 to 28672 data points, and 28673 to 32768 data points in Fig. 14.

Since the frequency component of 1 to 2 [Hz] and the frequency component of about 15 [Hz] are generated in the additional angular velocity $\omega_{cy}$ (Figs. 15C to 15H), it is expected that the frequency component of 1 to 2 [Hz] and the frequency component of about 15 [Hz] are also generated in the additional acceleration $\alpha_{cz}$.

That is, the PND 1 detects the additional acceleration $\alpha_{cz}$ in which the acceleration $\alpha_z$ generating at 1 to 2 [Hz] by the unevenness of the surface on which the mobile object moves as described above is synthesized with the accel-

eration $\alpha_c$ generating at about 15 [Hz] by the cradle 3 for holding the PND 1, by means of the three-axis acceleration sensor 4.

Thus, the low-pass filter unit 33 performs the low-pass filter processing in regard to the acceleration data AD1 and the pitch rate data PD1 supplied from the high-pass filter unit 32 to cancel the frequency component of about 15 [Hz], namely, the acceleration $\alpha_c$ and the angular velocity $\omega_c$ which are generated by the holding of the PND 1 on the cradle 3.

Herein, a graph in which the longitudinal axis of Fig. 16H is transformed to a logarithm axis is shown in Fig. 17A, and graphs, in which an IIR (Infinite Impulse Response) filter of cut off frequency 2 [Hz] is performed twice, four times and six times with respect to the additional acceleration $\alpha_{cz}$ up to 28673 to 32768 data points and then Fourier transform is performed, are indicated in Figs. 17B, 17C and 17D.

Additionally, a graph in which the longitudinal axis of Fig. 15H is transformed to a logarithm axis is shown in Fig. 18A, and graphs, in which, similar to the additional acceleration $\alpha_{cz}$, the IIR filter of cut-off frequency 2 [Hz] is performed twice, four times and six times with respect to the additional angular velocity $\omega_{cy}$ up to 28673 to 32768 data points and then Fourier transform is performed, are indicated in Figs. 18B, 18C and 18D.

As shown in Figs. 17B to 17D and 18B to 18D, in the PND 1, by performing the IIR filter of cut-off frequency 2 [Hz] four times or more with respect to the acceleration data AD1 and the pitch rate data PD1 supplied from the high-pass filter unit 32, the frequency component of about 15 [Hz] can be removed.

Thus, the low-pass filter unit 33 according to the present embodiment performs the IIR filter of cut-off frequency of 2 [Hz] four times with respect to the acceleration data AD1 and the pitch rate data PD1 supplied from the high-pass filter 32 to send the consequently obtained acceleration data AD2 and the pitch rate data PD2 to the velocity calculation unit 34.

Thus, the low-pass filter unit 33 can extract only the acceleration $\alpha_z$ generated by the unevenness of the surface on which the mobile object moves by removing the acceleration $\alpha_c$ due to the vibration around the supporting point 3C of the PND supporting portion 3B in the cradle 3 from the additional acceleration $\alpha_{cz}$.

Thus, the low-pass filter unit 33 can extract only the pitch rate $\omega_y$ generated by the unevenness of the surface on which the mobile object moves by removing the angular velocity $\omega_c$ due to the vibration around the supporting point 3C of the PND supporting portion 3B in the cradle 3 from the additional angular velocity $\omega_{cy}$.

[1-3-2. Velocity Calculation Processing]

Next, the description will be specifically given to the velocity calculation processing which calculates the velocity V by the velocity calculation unit 34 on the basis of the acceleration data AD2 and the pitch rate data PD2 supplied from the low-pass filter unit 33.

First of all, in a state in which the PND 1 is mounted on the dash board which is the front side of the mobile object and in the vicinity of the rear glass which is the rear side of the mobile object, when the mobile object runs at a low velocity of less than 20 [km] an hour, a middle velocity of less than 60 [km] an hour, and a high velocity of equal to or more than 60 [km] an hour, the acceleration $\alpha_z$ corresponding to the acceleration data AD2 of the front side and the rear side are shown in Figs. 19, 20A and 20B.

Herein, in Figs. 19, 20A and 20B, the acceleration $\alpha_z$ detected by the PND 1 mounted on the front side is referred to as a front acceleration, and the acceleration $\alpha_z$ detected by the PND 1 mounted on the rear side is referred to as a rear acceleration.

As is apparent from Figs. 19, 20A and 20B, it is evident that the phase of the rear acceleration is later than that of the front acceleration regardless of the running velocity of the mobile object. The phase delay is almost the same as the value in which a wheel base, which is a distance between the front wheel axis and the rear wheel axis of the mobile object, has been divided by the running velocity.

Next, Figs. 21A to 21C show an example of the simulation result which indicates the relationship of the acceleration $\alpha_z$ corresponding to the acceleration data AD2 and the pitch rate $\omega_y$ corresponding to the pitch rate data PD2 when the PND 1 is mounted on (corresponding to 30% of the dash board of the mobile object from the front wheel axis) the dash board of the mobile object, the middle and the rear wheel axis. Furthermore, Figs. 21D to 21F show the result in which the velocity V is calculated according to equation (1) based on the acceleration $\alpha_z$ and the pitch rate $\omega_y$ obtained from the simulation result shown by Figs. 21A to 21C.

Herein, in this simulation, it is assumed that a mobile object with wheel base of 2.5 [m] runs at a velocity of 5 [m/s] on a sinuate surface on which the mobile object moves at sine curve with amplitude of 0.1 [m] and wavelength of 20 [m].

As is apparent from Figs. 21A to 21C, the phase of the acceleration $\alpha_z$ is delayed as the mounting position of the PND 1 in the mobile object moves rearward. On the other hand, the pitch rate $\omega_y$ does not generate the deviation in phase regardless of the mounting position of the PND 1 in the mobile object.

Thus, as shown in Fig. 21B, when the PND 1 is mounted on the middle of the mobile object, there is little phase difference between the acceleration $\alpha_z$ and the pitch rate $\omega_y$. As a result, as shown in Fig. 21E, the velocity V calculated using the equation (1) is almost constant.

However, as shown in Figs. 21A and 21C, when the position where the PND 1 is mounted moves forward and backward with respect to the center of the mobile object, a phase difference between the acceleration $\alpha_z$ and the pitch rate $\omega_y$ increases. As a result, as shown in Figs. 21D and 21F, the velocity V calculated using the equation (1) increases in error due to the phase difference between the acceleration $\alpha_z$ and the pitch rate $\omega_y$ as compared to the velocity V of a case where the PND 1 is mounted on the center of the mobile object (Fig. 21E).

Particularly, at the time of low velocity in which the velocity V of the mobile object is less than 20 [km] an hour, the phase difference between the acceleration $\alpha_z$ and the pitch rate $\omega_y$ increases, so that the calculation error of the velocity V increases.

Thus, as shown in Fig. 22, the velocity calculation unit 34 extracts the maximum value and the minimum value as a maximum acceleration $\alpha_{z, max}$ and a minimum acceleration $\alpha_{z, min}$, from the range of 25 data points or 75 data points around the data point Pm corresponding to the previous position P0 (Fig. 3) of the acceleration $\alpha_z$ which is equivalent to the acceleration data AD2 supplied from the low-pass filter unit 33.

In addition, the velocity calculation unit 34 extracts the maximum value and the minimum value as a maximum pitch rate $\omega_{y, max}$ and a minimum pitch rate $\omega_{y, min}$, from the scope of 25 data points or 75 data points around the data point $P_m$ of the pitch rate $\omega_y$ which is equivalent to the pitch rate data PD2 supplied from the low-pass filter unit 33.

That is, the velocity calculation unit 34 extracts the maximum acceleration $\alpha_{z, max}$ and the minimum acceleration $\alpha_{z, min}$, and the maximum pitch rate $\omega_{y, max}$ and the minimum pitch rate $\omega_{y, min}$, from the scope wider than the deviation in phases which can be generated in the acceleration $\alpha_z$ and the pitch rate $\omega_y$.

In addition, by the following equation (3) which modifies the above-mentioned equation (1) using the maximum acceleration $\alpha_{z, max}$ and the minimum acceleration $\alpha_{z, min}$, extracted from the acceleration data AD2, and the maximum pitch rate $\omega_{y, max}$ and the minimum pitch rate $\omega_{y, min}$ extracted from the pitch rate data PD2, the velocity calculation unit 34 calculates the velocity V in the direction of travel at the previous position P0 (Fig. 3) to send the consequently obtained velocity data VD1 to the planarization and noise removing unit 35.

$$V = \{\alpha_{z, max} - \alpha_{z, min}\} / \{\omega_{y, max} - \omega_{y, min}\} \ldots \quad (3)$$

That is, even when the phase difference is generated in the acceleration $\alpha_z$ and the pitch rate $\omega_y$, the velocity calculation unit 34 can calculate the velocity V using the equation (3) without an influence of phase difference.

Incidentally, as shown in Fig. 23, when calculating the velocity V in the direction of travel at the previous position P0, if during acceleration, the velocity calculation unit 34 uses the scope of 25 data points when the velocity (hereinafter, referred to as a previous value velocity) $V_{n-1}$ of the position before last (not shown) is from 0 [km] an hour to 35 [km] an hour, and uses the scope of 75 data points when the previous value velocity $V_{n-1}$ exceeds 35 [km] an hour.

In addition, when calculating the velocity V in the direction of travel at the position before last PO, if during deceleration, the velocity calculation unit 34 uses the scope of 75 data points when the previous value velocity $V_{n-1}$ is from 35 [km] an hour to 25 [km] an hour and uses the scope of 25 data points when the previous value velocity $V_{n-1}$ is less than 25 [km] an hour.

Thus, when extracting the maximum acceleration $\alpha_{z, max}$ and the minimum acceleration $\alpha_{z, min}$, and the maximum pitch rate $\omega_{y, max}$ and the minimum pitch rate $\omega_{y, min}$, depending on the velocity V, the velocity calculation unit 34 changes the data scope to 25 data points or 75 data points.

At this time, since the acceleration $\alpha_z$ and the pitch rate $\omega_y$ rapidly change due to a delicate change in surface on which the mobile object moves when the velocity V of the mobile object is a low velocity of, for example, 25 [km] or less, the velocity calculation unit 34 narrowly sets the data scope so as to correspond to the rapid change.

In addition, since the influence of the suspension of the mobile object is great and the acceleration $\alpha_z$ and the pitch rate $\omega_y$ slowly change when the velocity V of the mobile object is 35 [km] an hour or more, the velocity calculation unit 34 sets the data scope widely so as to correspond to the slow change.

As described above, by changing the maximum acceleration $\alpha_{z, max}$, the minimum acceleration $\alpha_{z, min}$, the maximum pitch rate $\omega_{y, max}$, the minimum pitch rate $\omega_{y, min}$, and the data scope when extracting depending on the running velocity V of the mobile object, the velocity calculation unit 34 can reflect the situation of the surface on which the mobile object moves or the mobile object depending on the velocity V, which can improve the calculation accuracy of the velocity V.

Furthermore, when extracting the maximum acceleration $\alpha_{z, max}$, the minimum acceleration $\alpha_{z, min}$, the maximum pitch rate $\omega_{y, max}$, and the minimum pitch rate $\omega_{y, min}$, the velocity calculation unit 34 keeps a hysteresis property that changes the data scopes at the time of acceleration and deceleration.

As a result, the velocity calculation unit 34 does not frequently have to change the data scopes near the changing velocity of the data scope generated when the hysteresis property could not be kept in the data scope when calculating the velocity V. Consequently, the velocity calculation unit 34 can eliminate the calculation error of the velocity V generated due to the frequent change, and the calculation accuracy of the velocity V can be further improved, accordingly.

[1-3-3. Planarization and Noise Removing Processing]

Next, with respect to the velocity data VD1 calculated by the velocity calculation unit 34, the planarization and noise removing processing performed by the planarization and noise removing unit 35 will be specifically described.

First of all, the planarization and noise removing unit 35 is adapted to perform a low-pass filter processing of a first IIR in which the cut-off frequencies are variable with respect to the velocity data VD1 supplied from the velocity calculation unit 34.

Specifically, the planarization and noise removing unit 35 determines the cut-off frequency based on the previous value velocity $V_{n-1}$ when calculating the velocity V in the direction of travel in the previous position P0.

Herein, in the PND 1, when the running velocity of the mobile object is a high velocity of, for example, 60 [km] an hour or more, the noise is greatly included the velocity V calculated by the velocity calculation unit 34, whereby the difference in velocitys V increases. Thus, when the previous value velocity $V_{n-1}$ is equal to or more than 60 [km] an hour, the planarization and noise removing unit 35 uses the low-pass filter in which the small cut-off frequency is set up.

On the contrary, when the previous value velocity $V_{n-1}$ is less than 60 [km] an hour, the planarization and noise removing unit 35 uses the low-pass filter in which the large cut-off frequency is set up.

Incidentally, in a case where the velocity V calculated by the velocity calculation unit 34 is an ultra low velocity of, for example, 10 [km] an hour or less, the pitch rate $\omega_y$ which is the denominator value of equation (1) or (3) is small. As a result, it is thought that the velocity V calculated using the equation (1) or (3) becomes far larger than the real value.

Thus, the planarization and noise removing unit 35 acquires the acceleration data AD2 and the pitch rate data PD2 in which the low-pass filter processing is performed from the low-pass filter unit 33. When the pitch rate $\omega_y$ corresponding to the pitch rate data PD2 is less than a prescribed threshold value, the velocity V is judged to be excessive, whereby the velocity V after applying the low-pass filter processing is made to be zero.

On the other hand, as shown in Fig. 24A, in a case where a circular arc B1 of the unevenness of the surface on which the mobile object moves is larger than the wheel base W of the mobile object, the PND 1 can accurately calculate the velocity V using the basic principle as mentioned above.

However, as shown in Fig. 24B, for example, in a case where a circular arc B2 of the unevenness of the mobile object of the surface on which the mobile object moves is smaller than the wheel base W of the mobile object, when the front wheels of the mobile object cross the unevenness, the acceleration $\alpha_b$ of the vertical direction with respect to the mobile object and the angular velocity $\omega_b$ around the Y axis focused on the rear wheels of the mobile object are generated.

At this time, the PND 1 detects the acceleration $\alpha_b$ and the angular velocity $\omega_b$ (Fig. 24B) by means of the three-axis acceleration sensor 4 and the Y axis gyro sensor 5 without detecting the acceleration $\alpha_z$ and the pitch rate $\omega_y$ (Fig. 24A) which are generated by the vibration of 1 to 2 [Hz] depending on the unevenness of the surface on which the mobile object moves.

Herein, the acceleration $\alpha_b$ acquires the value larger than the acceleration $\alpha_z$ which is generated when the circular arc B1 of the unevenness of the surface on which the mobile object moves is larger than the wheel base W of the mobile object, and the angular velocity $\omega_b$ also acquires the value larger than the pitch rate $\omega_y$ which is generated when the circular arc B1 of the unevenness of the surface on which the mobile object moves is larger than the wheel base W of the mobile object.

In addition, it is assumed that the velocity (hereinafter, referred to as "small arc velocity") calculated by the use of equation (1) or (3) on the basis of the acceleration $\alpha_b$ and the angular velocity $\omega_b$, which are generated when the circular arc B2 of the unevenness of the surface on which the mobile object moves is smaller than the wheel base W of the mobile object, is the velocity $V_b$.

Since the above-mentioned the acceleration $\alpha_b$ changes more than the angular velocity $\omega_b$, the velocity $V_b$ acquires a far larger value than the velocity V which is calculated by the use of the equation (1) or (3) on the basis of the acceleration $\alpha_z$ and the pitch rate $\omega_y$ generated when the circular arc B1 of the unevenness of the surface on which the mobile object moves is larger than the wheel base W of the mobile object.

For this reason, when the circular arc B2 of the unevenness of the surface on which the mobile object moves is smaller than the wheel base W of the mobile object, the velocity calculation unit 11 of the PND 1 may calculate the velocity V as an excessive value by calculating the small arc velocity $V_b$ using the acceleration $\alpha_b$ and the angular velocity $\omega_b$.

Thus, the planarization and noise removing unit 35 acquires the acceleration data AD2 and the pitch rate data PD2 in which the low-pass filter processing is performed from the low-pass filter unit 33 to decide whether or not the acceleration $\alpha_z$ corresponding to the acceleration data AD2 and the pitch rate $\omega_y$ corresponding to the pitch rate data PD2 are larger than a prescribed threshold value.

In addition, when the acceleration $\alpha_z$ corresponding to the acceleration data AD2 and the pitch rate $\omega_y$ corresponding to the pitch rate data PD2 are larger than a prescribed threshold value, the planarization and noise removing unit 35 decides the velocity V to be excessive for using the previous value velocity $V_{n-1}$ but does not use the velocity V after performing the low-pass filter processing. That is, when the velocity V acquires the excessive value other than during the ultra low velocity, there is a high possibility that the velocity V is incorrect, so the planarization and noise removing unit 35 uses the previous value velocity $V_{n-1}$.

As described above, when the velocity V after performing the low-pass filter processing is the excessive value, the planarization and noise removing unit 35 can more accurately calculate the velocity V by making the velocity 0 at the time of ultra low velocity and making the previous value velocity $V_{n-1}$ the velocity V during times other than that.

[1-4. Position Calculation Processing Order Using Velocity Calculation Processing]

Next, the position calculation processing order in which the control unit 11 of the PND 1 calculates the present position using the velocity calculation processing as mentioned above will be described by the use of the flow chart of Fig. 25.

In fact, the control unit 11 enters from a start step of a routine RT1, moves to step SP1, acquires the acceleration data AD detected by the three-axis acceleration sensor 4 and the pitch rate data PD detected by the Y axis gyro sensor 5 by means of the data acquisition unit 31 of the velocity calculation processing unit 22, and then moves to the next step SP2.

In the step SP2, the control unit 11 performs the high-pass filter processing with respect to the acceleration data AD and the pitch rate data PD by means of the high-pass filter unit 32 of the velocity calculation unit 22 and moves to the next step SP3.

In the step SP3, the control unit 11 performs the low-pass filter processing, which is a fourth IIR filter of, for example, cut-off frequency 1 [Hz], by means of the low-pass filter unit 33 of the velocity calculation unit 22 with respect to the acceleration data AD1 and the pitch rate data PD1 in which the high-pass filter processing is performed, and moves to the next step SP4.

In the step SP4, the control unit 11 calculates the velocity V by the velocity calculation unit 34 of the velocity calculation unit 22 using the equation (3), on the basis of the acceleration $\alpha_z$ corresponding to the acceleration data AD2 and the pitch rate $\omega_y$ corresponding to the pitch rate data PD2 in which the low-pass filter processing is performed, and moves to the next step SP5.

In the step SP5, the control unit 11 performs the planarization and noise removing processing with respect to the velocity data VD in which the velocity V calculated in the step SP4 is indicated.

Specifically, the control unit 11 performs the low-pass filter processing with the variable cut-off frequency with respect to the velocity data VD1 in which the velocity V calculated in the step SP4 is indicated.

In addition, when the velocity V after performing the low-pass filter processing is judged to be the excessive value, the control unit 11 sets 0 to the velocity V at the time of an ultra low velocity of, for example, less than 10 [km] an hour and makes the previous value velocity $V_{n-1}$ the velocity V during times other than that, and moves the next step SP6.

In the step SP6, the control unit 11 acquires the yaw rate data YD detected by the Z axis gyro sensor 6 by means of the angle calculation unit 23 and moves to the next step SP7.

In the step SP7, the control unit 11 calculates the angel data DD using the angle calculation unit 23 in which the angle θ is indicated by adding 0.02 [sec] which is the sampling period to the yaw rate $\omega_z$ corresponding to the yaw rate data YD and moves to the next step SP8.

In the step SP8, the control unit 11 calculates the present position data NPD2 based on the velocity data VD in which the planarization and noise removing processing is performed in the step SP5 and the angle data DD calculated in the step SP8, and moves to the nest step SP9.

In the step SP9, the control unit 11 reads out the peripheral map data including the present position of the mobile object from the memory unit 12 based on the present position data NPD2 supplied from the position calculation unit 25, creates the map images including the present position, then outputs the map images to the display unit 2, and moves to the next step SP10 to finish the processing.

[1-5. Measurement Results]

The measurement results calculated by the above-mentioned velocity calculation processing are shown in Figs. 26 to 37. Furthermore, Figs. 26 to 35 shows the measurement results by the PND 1 mounted on the sedan type car, and Figs. 36 and 37 show the measurement results by the PND 1 mounted on a small car and a minivan type mobile object.

Fig. 26A shows the acceleration $\alpha_z$ and the pitch rate $\omega_y$ corresponding to the acceleration data AD and the pitch rate data PD detected by the three-axis acceleration sensor 4 and the Y axis gyro sensor 5, and Figs. 26B shows the velocity V which is calculated by the equation (3) using the acceleration $\alpha_z$ and the pitch rate $\omega_y$.

As is apparent from Figs. 26A and 26B, it is noted that in the PND 1, the acceleration $\alpha_z$ increases as the velocity of the mobile object V increases, while the pitch rate $\omega_y$ acquires an almost uniform value.

Next, Figs. 27 to 31 show graphs of the velocity V calculated by performing the velocity calculation processing by the PND 1 and the distance D calculated using the velocity V, and graphs of the velocity $V_{ref}$ calculated from the mobile object velocity pulse of the mobile object with the PND 1 mounted thereon and the distance $D_{ref}$ using the velocity $V_{ref}$ so as to compare the velocity V with the distance D. In addition, Figs. 27 to 31 show graphs of cases where the mobile object with the PND 1 mounted thereon has run on the different movings.

In addition, herein, the velocity calculated from the velocity pulse is also referred to as a reference velocity, and the distance using the reference velocity is also referred to as a reference distance.

Fig. 27A shows the velocity V calculated using the velocity calculation processing of the present invention and the distance D calculated using the velocity V, and Fig. 27B shows the reference velocity $V_{ref}$ and the reference distance $D_{ref}$ to compare with the velocity V and the distance D shown in Fig. 27A.

As shown in Figs. 27A and 27B, the velocity V has vary similar relationship with the reference velocity $V_{ref}$, so that the distance D calculated based on the velocity V has only an error of less than 10% with respect to the reference distance $D_{ref}$.

In addition, Fig. 28A shows the velocity V calculated using the velocity calculation processing of the present invention and the distance D calculated using the velocity V, and Fig. 28B shows the reference velocity $V_{ref}$ and the reference distance $D_{ref}$ to compare with the velocity V and the distance D shown in Fig. 28A.

Furthermore, Fig. 29A shows the velocity V calculated using the velocity calculation processing of the present invention and the distance D calculated using the velocity V, and Fig. 29B shows the reference velocity $V_{ref}$ and the reference distance $D_{ref}$ to compare with the velocity V and the distance D shown in Fig. 29A.

Additionally, Fig. 30A shows the velocity V calculated using the velocity calculation processing of the present invention and the distance D calculated using the velocity V, and Fig. 30B shows the reference velocity $V_{ref}$ and the reference distance $D_{ref}$ to compare with the velocity V and the distance D shown in Fig. 30A.

In addition, Fig. 31A shows the velocity V calculated using the velocity calculation processing of the present invention and the distance D calculated using the velocity V, and Fig. 31B shows the reference velocity $V_{ref}$ and the reference distance $D_{ref}$ to compare with the velocity V and the distance D shown in Fig. 31A.

Even when the mobile object runs on a different moving, the velocitys V shown in Figs. 27A to 31A has a very similar relationship with the reference velocity $V_{ref}$ shown in Figs. 27B to 31B in the same manner as the velocity V shown in Fig. 26A, so that the distance D calculated based on the velocity V has only an error of less than 10% with respect to the reference distance $D_{ref}$.

Next, Fig. 32A shows a graph of the velocity V and the distance D calculated using the velocity calculation processing by the PND 1, and Fig. 32B shows a graph of the reference velocity $V_{ref}$ and the reference distance $D_{ref}$ calculated from the reference velocity $V_{ref}$. Furthermore, Fig. 32C shows a graph of the yaw rate $\omega_z$ detected by the Z axis gyro sensor 6 of the PND 1.

Herein, the yaw rate $\omega_z$ shown in Fig. 32C indicates that when the value exceeds about 20 [deg/s], the mobile object turns right, and when the value is below about -20 [deg/s], the mobile object turns left.

Thus, as shown in Fig. 32C, even when the right turn and the left turn are continuously repeated several times, the velocity V (Fig. 32A) calculated by the PND 1 has a very similar relationship with the reference velocity $V_{ref}$ (Fig. 32B), so that the distance D calculated based on the velocity V also has only an error of less than 10% with respect to the reference distance $D_{ref}$.

Furthermore, Fig. 33A shows a graph of the velocity V and the distance D which is calculated using the velocity calculation processing by the PND 1 when running on the moving different from Fig. 32A, and Fig. 33B shows a graph of the reference velocity $V_{ref}$ and the reference distance $D_{ref}$ calculated from the reference velocity $V_{ref}$. Furthermore, Fig. 33C shows a graph of the yaw rate $\omega_z$ detected by the Z axis gyro sensor 6.

In addition, Fig. 34A shows a graph of the velocity V and the distance D which is calculated using the velocity calculation processing by the PND 1 when running on the moving different from Fig. 32A and 33A, and Fig. 34B shows a graph of the reference velocity $V_{ref}$ and the reference distance $D_{ref}$ calculated from the reference velocity $V_{ref}$. Furthermore, Fig. 34C shows a graph of the yaw rate $\omega_z$ detected by the Z axis gyro sensor 6.

From these results, even when the mobile object runs on a plurality of curves, it is evident that velocity V calculated by the PND 1 has a very similar relationship with the reference velocity $V_{ref}$, so that the distance D calculated based on the velocity V also has only an error of less than 10% with respect to the reference distance $D_{ref}$.

Next, Fig. 35B shows a running trace T which plots the present position calculated by the PND 1 mounted on the mobile object when the mobile object has run from the start S of the map shown in Fig, 35A along a path K to a goal G.

As described above, the running trace T (Fig. 35B) has about the same size as a path K(Fig. 35A) through which the mobile object has run and is a similar relationship therewith. Thus, PND 1 can almost accurately calculate the present position.

Next, Fig. 36 shows the velocity V and the distance D calculated by the PND 1 mounted on the light mobile object, a velocity $V_g$ calculated based on the GPS signals received via the GPS antenna ANT, and a distance $D_g$ calculated from the velocity $V_g$ to compare the velocity V and the distance D, in an overlapped manner.

In addition, the velocity, which is calculated based on the GPS signal received via the GPS antenna ANT, is referred to as the GPS velocity, and the distance calculated from the GPS velocity is referred to as a GPS distance.

Furthermore, Fig. 37 shows the velocity V and the distance D calculated by the PND 1 mounted on the minivan type mobile object, the GPS velocity $V_g$ calculated based on the GPS signals and the GPS distance $D_g$ calculated from the GPS velocity $V_g$ to compare the velocity V and the distance D, in an overlapped manner.

As shown in Figs. 36 and 37, in a plurality of mobile objects with different sizes, i.e., different wheel bases, the velocity V calculated by the PND 1 in an embodiment of the present invention has a very similar relationship with the GPS velocity $V_g$, so that the distance D calculated based on the velocity V also has only an error of less than 10% with respect to the GPS distance $D_g$.

In addition, in Figs. 36 and 37, when the mobile object, for example, enters the tunnel, so that it is difficult to receive the GPS signals, the GPS velocity $V_g$ is calculated as 0.

[1-6. Operation and Effects]

In the above-mentioned configurations, the PND 1 detects the acceleration $\alpha_z$ in the Z axis direction perpendicular to the direction of travel of mobile object, which is generated by the unevenness of the surface on which the mobile object moves, by means of the three-axis acceleration sensor 4 and detects the pitch rate $\omega_y$ around the Y axis perpendicular to the direction of travel generated by the unevenness of the surface on which the mobile object moves by means of the Y axis gyro sensor 5.

In addition, the PND 1 calculates the velocity V according to equation (1) or (3) based on the acceleration $\alpha_z$ detected by the three-axis acceleration sensor 4 and the pitch rate $\omega_y$ detected by the Y axis gyro sensor 5.

Thus, even when the GPS signals are difficult to be received, the PND 1 can accurately calculate the velocity V of the mobile object under the whole moving environment by means of the simple configuration which uses only the three-axis acceleration sensor 4 and the Y axis gyro sensor 5.

Furthermore, since the PND 1 does not necessitate a complex operation in which a cable for transmitting the velocity pulse signal from the mobile object is intentionally connected to a user, the usage can be improved.

In addition, the PND 1 detects the yaw rate $\omega_z$ around the Z axis perpendicular to the direction of travel of mobile object by means of the Z axis gyro sensor 6 to calculate the present position based on the velocity V and the yaw rate $\omega_z$.

As a result, even when the GPS signals are difficult to be received, the PND 1 can accurately calculate the present position of the mobile object under the whole moving environment by means of the simple configuration which provides only the three-axis acceleration sensor 4, the Y axis gyro sensor 5, and the Z axis gyro sensor 6.

Furthermore, when calculating the velocity V, the PND 1 performs the low-pass filter processing with respect to the acceleration data AD1 and the pitch rate data PD1. Thus, the PND 1 can remove the components of the acceleration $\alpha_c$ and the angular velocity $\omega_c$ vibrating, for example, at about 15 [Hz] generated by the cradle 3 which is large frequency enough with respect to the acceleration $\alpha_z$ and the pitch rate $\omega_y$ vibrating at 1 to 2 [Hz] generated by the unevenness of the surface on which the mobile object moves.

As a result, the PND 1 can more accurately calculate the velocity V using the acceleration $\alpha_z$ and the pitch rate $\omega_y$ in which the vibration components generated by the cradle 3 are removed.

Furthermore, the PND 1 extracts the maximum acceleration $\alpha_{z,\ max}$ and the minimum acceleration $\alpha_{z,\ min}$ from the scope of 25 data points or 75 data points centered on the data point $P_m$ of the acceleration $\alpha_z$ and extracts the maximum pitch rate $\omega_{y,\ max}$ and the minimum pitch rate $\omega_{y,\ min}$ from the scope of 25 data points or 75 data points centered on the data point $P_m$ of the pitch rate $\omega_y$.

In addition, the PND 1 calculates the velocity V by the equation (3) using the maximum acceleration $\alpha_{z,\ max}$, the minimum acceleration $\alpha_{z,\ min}$, the maximum pitch rate $\omega_{y,\ max}$ and the minimum pitch rate $\omega_{y,\ min}$.

As a result, the PND 1 uses the data points of the scope which is wider than the phase difference of the acceleration $\alpha_z$ and the pitch rate $\omega_y$ changed depending on the mounting position of the PND 1 in the mobile object, which can remove the influence of the phase difference of the above-mentioned acceleration $\alpha_z$ and the pitch rate $\omega_y$.

Furthermore, when the velocity V calculated by the equation (3) based on the acceleration $\alpha_z$ and the pitch rate $\omega_y$ is a large value, the PND 1 can further accurately calculate the velocity V by making the velocity V 0 at the time of ultra low velocity and making the velocity V the previous value velocity $V_{n-1}$ during times other than that.

With the above-mentioned configurations, the PND 1 according to the first embodiment can accurately calculate the velocity V under the whole environment, by detecting the acceleration $\alpha_z$ in the direction of Z axis generated by the unevenness of the surface on which the mobile object moves and the pitch rate $\omega_y$ around the Y axis generated by the unevenness of the surface on which the mobile object moves to calculate the velocity V using the acceleration $\alpha_z$ and

the pitch rate $M_y$.

<2. Second Embodiment>

A PND 50 (Figs. 4 to 7) of the second embodiment is different from the PND 1 of the first embodiment in that it has a velocity calculation unit 52 instead of the velocity calculation unit 22, but other portions have the same configuration as the first embodiment.

[2-1. Velocity Calculation processing]

As shown in Fig. 38 where the corresponding portions to Fig. 8 are denoted by the same reference numerals, the velocity calculation unit 52 has a high-pass filter unit 62 and a low-pass filter unit 63 provided thereon, instead of the high-pass filter unit 32 and the low-pass filter unit 33. Furthermore, a cut-off frequency setting unit 67 is provided on the velocity calculation unit 52, but other portions have the same configurations as the velocity calculation unit 22.

The high-pass filter unit 62 is adapted so that the cut-off frequency (hereinafter, referred to as "a high-pass cut-off frequency FH) fixed in the high-pass filter unit 32 is set up so as to be changed to various values by the cut-off frequency setting unit 67.

Furthermore, the low-pass filter unit 63 is adapted so that the cut-off frequency (hereinafter, referred to as "a low-pass cut-off frequency FL) fixed in the low-pass filter unit 33 is set up so as to be changed to various values by the cut-off frequency setting unit 67.

As shown in Figs. 39A and 39B, the cut-off frequency setting unit 67 stores tables TBL1 and TBL2 in which the high-pass cut-off frequency FH and the low-pass cut-off frequency FL are respectively registered.

In the table TBL1, the velocity V of the mobile object is divided into four velocity regions, i.e., a first velocity region, a second velocity region, a third velocity region and a fourth velocity region, and the different high-pass cut-off frequencies FH are correspondingly added to each velocity region.

Furthermore, the table TBL2 is similarly divided into first to fourth velocity regions in regard to the velocity V of the mobile object and the different low-pass cut-off frequencies FL are correspondingly added to each velocity region.

Furthermore, in the tables TBL1 and TBL2, the scope of the velocity V in the first velocity region, the second velocity region, the third velocity region and the fourth velocity region are different from each other at the time of acceleration and deceleration.

Specifically, the respective velocitys V of the first velocity region, the second velocity region, the third velocity region and the fourth velocity region are 0-25, 25-45, 45-65 and 65-[km/h] at the time of acceleration and are 0-20, 20-40m 40-60 and 60-[km/h], respectively at the time of deceleration.

As a result, the tables TBL1 and TBL2 have the hysteresis property in regard to the velocity V in the same manner as the case of the data scope in the velocity calculation unit 34.

Furthermore, the cut-off frequency setting unit 67 stores in its memory the previous value velocity $V_{n-1}$ which is the velocity V before last and can decide whether during acceleration or during deceleration by comparing the previous value velocity $V_{n-1}$ with the velocity V before last.

In fact, when acquiring the velocity V immediately before from the planarization and noise removing unit 35, the cut-off frequency setting unit 67 compares the previous value velocity $V_{n-1}$ with the velocity V before last to decide whether during acceleration or during deceleration.

Next, the cut-off frequency setting unit 67 reads out the high-pass cut-off frequency FH and the low-pass cut-off frequency FL of the velocity regions depending on the decision result (i.e., one of during acceleration and during deceleration) and the velocity V from the tables TBL1 and TBL2 to supply the high-pass filter unit 62 and the low-pass filter unit 63 with the same.

The high-pass filter unit 62 sets the high-pass cut-off frequency FH supplied from the cut-off frequency setting unit 67 as the cut-off frequency. Next, similar to the high-pass filter unit 32 (Fig. 8), the high-pass filter unit 62 cuts the direct current components of the acceleration data AD and the pitch rate data PD and creates the acceleration data AD1 and the pitch rate data PD1 to send the same to the low-pass filter unit 63.

The low-pass filter unit 63 sets the low-pass cut-off frequency FL supplied from the cut-off frequency setting unit 67 as the cut-off frequency. Next, similar to the low-pass filter unit 33 (Fig. 8), the low-pass filter unit 63 cuts the high frequency components of the acceleration data AD1 and the pitch rate data PD1 and creates the acceleration data AD2 and the pitch rate data PD2 to send the same to the velocity calculation unit 34.

As a result, in the acceleration data AD2 and the pitch rate data PD2, only the frequency component, which is pinched between the high-pass cut-off frequency FH and the low-pass cut-off frequency FL depending on the velocity V immediately before, is extracted.

As described above, the velocity calculation unit 52 according to the second embodiment changes the frequency band component extracted as the acceleration data AD2 and the pitch rate data PD2 by setting the high-pass cut-off frequency FH and the low-pass cut-off frequency to be changed FL depending on the velocity V immediately before.

[2-2. Measurement Result]

Next, regarding both a case where each cut-off frequency is fixed by the velocity calculation unit 22 according to the first embodiment to created the velocity data VD and a case where each cut-off frequency is changed by the velocity calculation unit 52 according to the second embodiment, while creating the velocity data VD, the measurement test of the velocity V and the distance D was performed. The measurement results at this time are respectively shown in Figs. 40 and 41.

In addition, unlike the case shown in Figs. 26 to 37, the measurement test intentionally made the attachment state of the cradle 3 to the mobile object incomplete and performed in a state in which the error is easily generated.

Fig. 40 shows the velocity V and the distance D calculated by the velocity calculation unit 22 in which each cut-off frequency is fixed, and the GPS velocity $V_g$ calculated based on the GPS signal and the GPS distance $D_g$ calculated from the GPS velocity $V_g$ to compare the velocity V with distance D in an overlapped manner.

Furthermore, Fig. 41 shows the velocity V and the distance D calculated by the velocity calculation unit 52 in which each cut-off frequency is changed depending on the velocity V, and the GPS velocity $V_g$ calculated based on the GPS signal and the GPS distance $D_g$ calculated from the GPS velocity $V_g$ to compare the velocity V with distance D in an overlapped manner.

From Figs. 40 and 41, it is evident that the error of the velocity V and the GPS velocity $V_g$ and the error of the distance D and the GPS distance $D_g$ are both reduced by changing each cut-off frequency depending on the velocity V, as compared to a case where each cut-off frequency is fixed.

[2-3. Operation and Effects]

In the above-mentioned configurations, similar to the first embodiment, the PND 50 according to the second embodiment detects the acceleration $\alpha_z$ in the Z axis direction perpendicular to the direction of travel of mobile object, which is generated by the unevenness of the surface on which the mobile object moves, by means of the three-axis acceleration sensor 4 and detects the pitch rate $\omega_y$ around the Y axis perpendicular to the direction of travel generated by the unevenness of the surface on which the mobile object moves by means of the Y axis gyro sensor 5.

In addition, the PND 50 calculates the velocity V according to equation (1) or (3) based on the acceleration $\alpha_z$ detected by the three-axis acceleration sensor 4 and the pitch rate $\omega_y$ detected by the Y axis gyro sensor 5.

Thus, similar to the first embodiment, even when the GPS signals are difficult to be received, the PND 50 can accurately calculate the velocity V of the mobile object under the whole moving environment by means of the simple configuration which uses only the three-axis acceleration sensor 4 and the Y axis gyro sensor 5.

In addition, the velocity calculation unit 52 changes the frequency band component extracted as the acceleration data AD2 and the pitch rate data PD2 by setting the high-pass cut-off frequency FH and the low-pass cut-off frequency to be changed FL depending on the velocity V immediately before.

As a result, the PND 50 can reduce the errors included in the velocity V and the distance D, which can remarkably improve the calculation accuracy of the present position, as compared to the first embodiment in which each cut-off frequency is fixed.

With the above-mentioned configuration, similar to the first embodiment, the PND 50 according to the second embodiment can accurately calculate the velocity V under the whole environment, by detecting the acceleration $\alpha_z$ in the direction of Z axis generated by the unevenness of the surface on which the mobile object moves and the pitch rate $\omega_y$ around the Y axis to calculate the velocity V while changing each cut-off frequency depending on the measurement using the acceleration $\alpha_z$ and the pitch rate $\omega_y$.

<3. Another Embodiment>

Furthermore, in the above-mentioned embodiment, when calculating the velocity V, the V was calculated using the equation (3) on the basis of the maximum acceleration $\alpha_{z,\ max}$ and the minimum acceleration $\alpha_{z,\ min}$, extracted from the acceleration $\alpha_z$ which is equivalent to the acceleration data AD2, and the maximum pitch rate $\omega_{y,\ max}$ and the minimum pitch rate $\omega_{y,\ min}$, extracted from the pitch rate $\omega_y$ which is equivalent to the angular velocity data DD2.

However, the present invention is not limited thereto, the velocity calculation unit 34 is necessary to have the division of 25 data point or 75 data point around the data point $P_m$ corresponding to, for example, the previous position P0 of the acceleration $\alpha_z$ equivalent to the acceleration data AD2 supplied from the low-pass filter unit 33 and the pitch rate $\omega_y$ equivalent to the pitch rate data PD2. In addition, the velocity calculation unit 34 may calculate the velocity V by dividing the dispersion of the acceleration $\alpha_z$ by dividing the dispersion of the acceleration $\alpha_z$ by the dispersion of the pitch rate $\omega_y$.

Otherwise, the velocity calculation unit 34 demands the deviation of the scope of 25 data point or 75 data point around the data point $P_m$ corresponding to the previous position P0 of the acceleration $\alpha_z$ equivalent to the acceleration data AD2 supplied from the low-pass filter unit 33 and the pitch rate $\omega_y$ equivalent to the pitch rate data PD2. In addition, the velocity calculation unit 34 may calculate the velocity V by dividing the deviation of the acceleration $\alpha_z$ by the deviation of the pitch rate $\omega_y$.

Furthermore, in the above-mentioned embodiment, the description has been given to the case where the acceleration $\alpha_x$, $\alpha_y$ $\alpha_z$, the pitch rate $\omega_y$, and the yaw rate $\omega_z$ at the sampling frequency of 50 [Hz] are measured by means of the three-axis acceleration sensor 4, Y axis gyro sensor 5 and the Z axis gyro sensor 6. However, the present invention is not limited thereto, but the three-axis acceleration sensor 4, Y axis gyro sensor 5 and the Z axis gyro sensor 6 may detect the accelerations $\alpha_x$, $\alpha_y$ and $\alpha_z$, the angular velocity $\omega_y$, and the angular velocity $\omega_z$ by a prescribed sampling frequency of, for example, 10 [Hz] or the like other than 50 [Hz].

Furthermore, in the above-mentioned embodiment, the description has been given to the case where the velocity V is calculated using the acceleration $\alpha_z$ and the pitch rate $\omega_y$ detected at the sampling frequency of 50 [Hz]. However, the present invention is not limited thereto, but the velocity calculation unit 22 of the PND 1 may acquire the average value, for example, for each 25 data points of the acceleration $\alpha_z$ and the pitch rate $\omega_y$ detected at the sampling frequency of 50 [Hz] to calculate the velocity V using the average value of the acceleration $\alpha_z$ and the pitch rate $\omega_y$.

In this case, the velocity calculation unit 22 of the PND 1 calculates the velocity V only twice per one second by acquiring the average value, for example, for each 25 data points of the acceleration $\alpha_z$ and the pitch rate $\omega_y$ detected at the sampling frequency of 50 [Hz]. As a result, the control unit 11 of the PND 1 can reduce the processing load in regard to the velocity calculation processing.

Furthermore, in the above-mentioned embodiment, the description has been given of the case where the high-pass filter processing is performed with respect to the acceleration data AD and the pitch rate data PD detected by the three-axis acceleration sensor 4 and the Y axis gyro sensor 5 by means of the high-pass filter unit 22. However, the present invention is not limited thereto, but the PND 1 may not perform the high-pass filter processing with respect to the acceleration data AD and the pitch rate data PD detected by the three-axis acceleration sensor 4 and the Y axis gyro sensor 5.

In addition, in the above-mentioned embodiment, the description has been given of the case where the high-pass filter processing and the low-pass filter processing are performed with respect to the acceleration data AD and the pitch rate data PD detected by the three-axis acceleration sensor 4 and the Y axis gyro sensor 5 by means of the high-pass filter unit 22 and the low-pass filter unit 23. However, the present invention is not limited thereto, but the PND 1 may perform a movement average filter processing, in addition to the high-pass filter processing and the low-pass filter processing, with respect to the acceleration data AD and the pitch rate data PD. Furthermore, the PND 1 may perform an arbitrary combination of the high-pass filter processing, the low-pass filter processing, and the movement average filter processing with respect to the acceleration data AD and the pitch rate data PD.

Furthermore, in the above-mentioned embodiment, the description has been given of the case where when, for example, the velocity V of the previous position P0 is calculated using the acceleration $\alpha_z$ and the pitch rate $\omega_y$, in a case where the velocity V of the previous position P0 is decided to be excessive, the previous value velocity $V_{n-1}$ is made to be the velocity V of the previous position P0. However, the present invention is not limited thereto, but when the velocity V of the previous position P0 is equal to or larger than the previous value velocity $V_{n-1}$ by a prescribed threshold value, the velocity calculation unit 22 of the PND 1 may make the velocity V of the previous position P0 a velocity that adds a value, which can accelerate the mobile object, to the previous value velocity $V_{n-1}$.

Furthermore, when the velocity V of the previous position P0 is less than the previous value velocity $V_{n-1}$ by the prescribed threshold value, the velocity calculation unit 22 of the PND 1 may make the velocity V of the previous position P0 value by subtracting the value by which the mobile object can reduce its velocity from the previous value velocity $V_{n-1}$.

Furthermore, in the above-mentioned embodiment, the description has been given to the case where the velocity V is calculated using the equation (3) on the basis of the acceleration $\alpha_z$ and the pitch rate $\omega_y$.

However, the present invention is not limited thereto, but control unit 11 of the PND 1 compares the velocity V calculated using the equation (3) using the acceleration $\alpha_z$ and the pitch rate $\omega_y$ with the GPS velocity $V_g$ calculated based on the GPS signal.

In addition, when errors are generated in the velocity V and the GPS velocity $V_g$, the control unit 11 of the PND 1 calculates the correction coefficient for correcting by a linear function or a high level function such as a quadratic function so that error regarding the velocity V is minimized and stores the correction coefficient in the memory unit 12.

Thus, the velocity calculation unit 22 of the PND 1 calculates the velocity V using the equation (3) on the basis of the acceleration $\alpha_z$ and the pitch rate $\omega_y$ detected by the three-axis acceleration sensor 4 and the Y axis gyro sensor 5, and then reads out the interpolation coefficient from the memory unit 12 to correct the velocity V using the interpolation coefficient by means of a linear function or a high level function such as a quadratic function.

As described above, the PND 1 can further improve the calculation accuracy of the velocity V by learning the correction coefficient of the velocity V based on the GPS $V_g$ calculated based on the GPS signal in advance.

In addition, when calculating the correction coefficient of the velocity V and the GPS velocity $V_g$, the control unit 11 of the PND 1 divides the velocity V1 into a plurality of velocity regions, e.g., ultra low velocity, middle velocity, and high velocity to calculate the correction coefficient for each of plurality of velocity regions.

In addition, when calculating the correction coefficient of the velocity V and the GPS velocity $V_g$, the control unit 11 of the PND 1 may calculate the correction coefficient only at a prescribed velocity, e.g., the high velocity of 60 [km] an hour or more.

Furthermore, in the above-mentioned second embodiment, the description has been given of the case where the velocity regions are divided into four stages in the tables TBL1 and TBL2. However, the present invention is not limited thereto, but the number of stages may be an arbitrary number of two stages or more. Moreover, the numbers of stages of the velocity regions of the high-pass cut-off frequency FH and the low-pass cut-off frequency FL do not have to be necessarily identical to each other, but the numbers of the stages may be different from each other for both.

Furthermore, in the second embodiment mentioned above, the description has been given of the case where the hysteresis property is kept regarding the change of the respective cut-off frequencies by making the velocity of each velocity region in the tables TBL1 and TBL2 different from each other during acceleration and during deceleration. However, the present invention is not limited thereto, but the hysteresis property may not kept by matching the velocitys of each velocity region during acceleration and during deceleration.

In addition, in the second embodiment mentioned above, the description has been given of the case where the cut-off frequency setting unit 67 switches the respective cut-off frequencies for each velocity region in a step manner along the tables TBL1 and TBL2. However, the present invention is not limited thereto, but the high-pass cut-off frequency FH and the low-pass cut-off frequency FL may be calculated by the function with variation of velocity V, for example, as in equations (4) and (5) indicated below.

$$FH = 0.005 \times V + 0.65 \quad \ldots \quad (4)$$

$$FL = 0.01 \times V + 1.3 \quad \ldots \quad (5)$$

In addition, in this case, the form of the function is not limited to the linear function, but may be various forms such as the function of the quadratic function or an exponential function, and may arbitrarily define the respective cut-off frequencies according to the velocity V.

In addition, in the above-mentioned embodiments, the description has been given to the case where the navigation is performed according to the present position calculation processing order while the PND 1 receives the supply of the power source. However, the present invention is not limited thereto, but when a power button (not shown) is off due to the pressing operation of a user, the PND 1 stores the present position, the altitude or the like at the time when the power button is pressed down in the memory unit 12. In addition, when the power button is on due to the pressing operation of the user, the PND 1 may read out the present position, altitude or the like from the memory unit 12 to perform the navigation according to the present position calculation processing order from the present position, altitude or the like.

Furthermore, in the above-mentioned embodiments, the description has been given to the case where the PND 1 calculates the velocity V in a state of being held by the cradle 3 mounted on the dash board of the mobile object. However, the present invention is not limited thereto, but when it is recognized that the PND 1 is mechanically or electrically separated from the cradle 3, the velocity V may be 0 or the previous value velocity $V_{n-1}$ may be kept.

In addition, in the above-mentioned embodiments, the description has been given of the case where the PND 1 is used in a state of transversely disposed in the left and right direction. However, the present invention is not limited thereto, but, as shown in Fig. 42, the PND 1 may be used in a state of being longitudinally disposed in the longitudinal direction. In this case, the PND 1 may detect the yaw rate $\omega_z$ around the Z axis rotation by the Y axis gyro sensor 5 and detect the pitch rate $\omega_y$ around the Y axis by the Z axis gyro sensor 6.

Furthermore, in the above-mentioned embodiments, the description has been given of the case where the three-axis acceleration sensor 4, the Y axis gyro sensor 5, the Z axis gyro sensor 6 and the atmospheric pressure sensor 7 are provided inside the PND 1. However, the present invention is not limited thereto, but the three-axis acceleration sensor 4, the Y axis gyro sensor 5, the Z axis gyro sensor 6 and the atmospheric pressure sensor 7 may be provided outside the PND 1.

Moreover, the PND 1 may provide an adjusting mechanism, which can regulate the attachment angles of the three-axis acceleration sensor 4, the Y axis gyro sensor 5, the Z axis gyro sensor 6 and the atmospheric pressure sensor 7 are provided inside the PND 1, for example, at the side of the PND 1.

As a result, even when the display unit 2 is not installed so as to be almost perpendicular to the direction of travel of the mobile object, the PND 1 can make, for example, the rotation axis of the Y axis gyro sensor 5 parallel to the vertical direction of the mobile object by allowing the user to adjust the adjusting mechanism.

Furthermore, in the above-mentioned embodiments, it has been decided that the velocity V is excessive when the pitch rate $\omega_y$ equivalent to the pitch rate data PD2 is less than the prescribed threshold value and when the acceleration $\alpha_z$ equivalent to the acceleration data AD2 and the pitch rate $\omega_y$ equivalent to the pitch rate data PD2 are larger than the prescribed threshold value. However, the present invention is not limited thereto, but the control unit 11 may decide that the velocity V is excessive when the velocity V calculated by the velocity calculation unit 34 acquires a value larger than the previous value velocity $V_{n-1}$ by more than a prescribed velocity.

In this case, when acquiring the velocity V calculated by the velocity calculation unit 34 that has acquired a value larger than the previous value velocity $V_{n-1}$ by more than the prescribed velocity and when the previous value velocity is, for example, an ultra low velocity of less than 10 [km] an hour, the planarization and noise removing unit 35 makes the velocity V 0. Furthermore, when acquiring the velocity V calculated by the velocity calculation unit 34 acquires the larger value of more than the prescribed velocity than the previous value velocity $V_{n-1}$ and when the previous value velocity is, for example, an ultra low velocity of equal to or more than 10 [km] an hour, the planarization and noise removing unit 35 may make the previous value velocity $V_{n-1}$ velocity V.

Furthermore, in the above-mentioned embodiments, the description has been given to the case where the control unit 11 of the PND 1 performs the present position calculation processing order of the above-mentioned routine RT1 according to the application program housed in the memory unit 12 in advance. However, the present invention is not limited thereto, but the control unit 11 of the PND 1 may perform the above-mentioned present position calculation processing order according to the application program installed from the recording medium, the application program downloaded from the internet and the application program installed by various routes.

Furthermore, in the above-mentioned embodiments, the description has been given to the case where the PND 1 of the velocity calculation device of an embodiment of the present invention includes the three-axis acceleration sensor 4 as the vertical acceleration detection unit, the Y axis gyro sensor 5 as the horizontal angular velocity detection unit, and the velocity calculation unit 22 as the velocity calculation unit. The present invention is not limited thereto, but the velocity calculation device may include a vertical acceleration detection unit, a horizontal angular velocity detection unit and a velocity calculation unit having other configurations.

The present application contains subject matter related to that disclosed in Japanese Priority Patent Applications JP 2009-198593 and JP 2008-221713 filed in the Japan Patent Office on August 28, 2009 and August 29, 2008, respectively, the entire contents of which are hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

**1.** A velocity calculation device comprising:

a vertical direction acceleration detection unit that is mounted on a mobile object to detect the acceleration of a vertical direction generated depending on the unevenness of a surface on which the mobile object moves;
a horizontal direction angular velocity detection unit that is mounted on the mobile object to detect the angular velocity around a horizontal axis perpendicular to a direction of travel of the mobile object generated depending on the unevenness of the surface on which the mobile object moves; and
a velocity calculation unit for calculating the velocity in the direction of travel of the mobile object based on the acceleration of the vertical direction and the angular velocity around the horizontal axis.

**2.** The velocity calculation device according to Claim 1,
wherein the vertical direction acceleration detection unit continuously and sequentially detects the acceleration of the vertical direction by a prescribed sampling frequency;
wherein the horizontal direction angular velocity detection unit continuously and sequentially detects the angular velocity around the horizontal axis by the sampling frequency; and
wherein the velocity calculation unit sequentially calculates the velocity of the mobile object using the acceleration of the vertical direction in the prescribed sampling number and the angular velocity around the horizontal axis of the sampling number.

**3.** The velocity calculation device according to Claim 2,

wherein the velocity calculation unit changes the sampling number so as to increase the sampling number when the velocity is equal to or larger than the prescribed velocity and decrease the sampling number when the velocity is less than the prescribed velocity.

**4.** The velocity calculation device according to Claim 3,
wherein the velocity calculation unit has a hysteresis property by changing the sampling number when the velocity increases and when the velocity decreases.

**5.** The velocity calculation device according to Claim 3 or 4,
wherein the velocity calculation unit calculates the velocity by extracting a maximum value and a minimum value from the acceleration of the vertical direction of the sampling number as a maximum acceleration and a minimum acceleration, respectively, and extracting a maximum value and a minimum value from the angular velocity around the horizontal axis of the sampling number as a maximum angular velocity and a minimum angular velocity, and then dividing a difference of the maximum acceleration and the minimum acceleration by a difference of the maximum angular velocity and the minimum angular velocity.

**6.** The velocity calculation device according to any of Claims 1 to 5,
wherein the velocity calculation unit further includes a low-pass filter in which a low-pass cut-off frequency lower than a prescribed frequency generated by a cradle when the velocity calculation device is held in the cradle is set up to remove frequency components which are equal to or more than the low-pass cut-off frequency from the acceleration of the vertical direction and the angular velocity around the horizontal axis.

**7.** The velocity calculation device according to Claim 6,
wherein the velocity calculation unit further includes
a high-pass filter in which a high-pass cut-off frequency lower than the frequency equivalent to the unevenness of the surface on which the mobile object moves is set up to remove frequency components which are equal to or less than the high-pass cut-off frequency from the acceleration of the vertical direction and the angular velocity around the horizontal axis, and
a cut-off frequency setting unit that sets up the low-pass cut-off frequency and the high-pass cut-off frequency depending on the previous velocity.

**8.** The velocity calculation device according to Claim 7,
wherein the cut-off frequency setting unit sets up the low-pass cut-off frequency and the high-pass cut-off frequency so as to be changed in a plurality of stages, and makes the value of the velocity, which is a threshold value when changing the low-pass cut-off frequency and the high-pass cut-off frequency, different from each other in a case where the velocity increases further than the previous velocity and in a case where the velocity decreases further than the previous velocity.

**9.** The velocity calculation device according to Claim 7,
wherein the cut-off frequency setting unit sets up the low-pass cut-off frequency and the high-pass cut-off frequency corresponding to a prescribed function depending on the velocity.

**10.** The velocity calculation device according to any of Claims 1 to 9,
wherein when the velocity acquires a higher value of more than a prescribed threshold value than the previous velocity and when the previous velocity is less than the prescribed velocity, the velocity calculation unit sets the velocity to 0, and
wherein when the velocity acquires a higher value of more than the prescribed threshold value than the previous velocity and when the previous velocity is equal to or larger than the prescribed velocity, the velocity calculation unit sets the previous velocity to the velocity.

**11.** A method of calculating a velocity comprising the steps of:

detecting the acceleration of a vertical direction generated in a mobile object corresponding to the unevenness of a surface on which the mobile object moves;
detecting the angular velocity around a horizontal axis perpendicular to a direction of travel of the mobile object generated in the mobile object corresponding to the unevenness of the surface on which the mobile object moves; and
calculating the velocity in the direction of travel of the mobile object based on the acceleration of the vertical direction and the angular velocity around the horizontal axis.

**12.** A navigation device including:

a vertical direction acceleration detection unit that detects the acceleration of a vertical direction generated in a mobile object corresponding to the unevenness of a surface on which the mobile object moves;
a horizontal direction angular velocity detection unit that detects the angular velocity around a horizontal axis perpendicular to a direction of travel of the mobile object generated in the mobile object corresponding to the unevenness of the surface on which the mobile object moves;
a velocity calculation unit that calculates the velocity in the direction of travel of the mobile object based on the acceleration of the vertical direction and the angular velocity around the horizontal axis;
a vertical direction angular velocity detection unit that calculates the angular velocity around a vertical axis perpendicular to the direction of travel;
an angle calculation unit that calculates the angle through which the mobile object has rotated based on the angular velocity around the vertical axis; and
a position calculation unit that calculates the position of the mobile object based on the velocity in the direction of travel calculated by the velocity calculation unit and the angle calculated by the angle calculation unit.

FIG. 1A

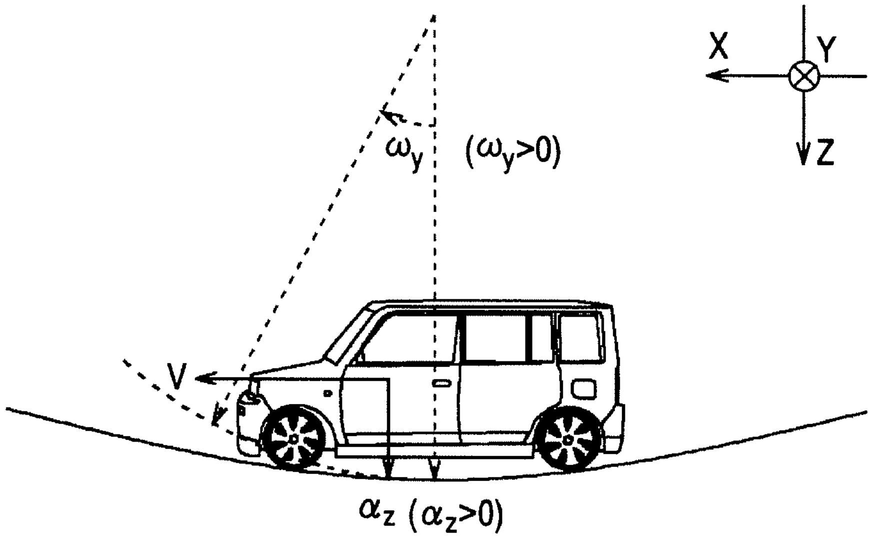
X
Y
Z
$\omega_y$
($\omega_y$>0)
V
$\alpha_z$ ($\alpha_z$>0)

FIG. 1B

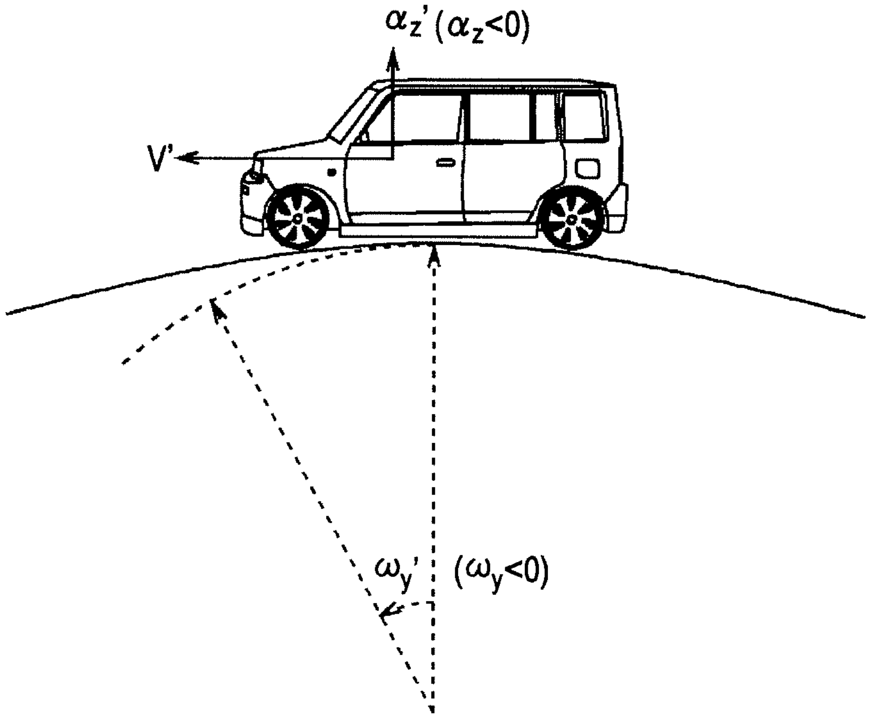
$\alpha_z$' ($\alpha_z$<0)
V'
$\omega_y$'
($\omega_y$<0)

FIG. 2

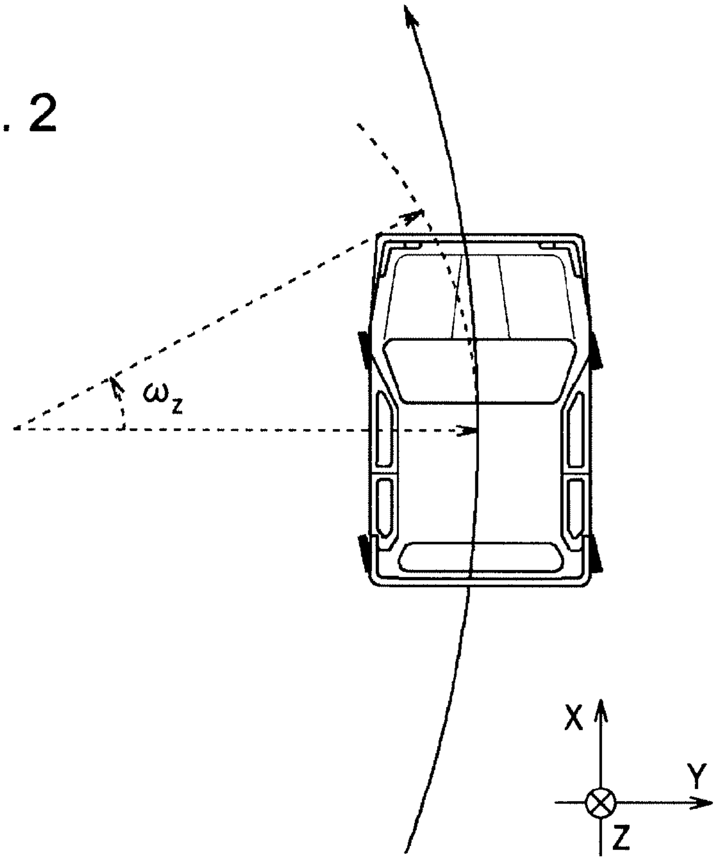


FIG. 3

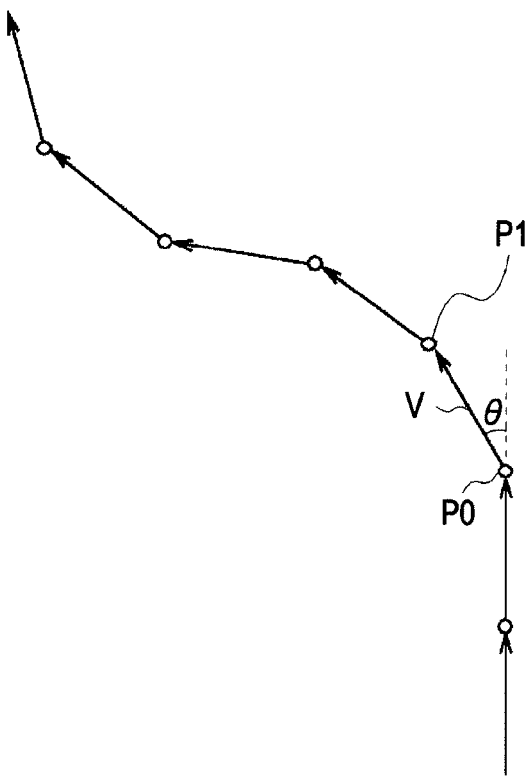

FIG. 4

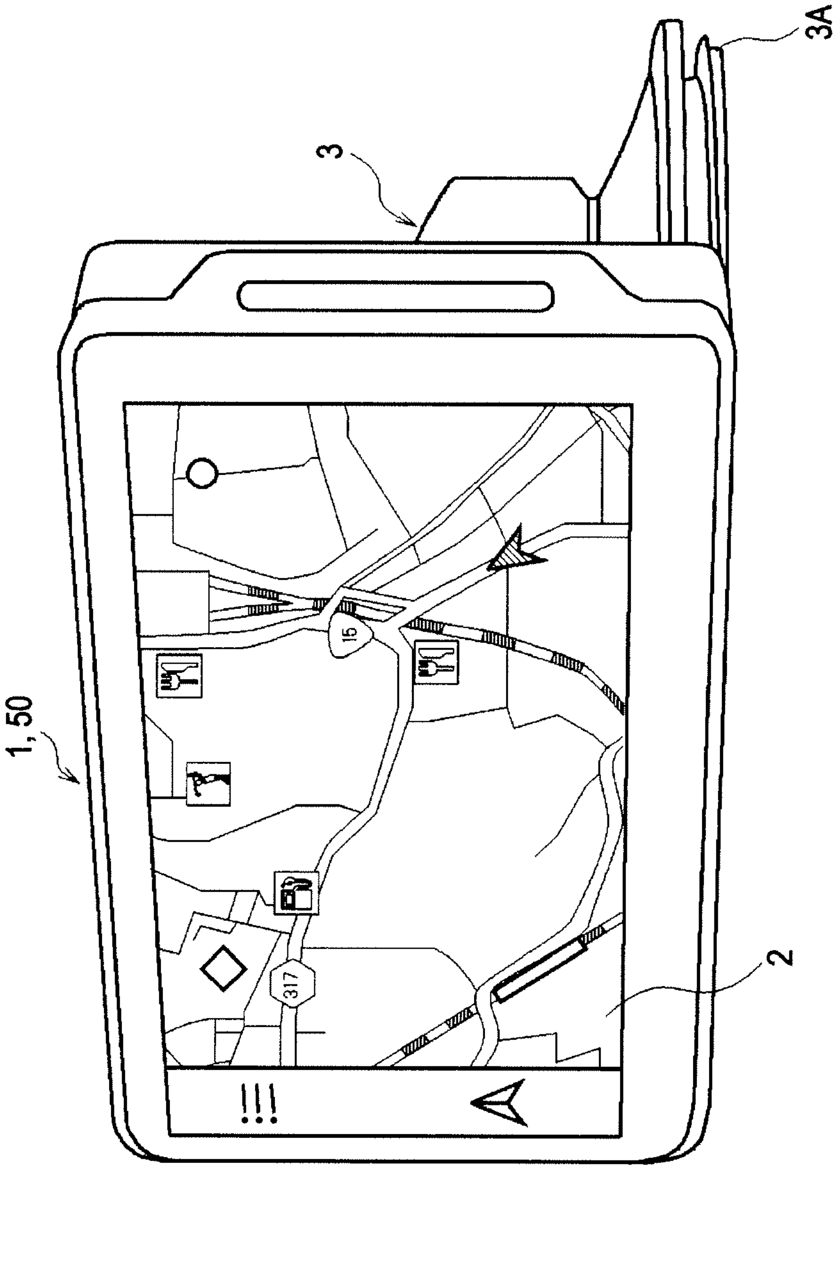

FIG. 5

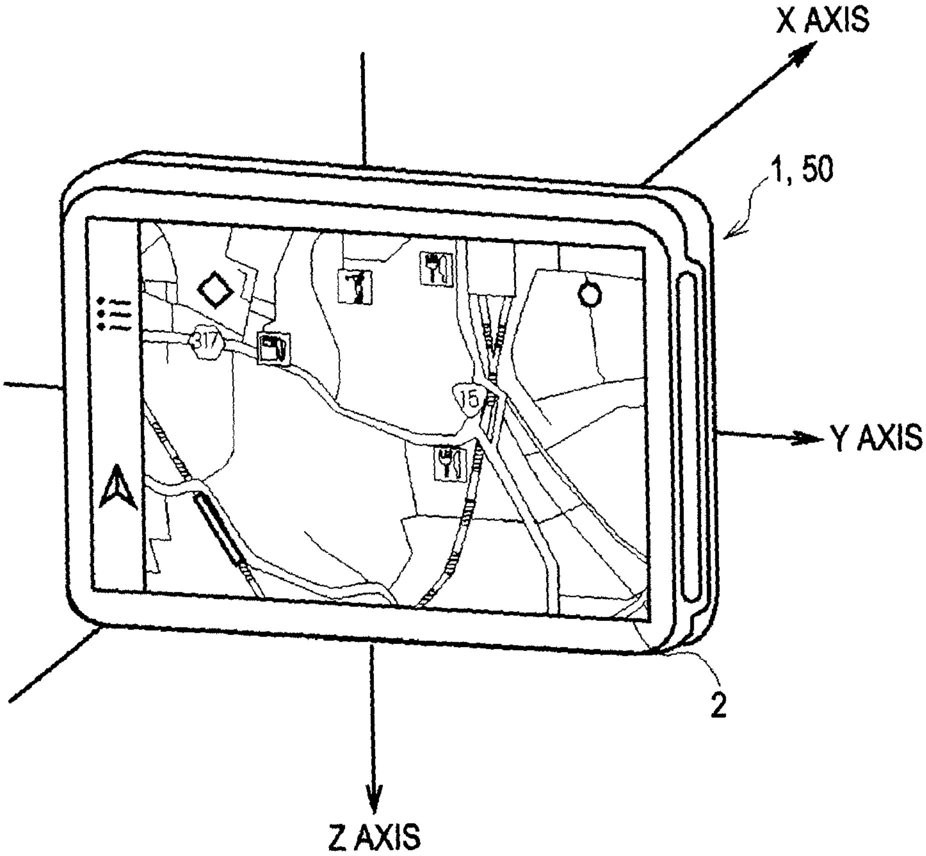

FIG. 6

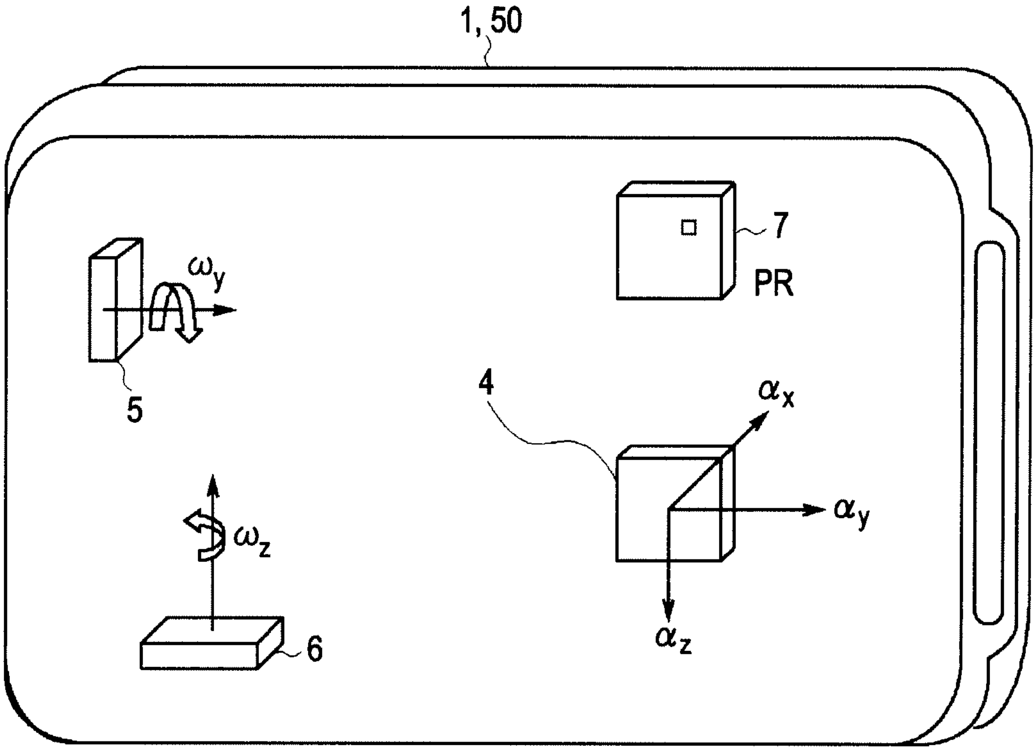

FIG. 7

1, 50

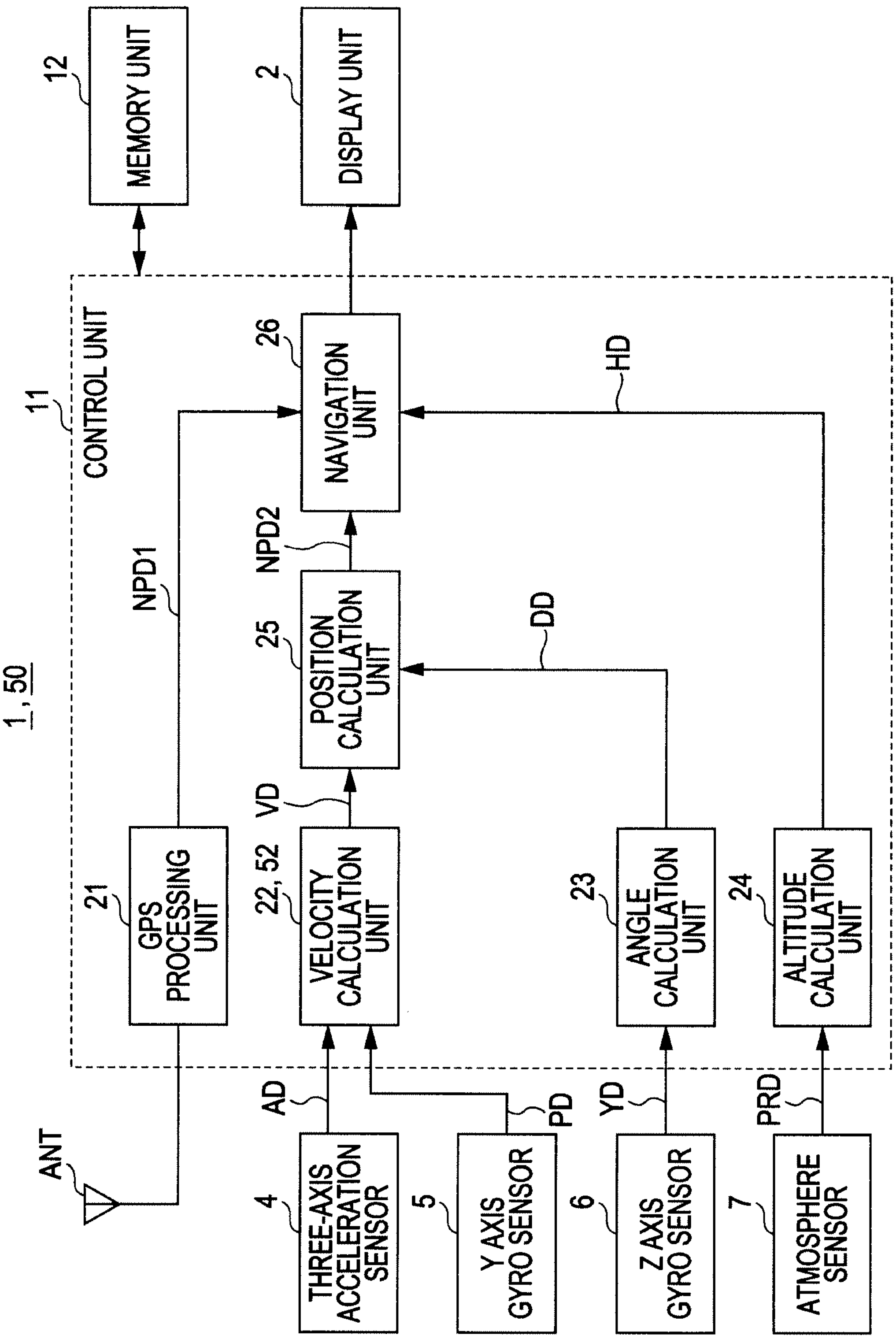
11
CONTROL UNIT
12
MEMORY UNIT
2
DISPLAY UNIT
26
NAVIGATION UNIT
NPD1
NPD2
25
POSITION CALCULATION UNIT
DD
HD
21
GPS PROCESSING UNIT
22, 52
VELOCITY CALCULATION UNIT
VD
23
ANGLE CALCULATION UNIT
24
ALTITUDE CALCULATION UNIT
ANT
AD
PD
YD
PRD
4
THREE-AXIS ACCELERATION SENSOR
5
Y AXIS GYRO SENSOR
6
Z AXIS GYRO SENSOR
7
ATMOSPHERE SENSOR

FIG. 8

22

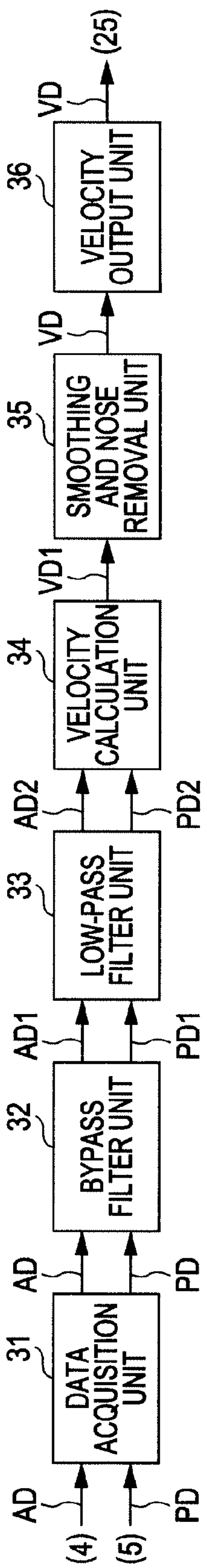

(4)
(5)
AD
PD
31
DATA ACQUISITION UNIT
AD
PD
32
BYPASS FILTER UNIT
AD1
PD1
33
LOW-PASS FILTER UNIT
AD2
PD2
34
VELOCITY CALCULATION UNIT
VD1
35
SMOOTHING AND NOSE REMOVAL UNIT
VD
36
VELOCITY OUTPUT UNIT
VD
(25)

FIG. 9

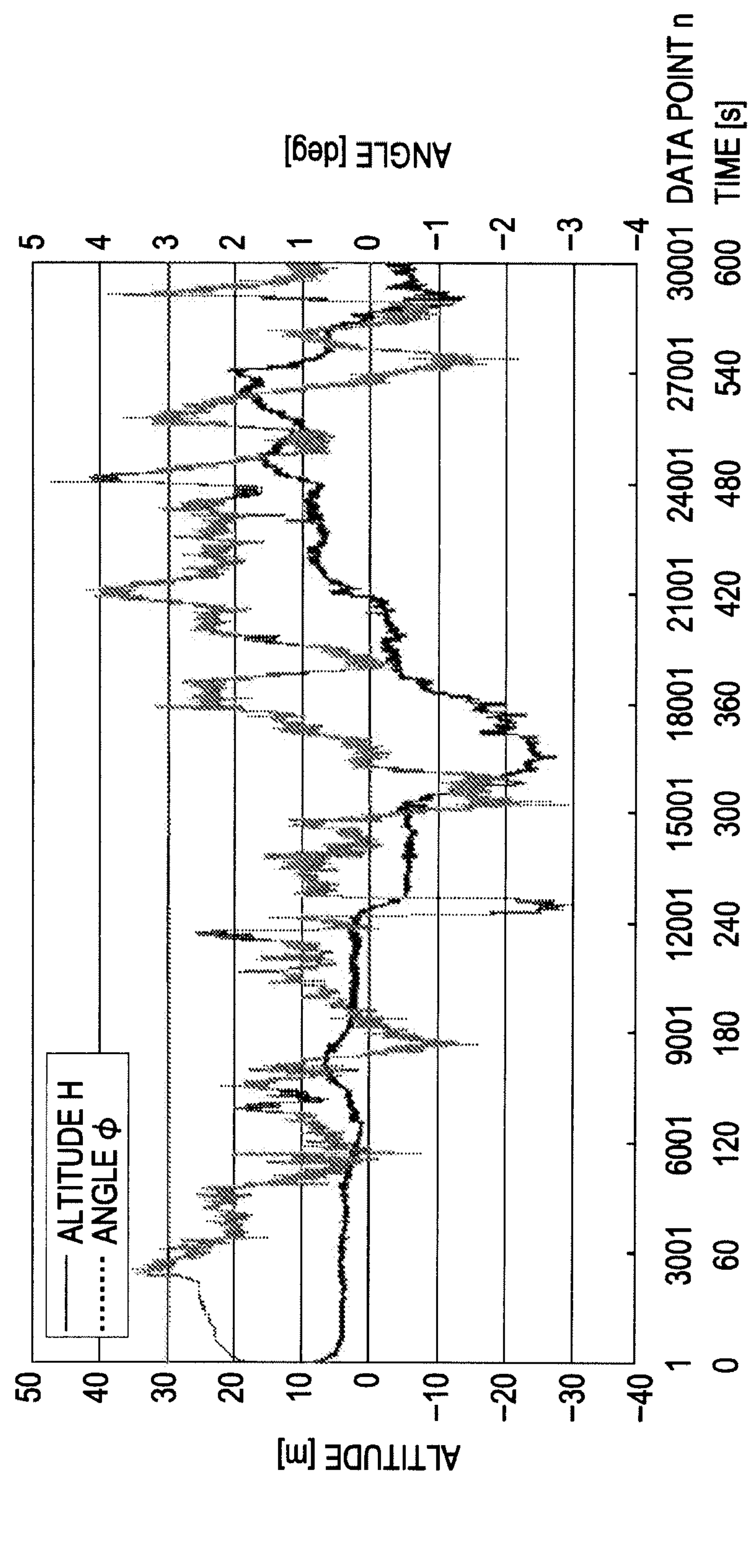
ALTITUDE H
ANGLE φ
ALTITUDE [m]
ANGLE [deg]
DATA POINT n
TIME [s]
50
40
30
20
10
0
−10
−20
−30
−40
5
4
3
2
1
0
−1
−2
−3
−4
1 3001 6001 9001 12001 15001 18001 21001 24001 27001 30001
0 60 120 180 240 300 360 420 480 540 600

FIG. 10A

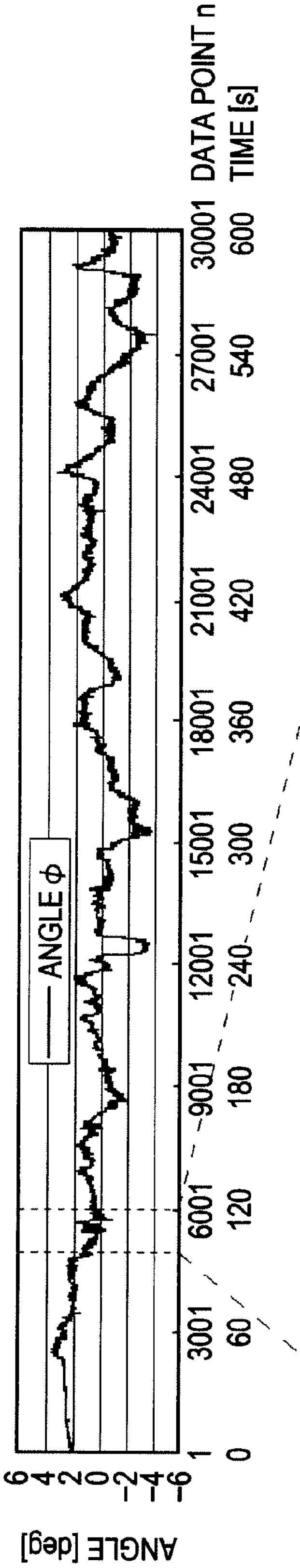


FIG. 10B

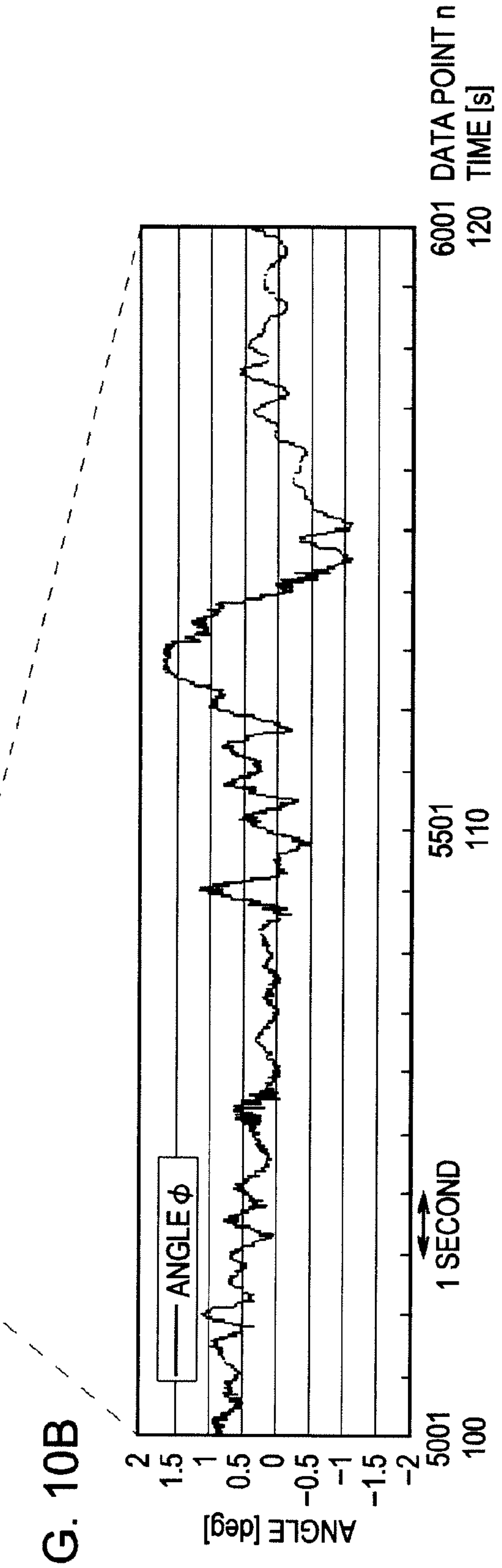

FIG. 11A

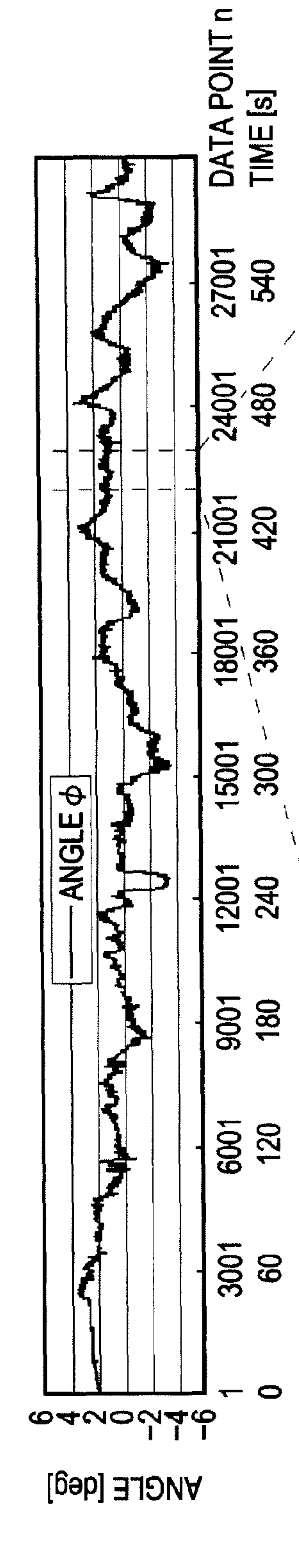


FIG. 11B

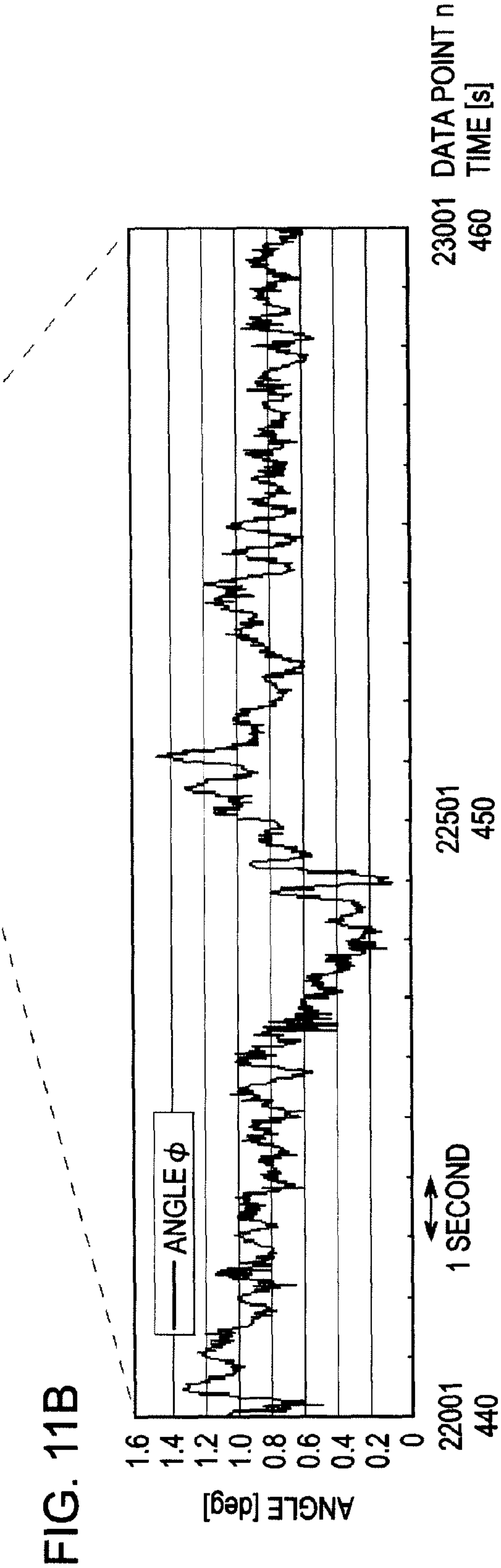

FIG. 12

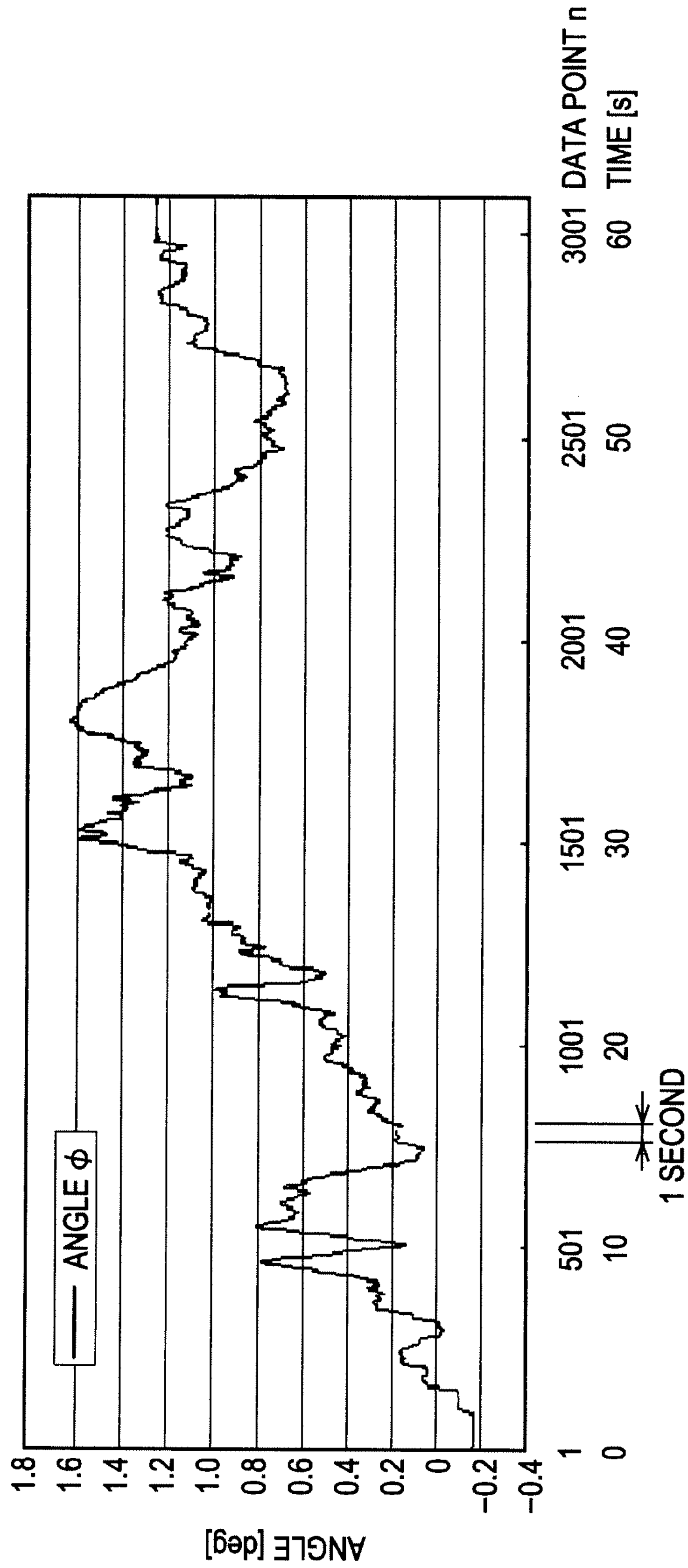
ANGLE [deg]
1.8
1.6
1.4
1.2
1.0
0.8
0.6
0.4
0.2
0
−0.2
−0.4
ANGLE Φ
1 SECOND
1
501
1001
1501
2001
2501
3001
DATA POINT n
0
10
20
30
40
50
60
TIME [s]

FIG. 13

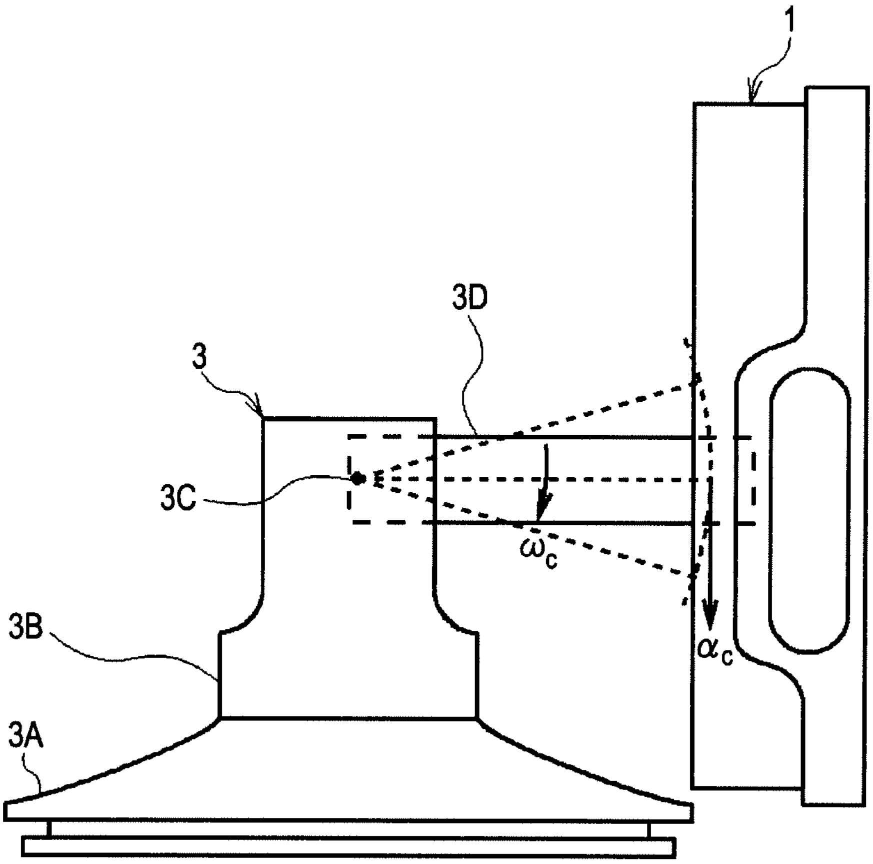

FIG. 14

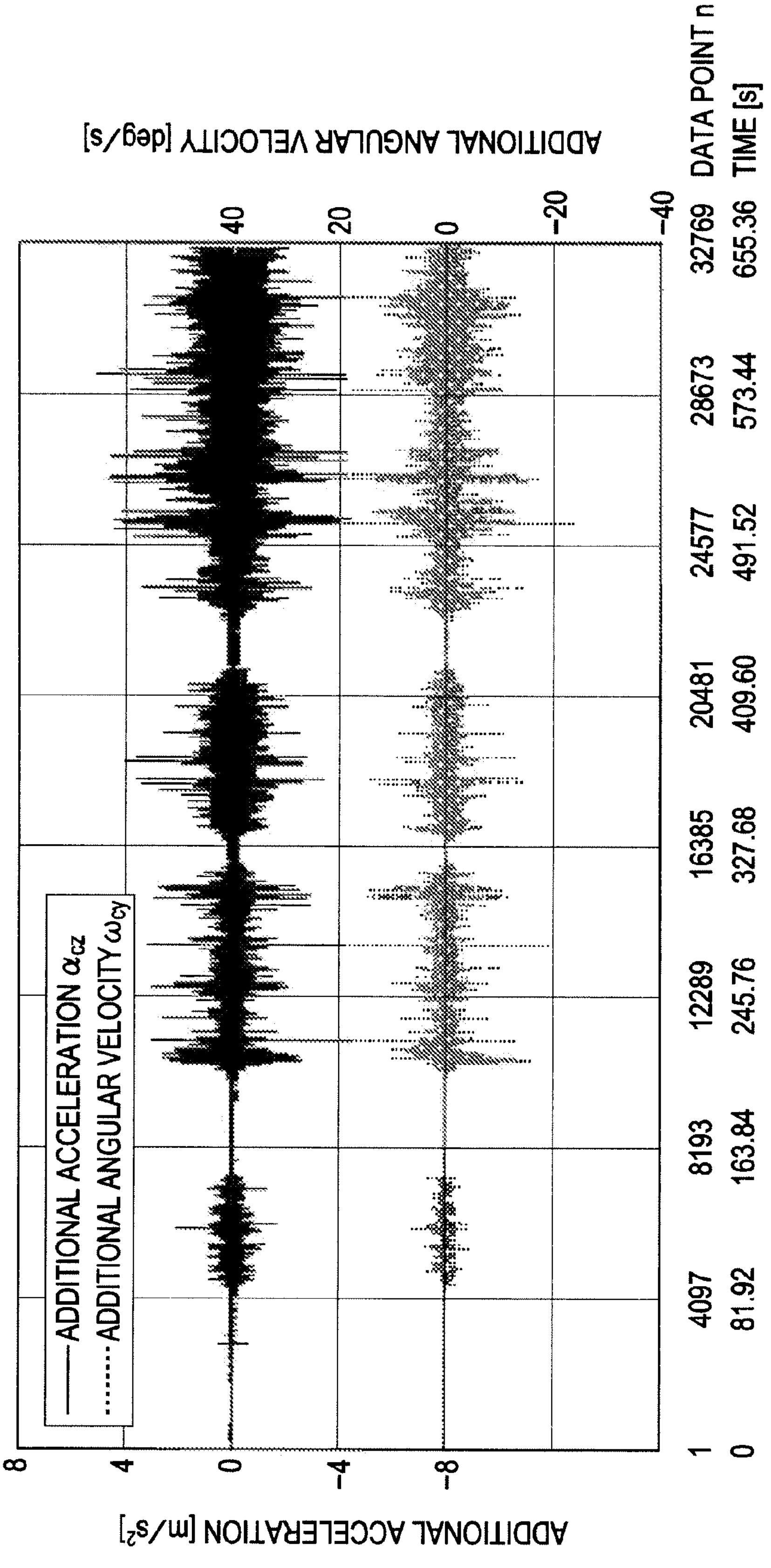
ADDITIONAL ACCELERATION αcz
ADDITIONAL ANGULAR VELOCITY ωcy
ADDITIONAL ACCELERATION [m/s2]
8
4
0
-4
-8
ADDITIONAL ANGULAR VELOCITY [deg/s]
40
20
0
-20
-40
DATA POINT n
TIME [s]
1
0
4097
81.92
8193
163.84
12289
245.76
16385
327.68
20481
409.60
24577
491.52
28673
573.44
32769
655.36

FIG. 15A

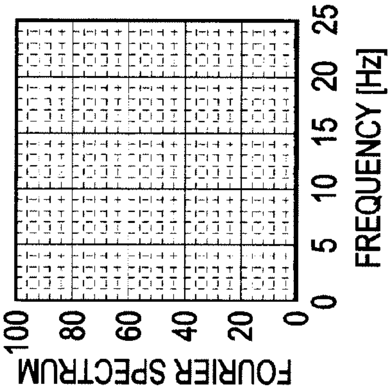


FIG. 15B

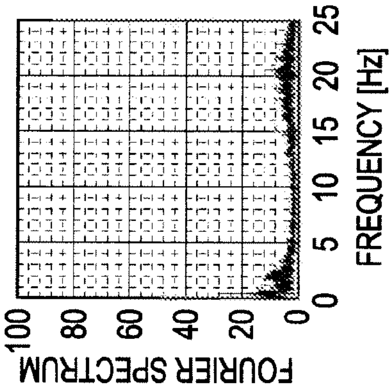


FIG. 15C

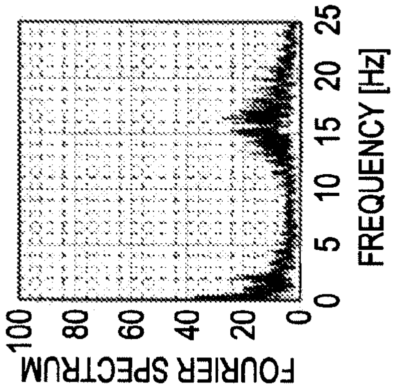


FIG. 15D

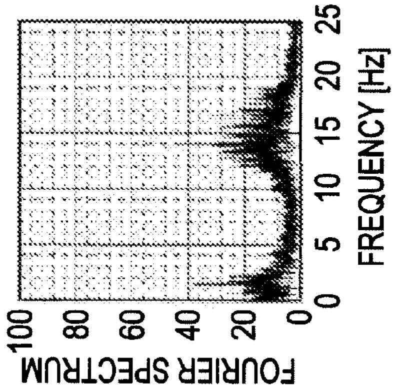


FIG. 15E

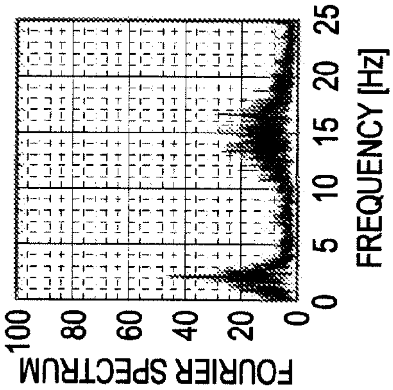


FIG. 15F

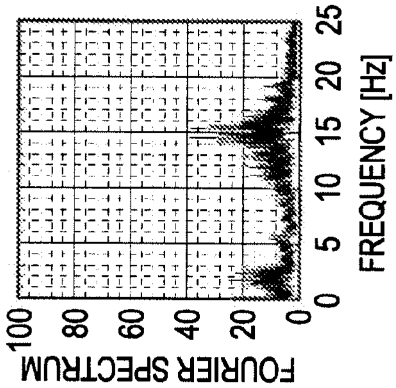


FIG. 15G

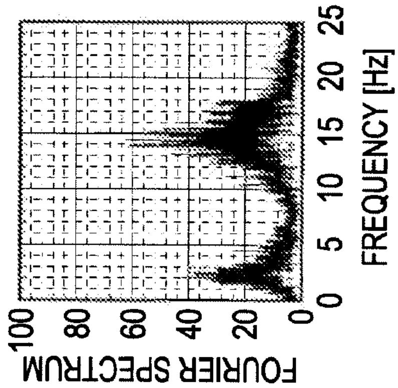


FIG. 15H

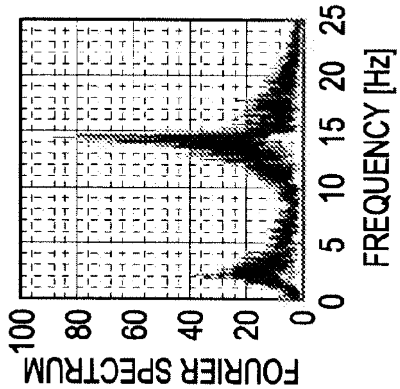

FIG. 16A

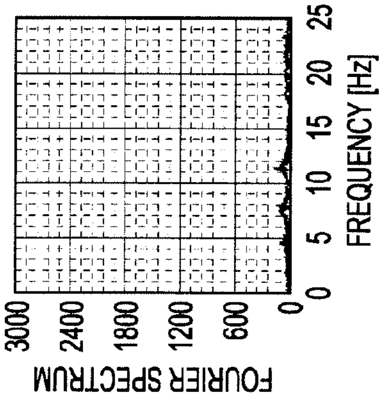


FIG. 16B

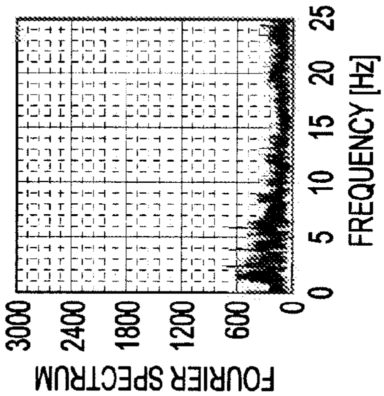


FIG. 16C

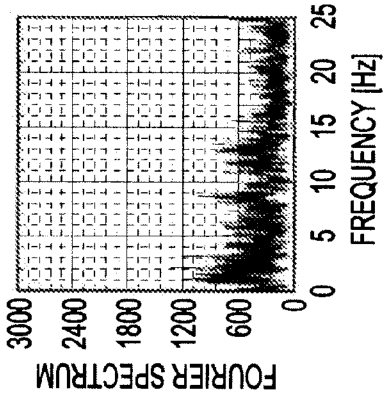


FIG. 16D

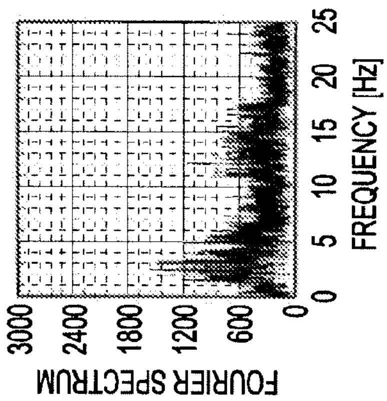


FIG. 16E

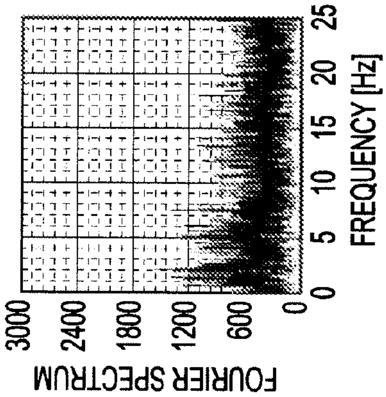


FIG. 16F

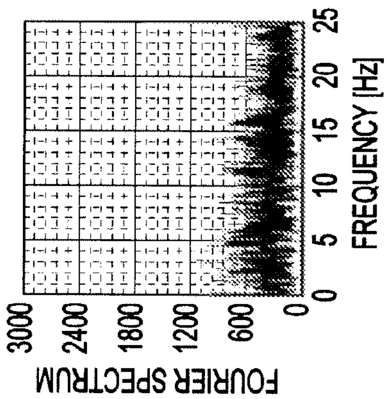


FIG. 16G

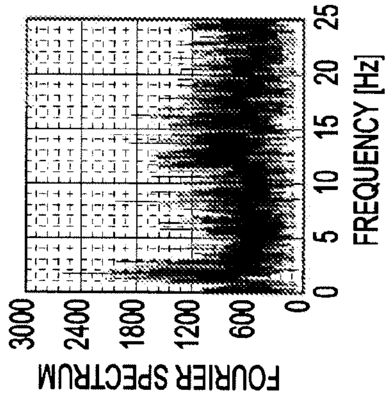


FIG. 16H

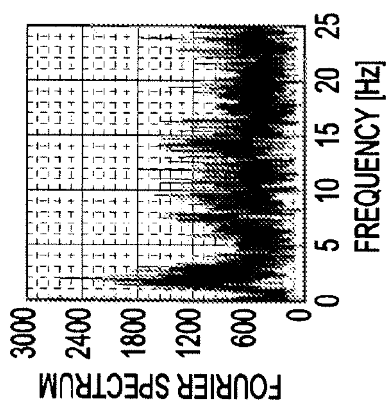

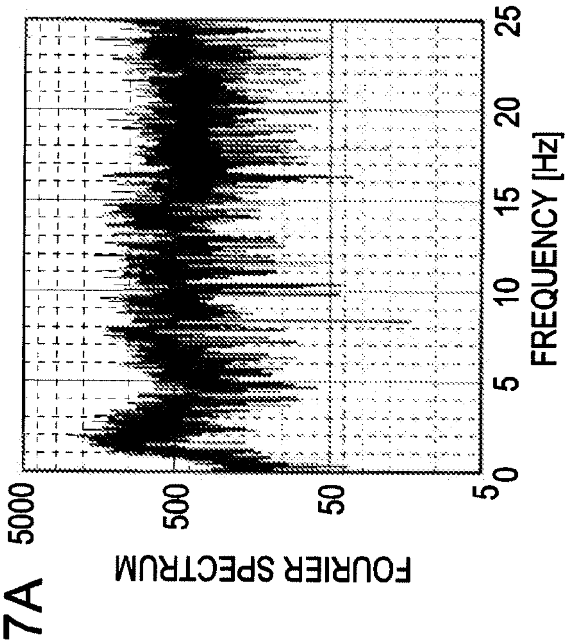


FIG. 17A

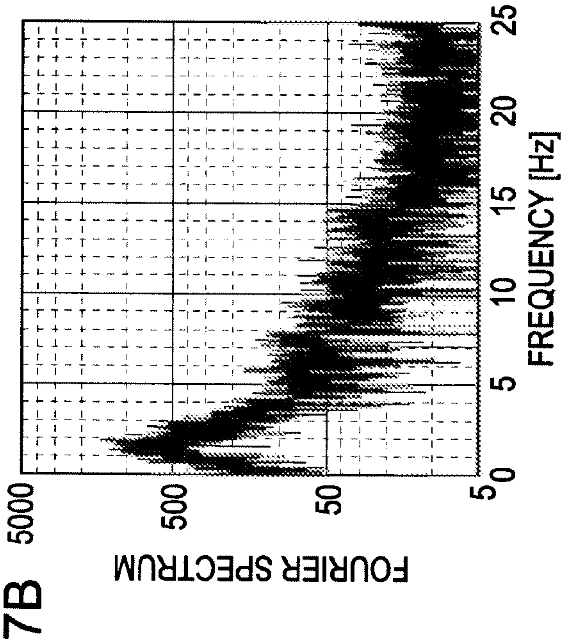


FIG. 17B

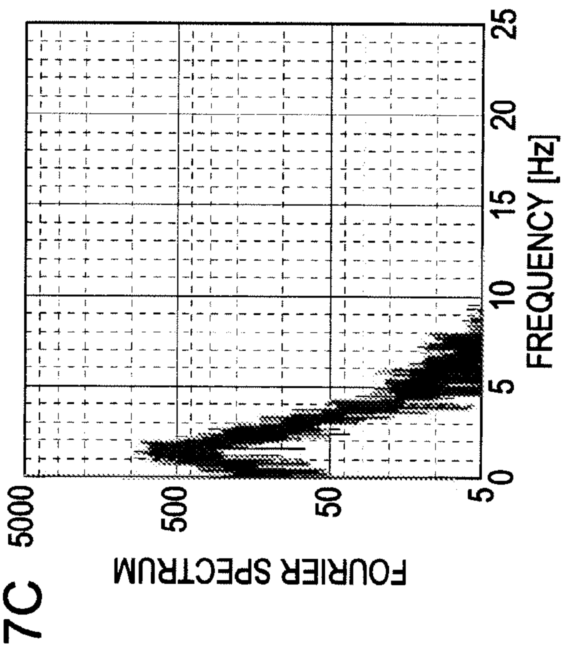


FIG. 17C

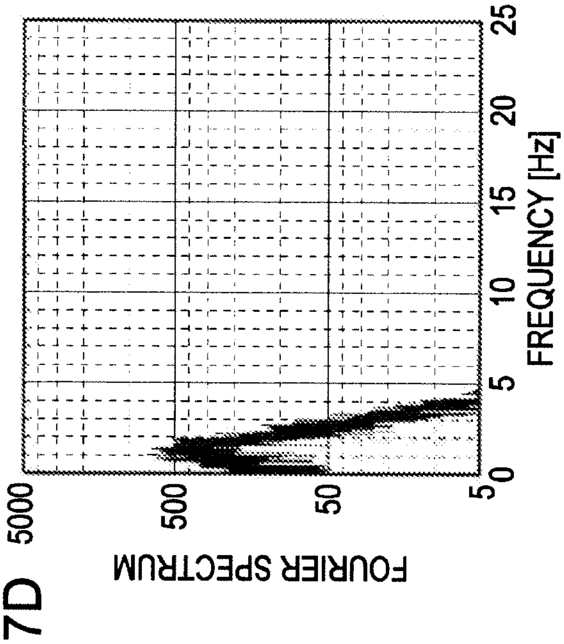


FIG. 17D

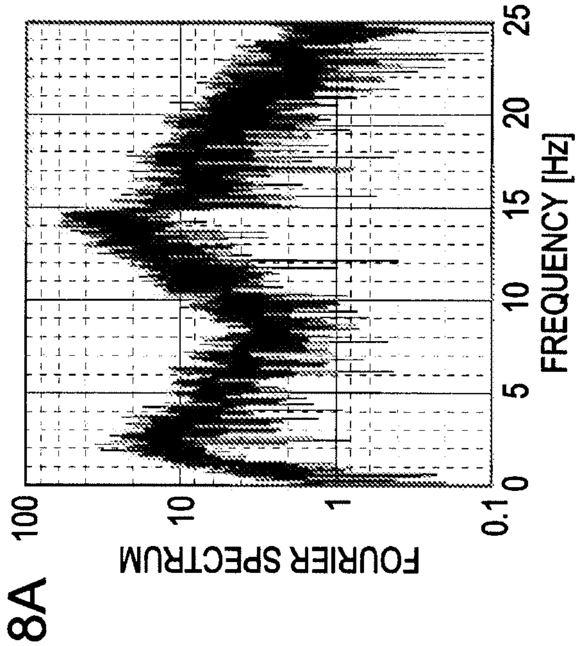


FIG. 18A

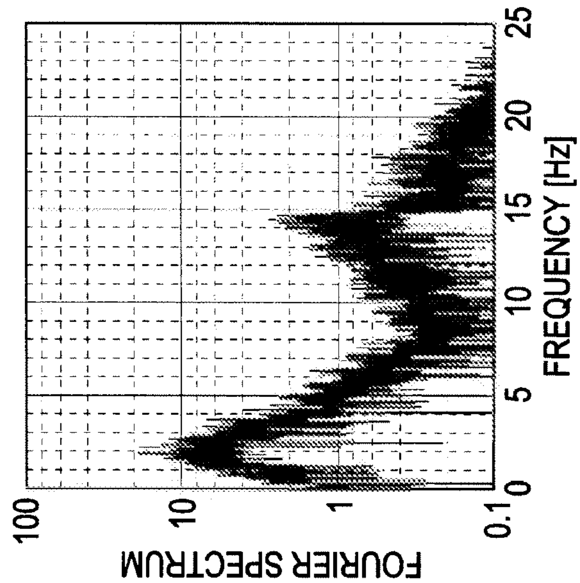


FIG. 18B

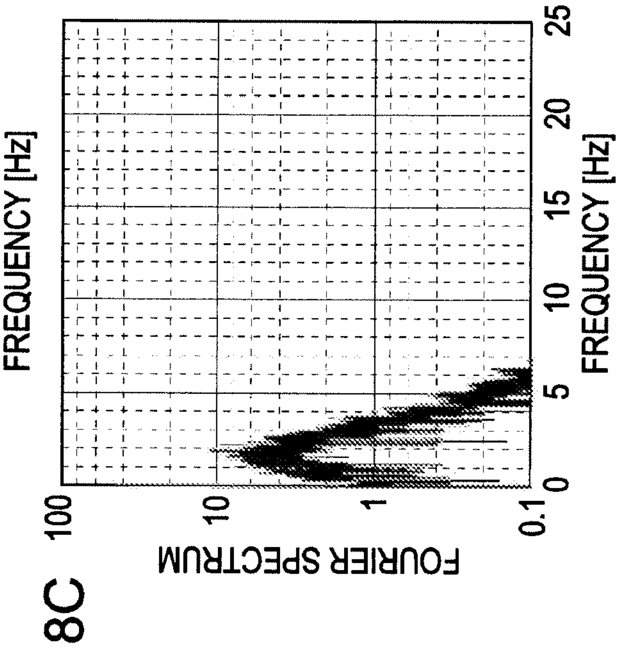


FIG. 18C

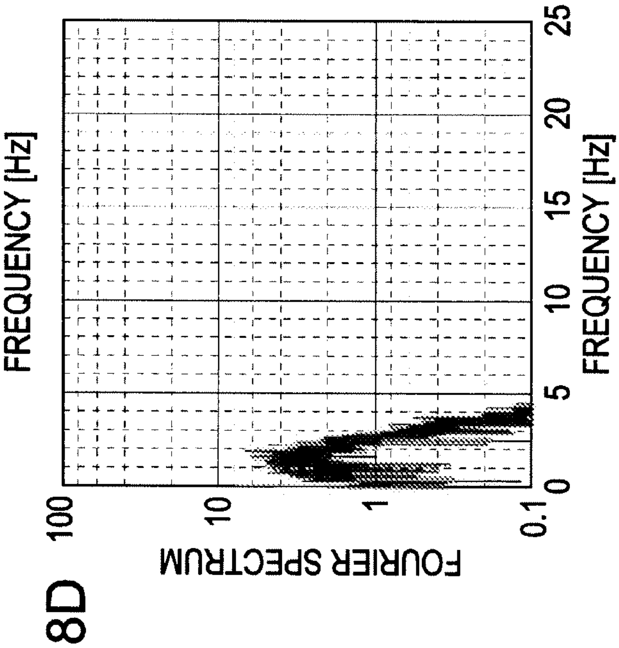


FIG. 18D

FIG. 19

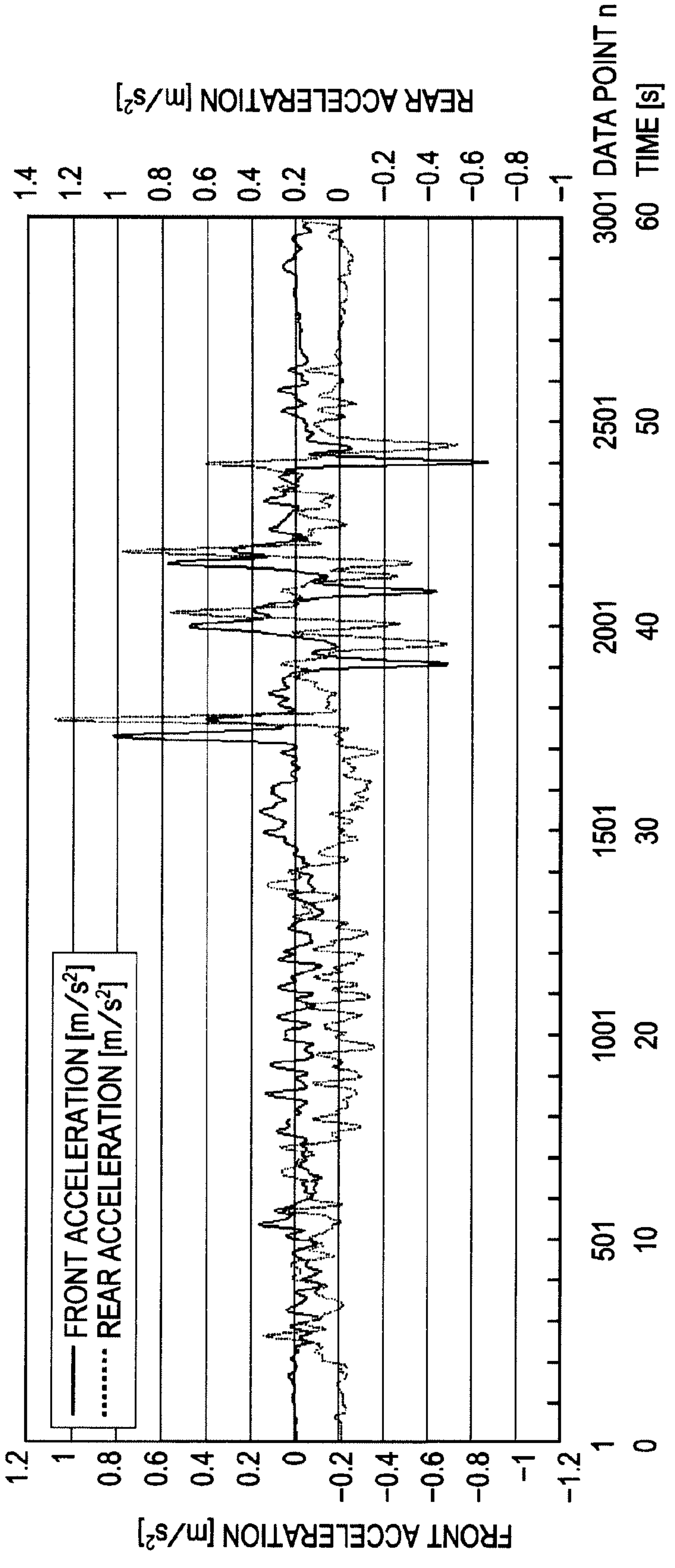
FRONT ACCELERATION [m/s2]
REAR ACCELERATION [m/s2]
FRONT ACCELERATION [m/s2]
REAR ACCELERATION [m/s2]
DATA POINT n
TIME [s]
1 501 1001 1501 2001 2501 3001
0 10 20 30 40 50 60
1.2 1 0.8 0.6 0.4 0.2 0 −0.2 −0.4 −0.6 −0.8 −1 −1.2
1.4 1.2 1 0.8 0.6 0.4 0.2 0 −0.2 −0.4 −0.6 −0.8 −1

FIG. 20A

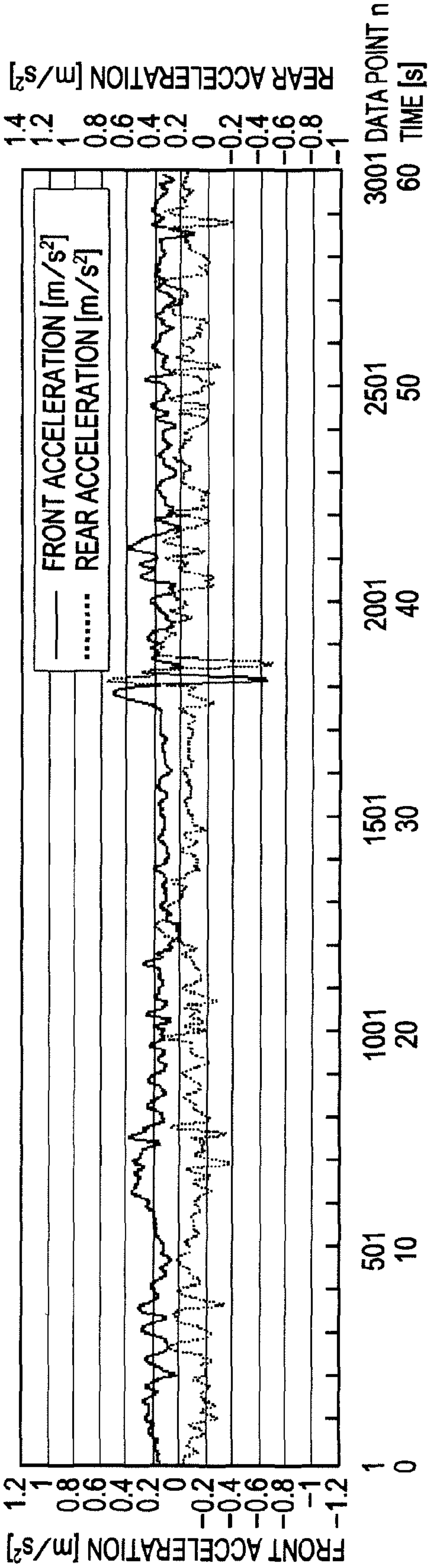


FIG. 20B

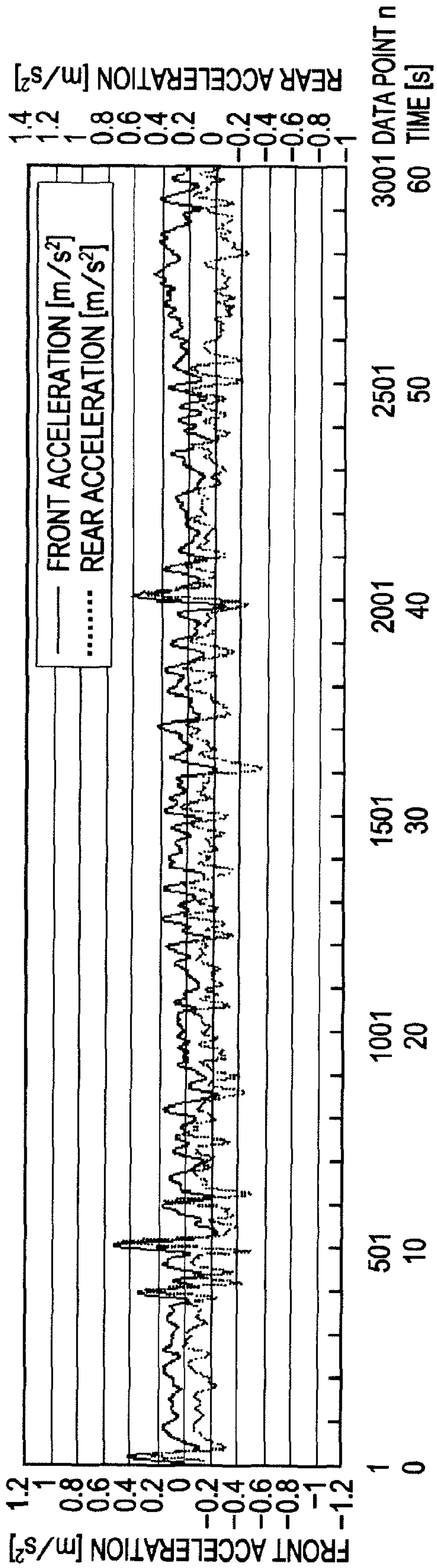

FIG. 21A

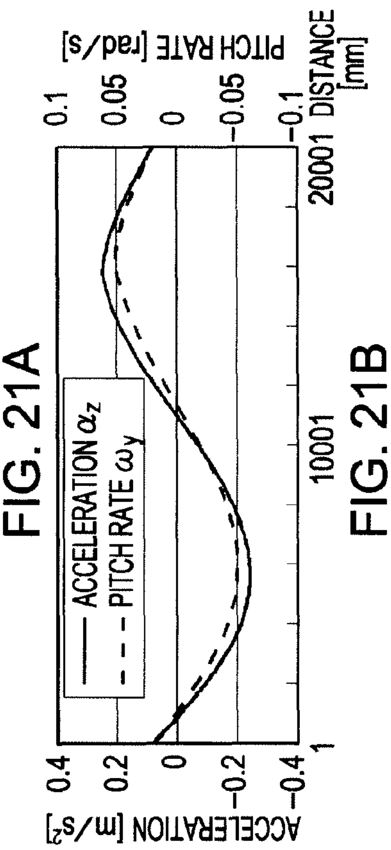


FIG. 21B

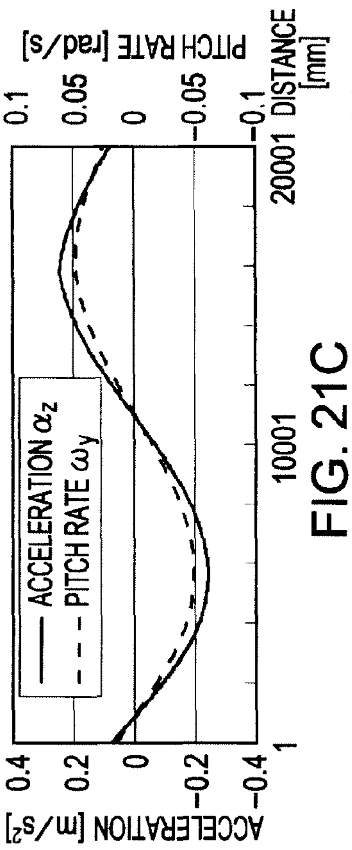


FIG. 21C

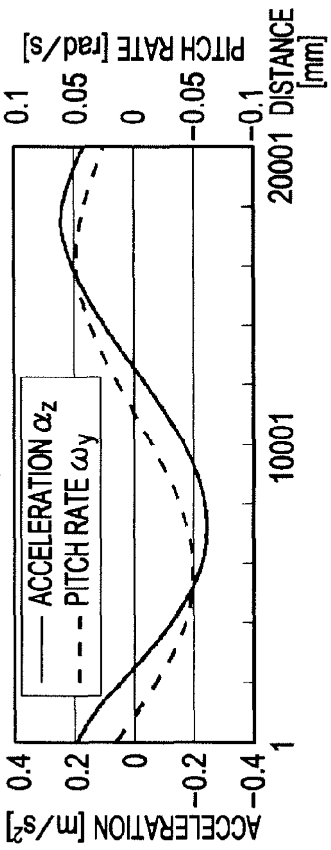


FIG. 21D

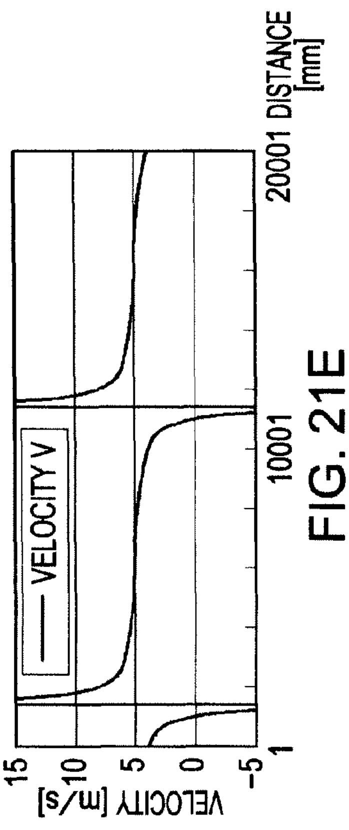


FIG. 21E

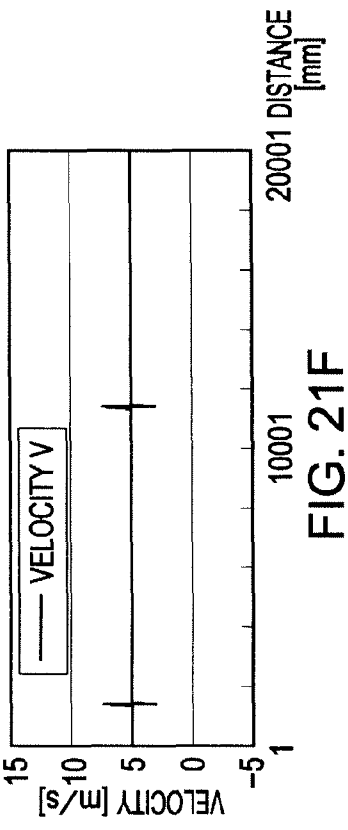


FIG. 21F

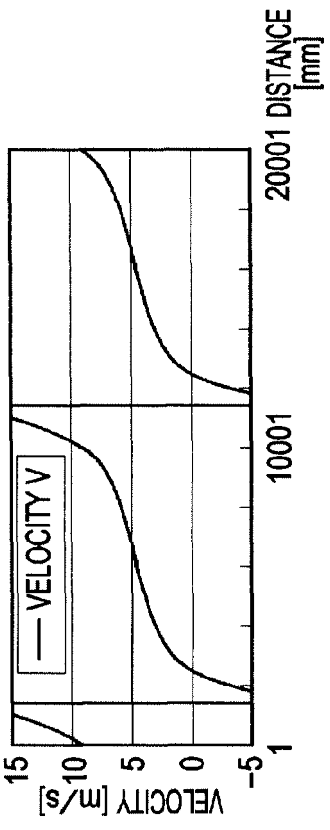

FIG. 22

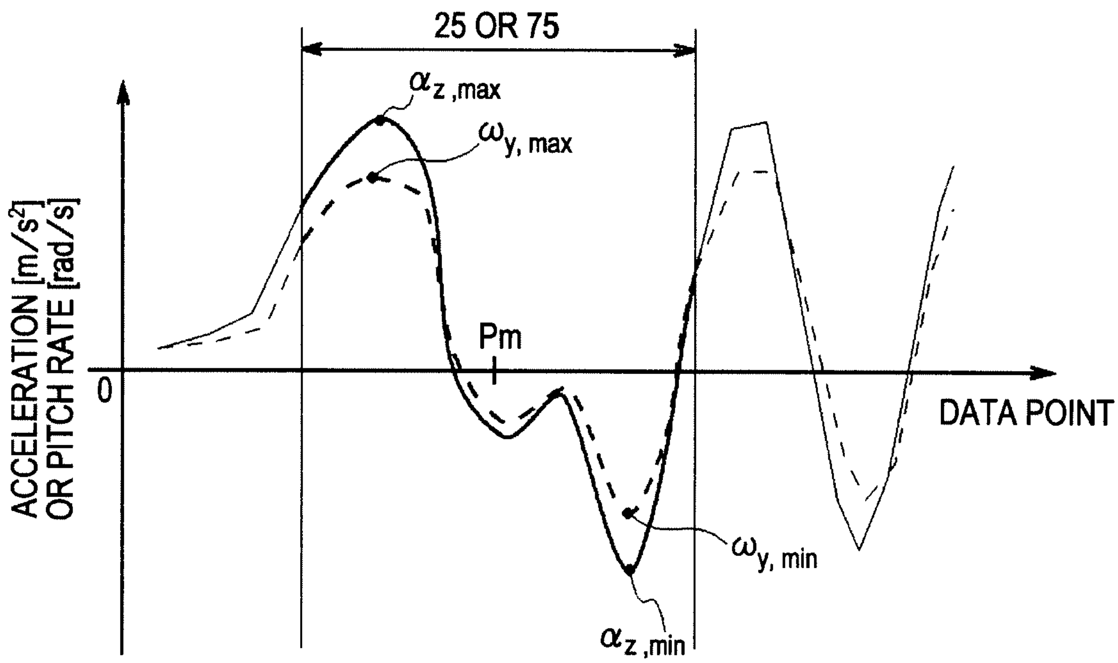
25 OR 75
$\alpha_{z,max}$
$\omega_{y, max}$
ACCELERATION [m/s²]
OR PITCH RATE [rad/s]
0
Pm
DATA POINT
$\omega_{y, min}$
$\alpha_{z,min}$

FIG. 23

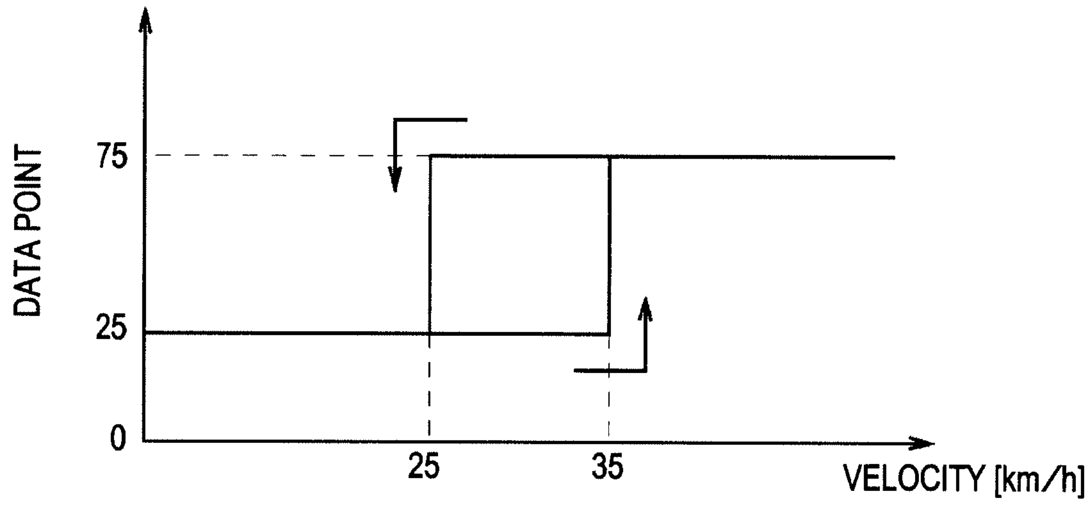
DATA POINT
75
25
0
25
35
VELOCITY [km/h]

FIG. 24A

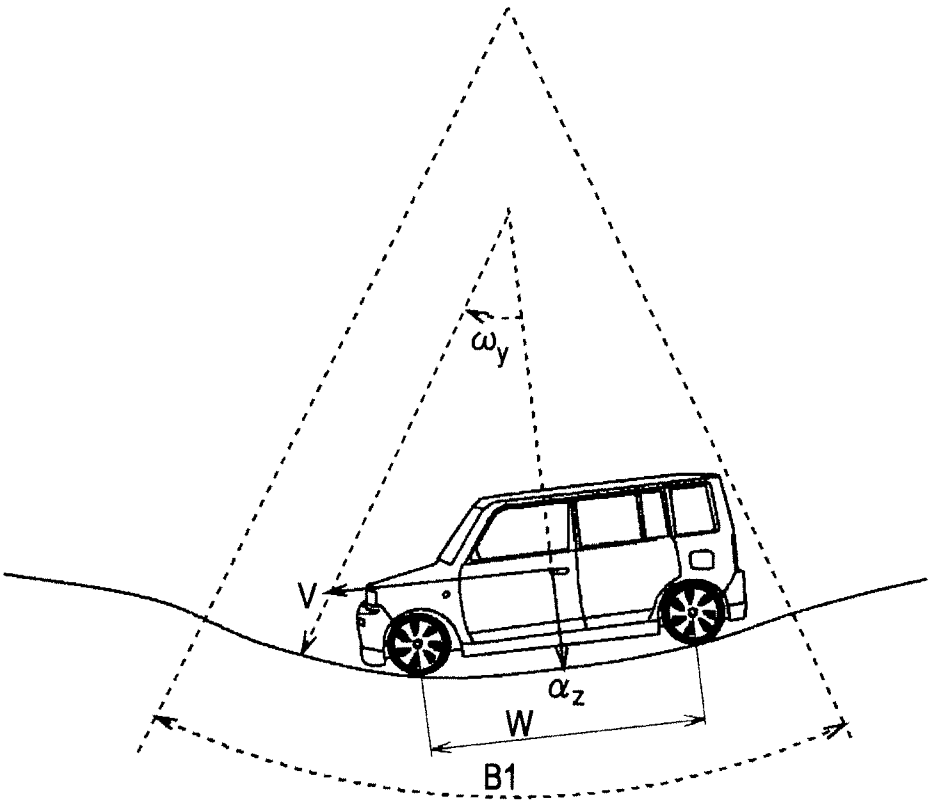


FIG. 24B

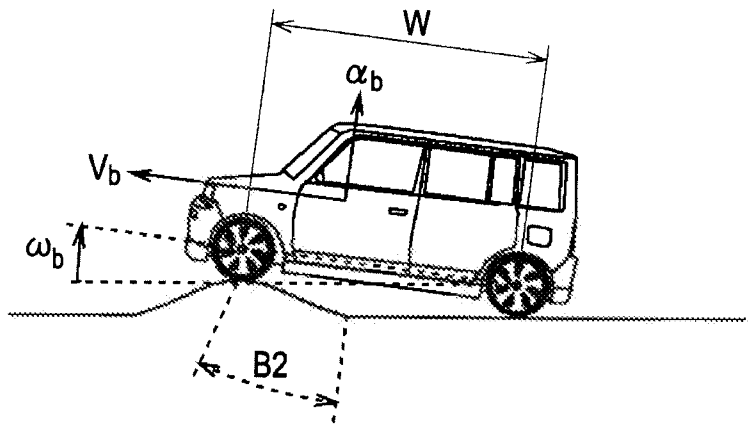

FIG. 25

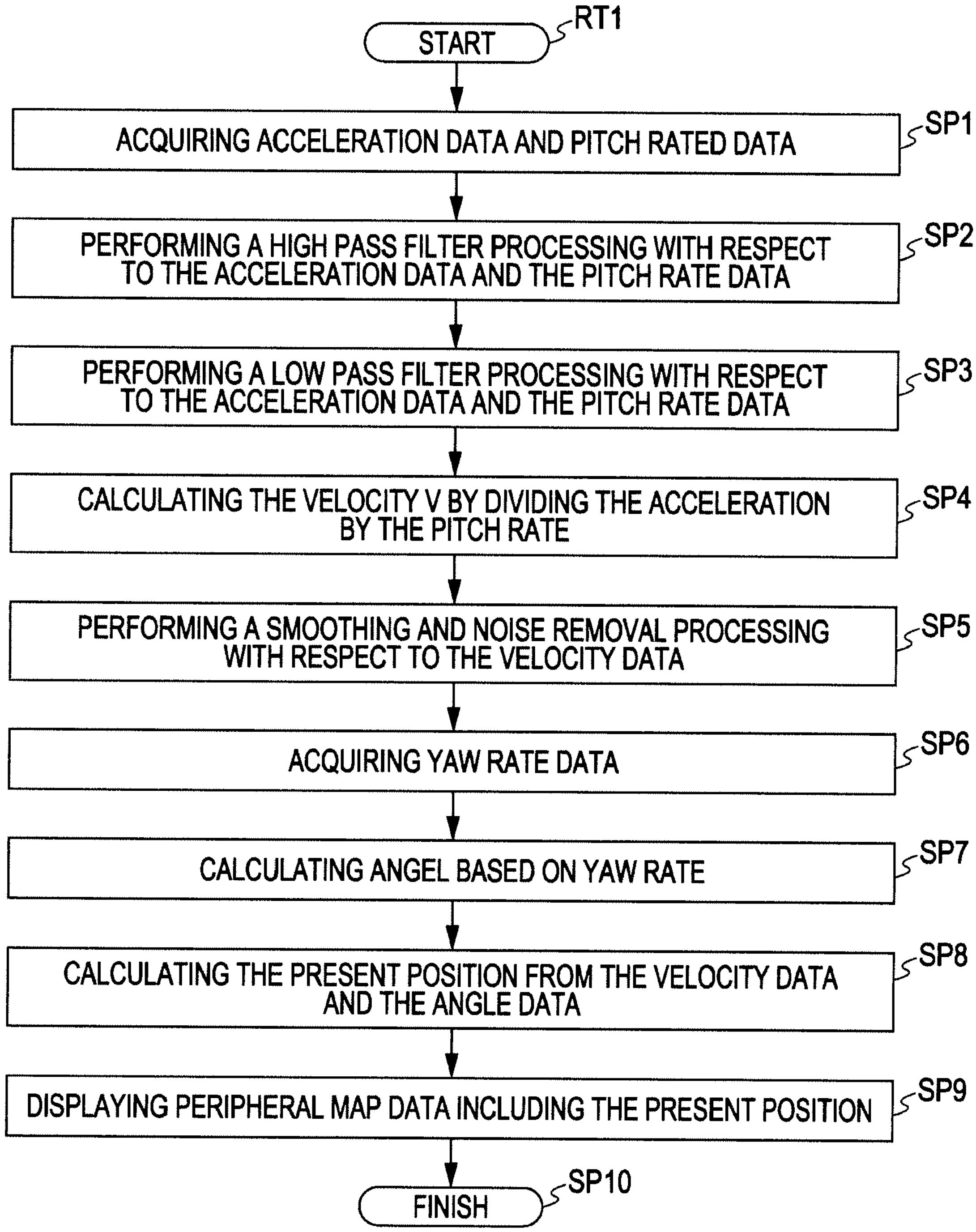
START
RT1
ACQUIRING ACCELERATION DATA AND PITCH RATED DATA
SP1
PERFORMING A HIGH PASS FILTER PROCESSING WITH RESPECT TO THE ACCELERATION DATA AND THE PITCH RATE DATA
SP2
PERFORMING A LOW PASS FILTER PROCESSING WITH RESPECT TO THE ACCELERATION DATA AND THE PITCH RATE DATA
SP3
CALCULATING THE VELOCITY V BY DIVIDING THE ACCELERATION BY THE PITCH RATE
SP4
PERFORMING A SMOOTHING AND NOISE REMOVAL PROCESSING WITH RESPECT TO THE VELOCITY DATA
SP5
ACQUIRING YAW RATE DATA
SP6
CALCULATING ANGEL BASED ON YAW RATE
SP7
CALCULATING THE PRESENT POSITION FROM THE VELOCITY DATA AND THE ANGLE DATA
SP8
DISPLAYING PERIPHERAL MAP DATA INCLUDING THE PRESENT POSITION
SP9
FINISH
SP10

FIG. 26A

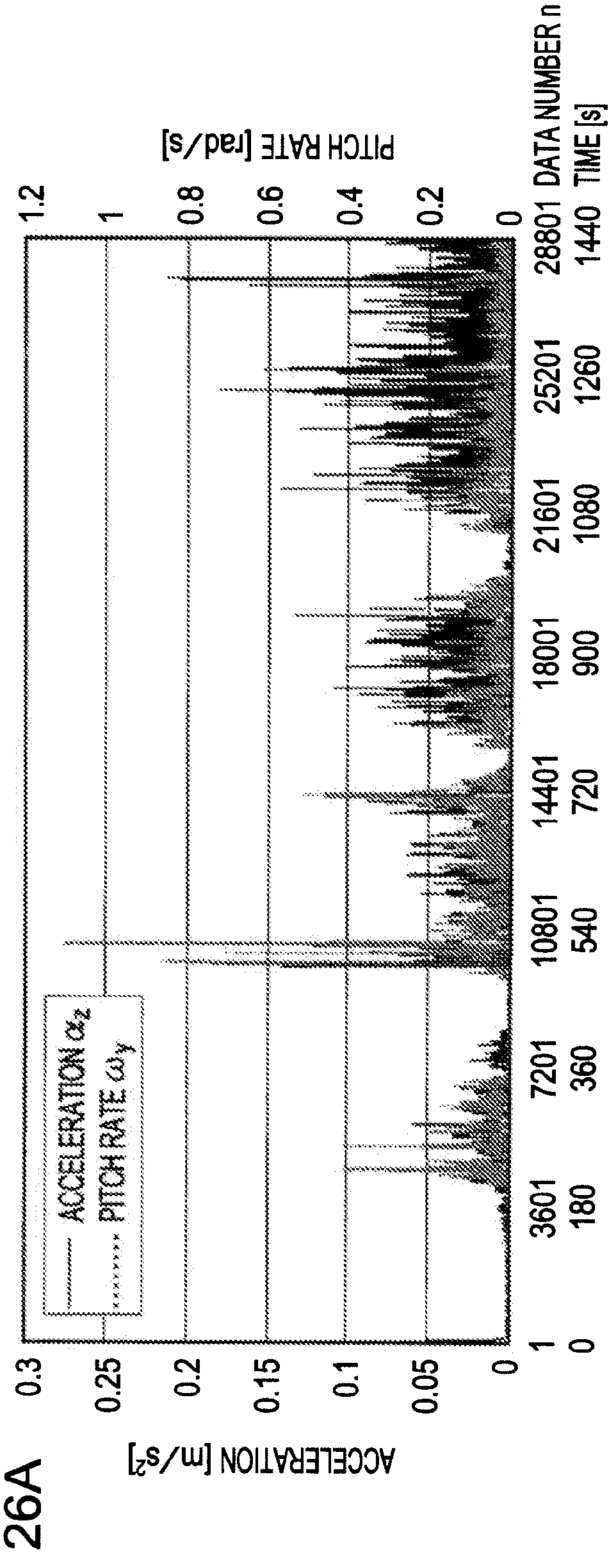


FIG. 26B

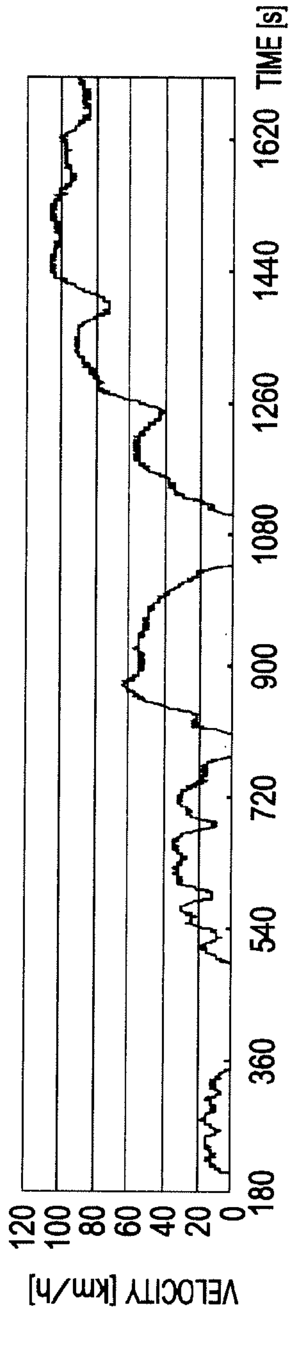

FIG. 27A

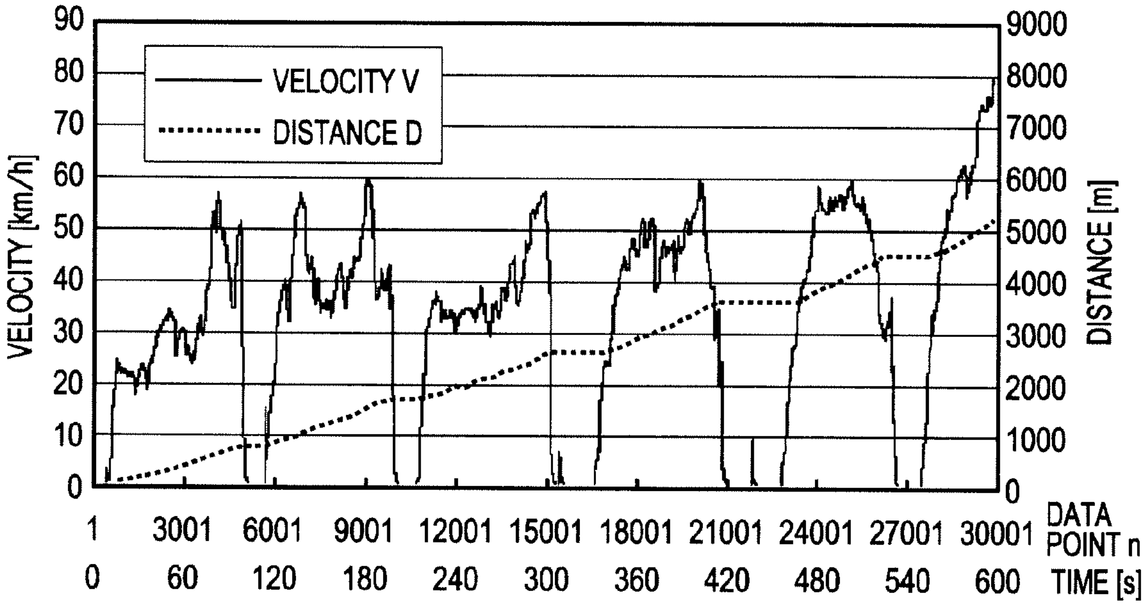


FIG. 27B

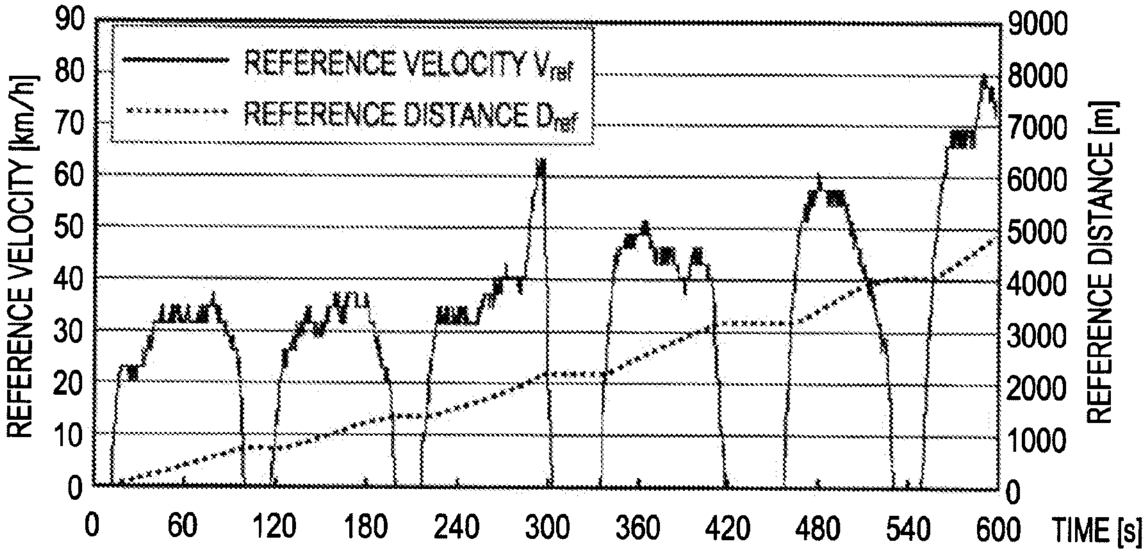

FIG. 28A

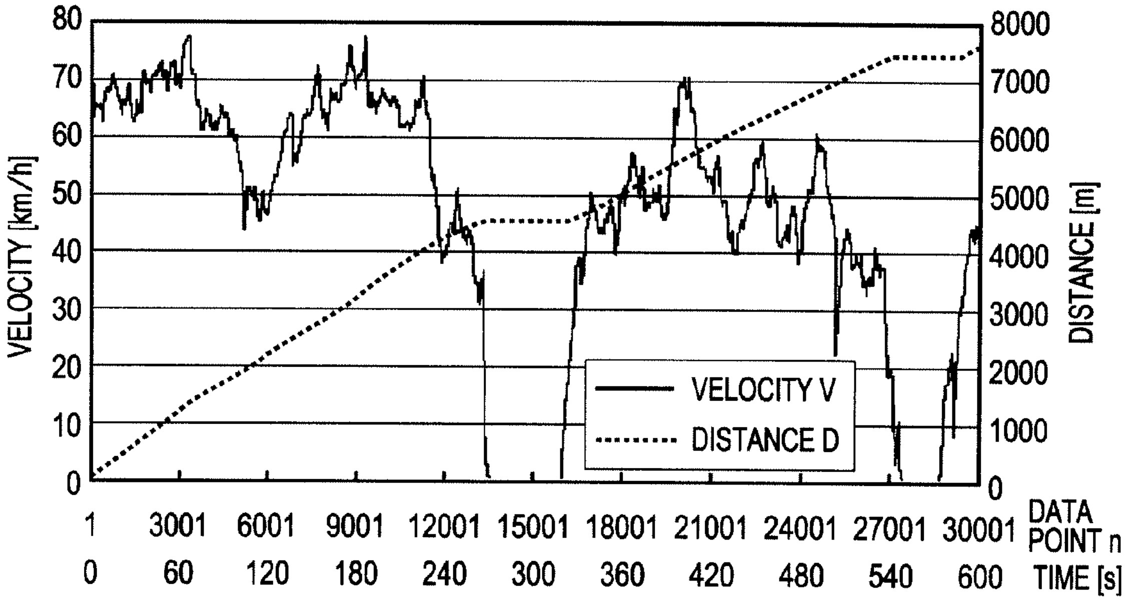


FIG. 28B

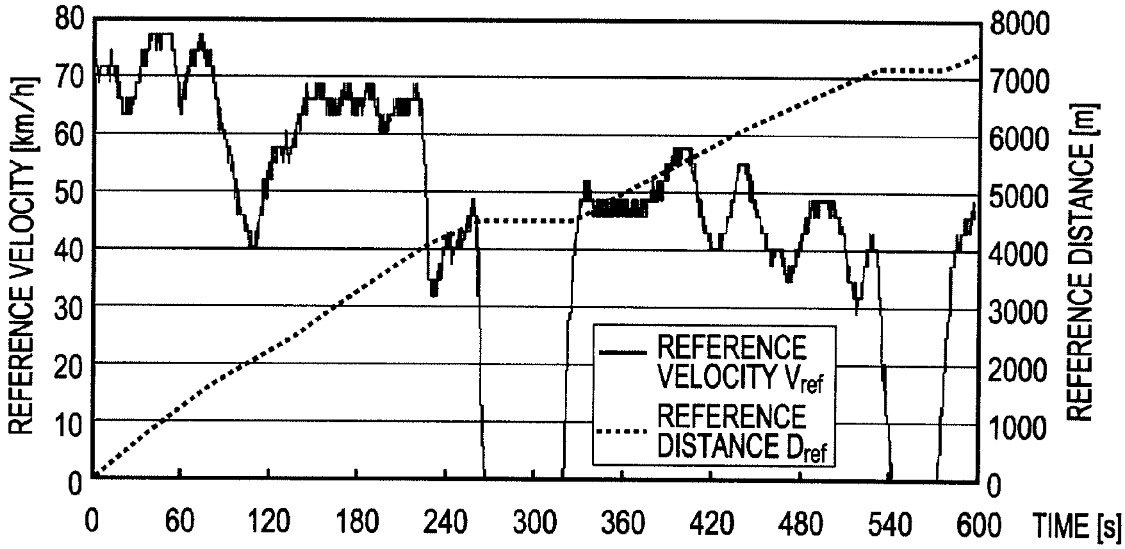

FIG. 29A

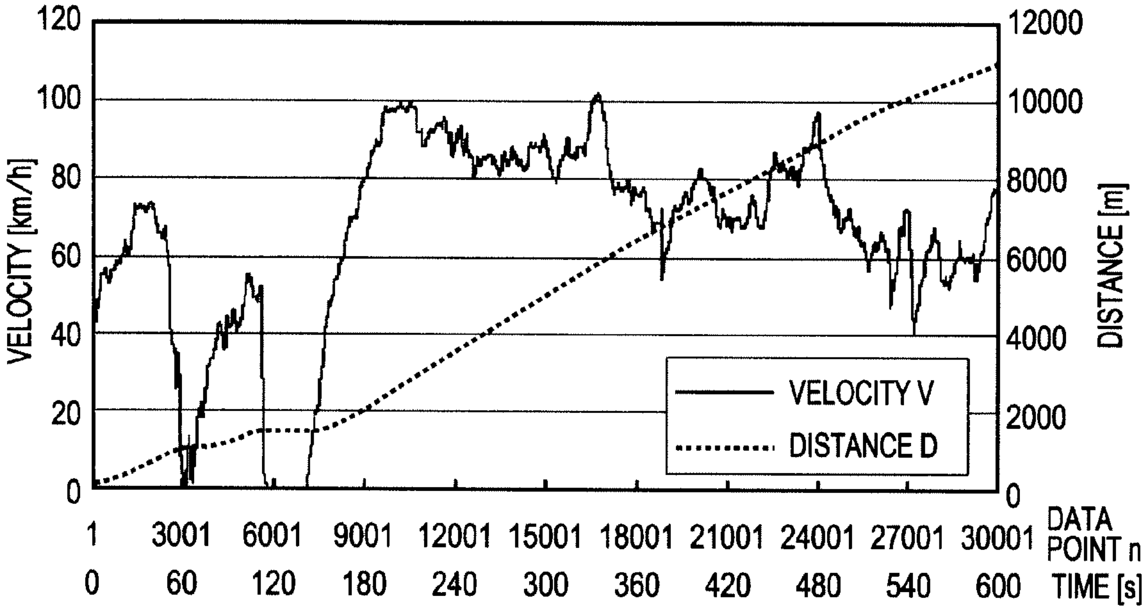


FIG. 29B

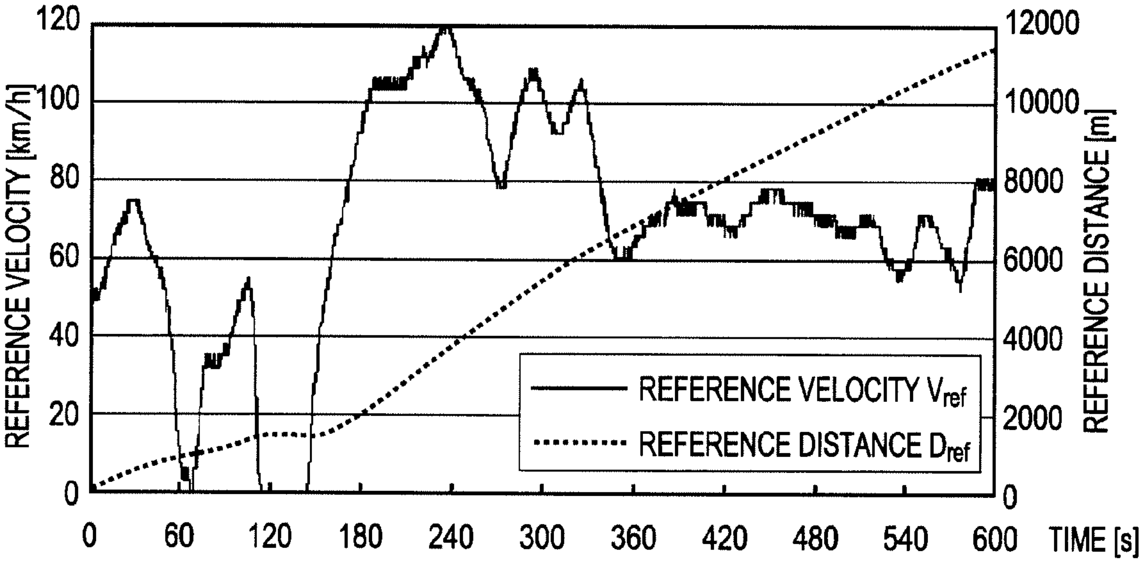

FIG. 30A

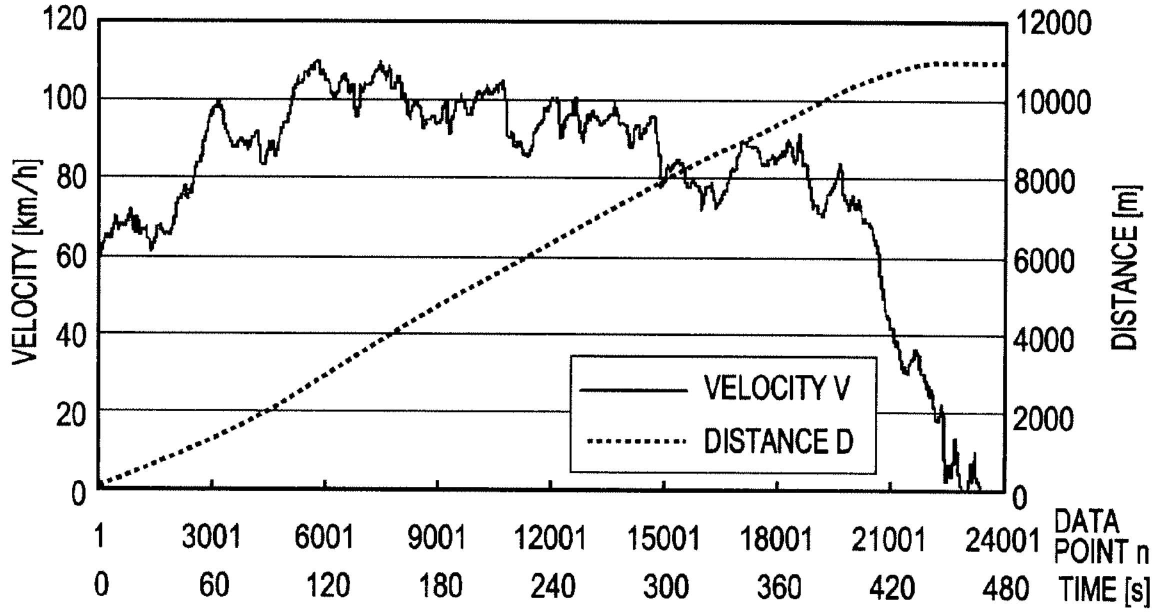


FIG. 30B

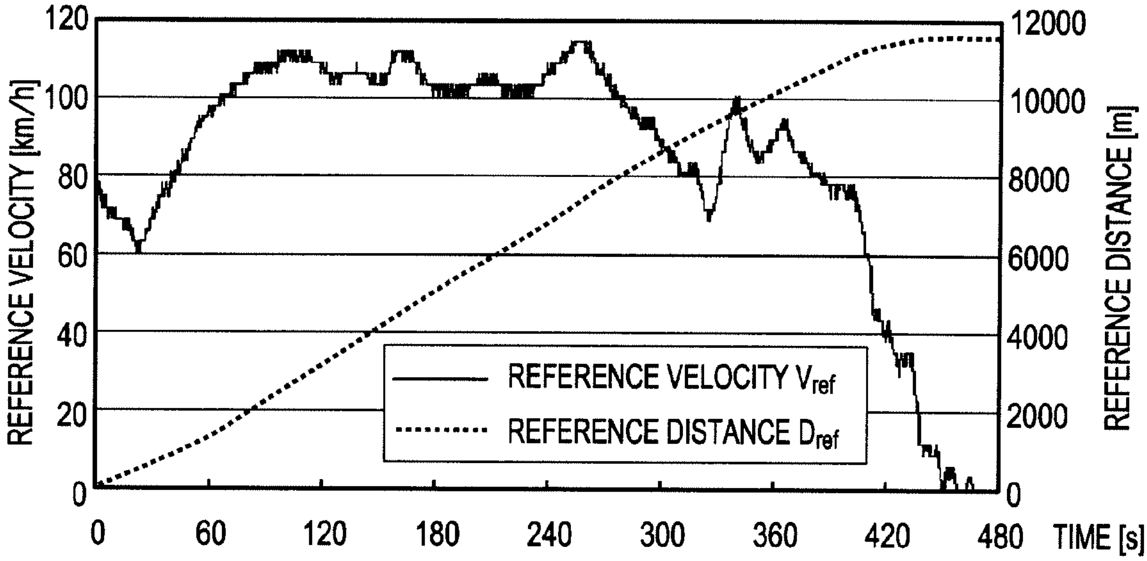

FIG. 31A

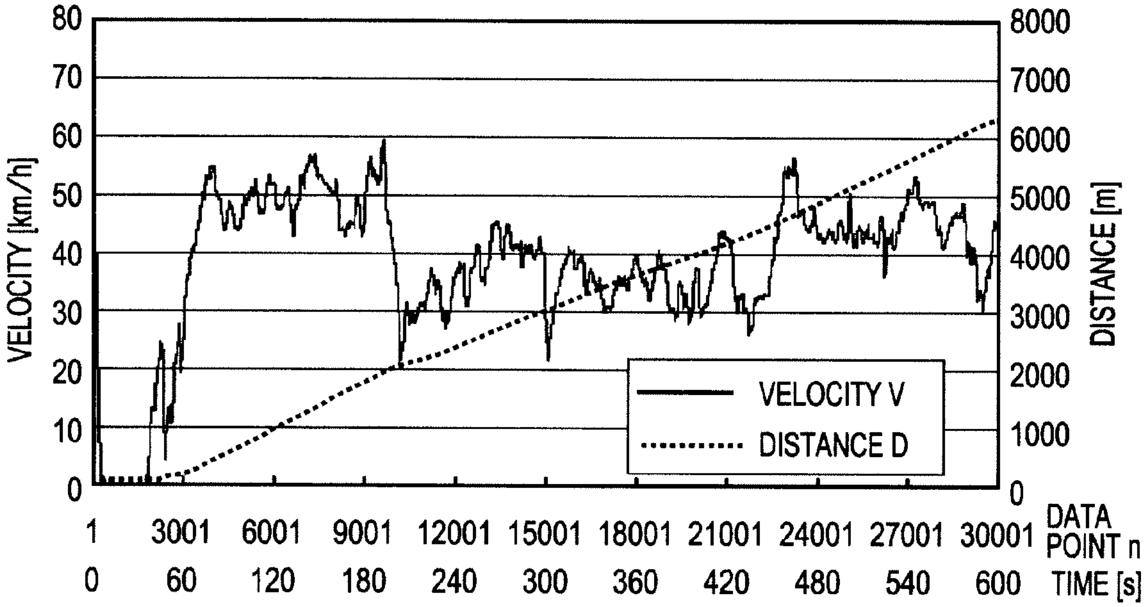


FIG. 31B

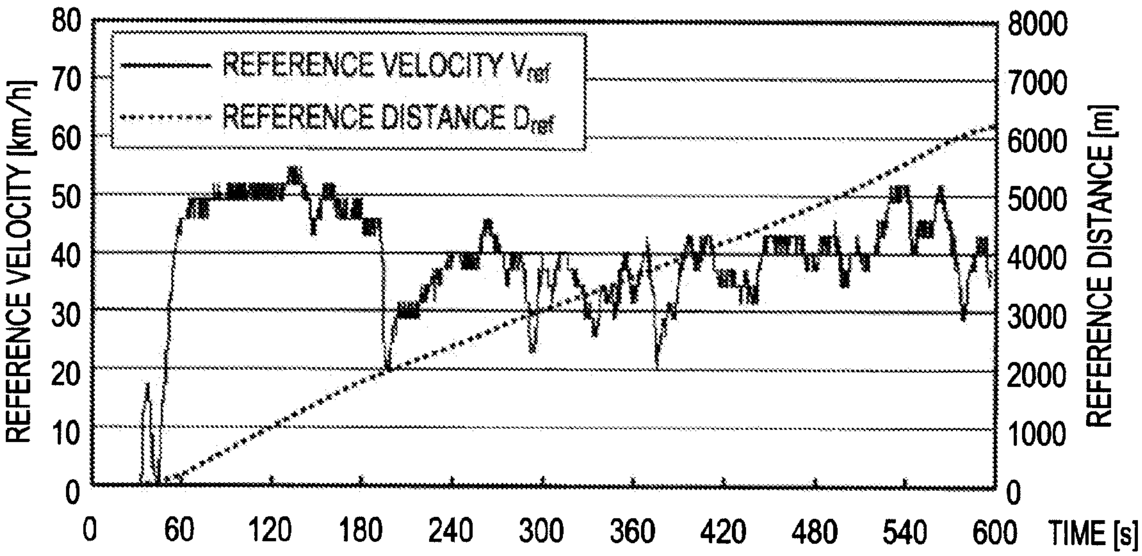

FIG. 32A

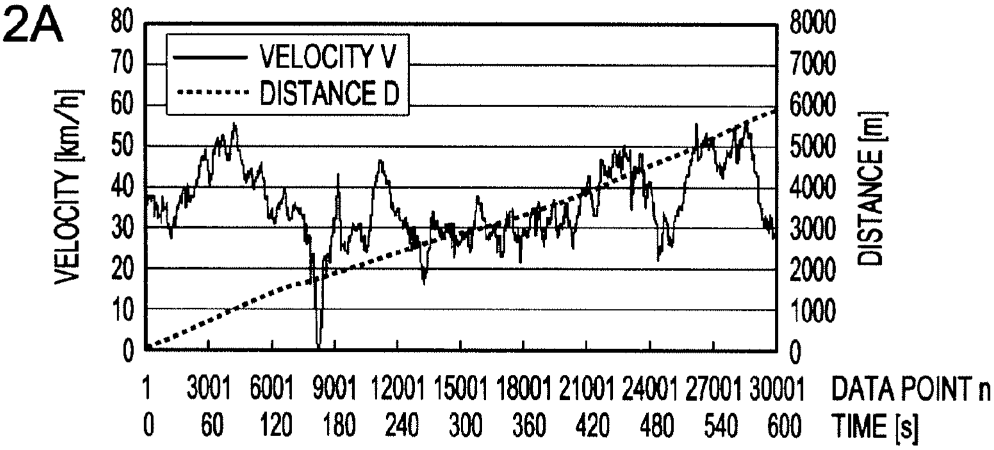


FIG. 32B

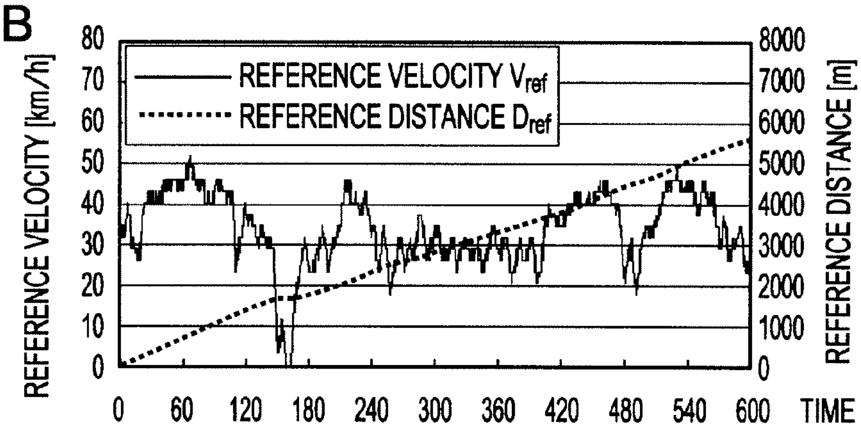


FIG. 32C

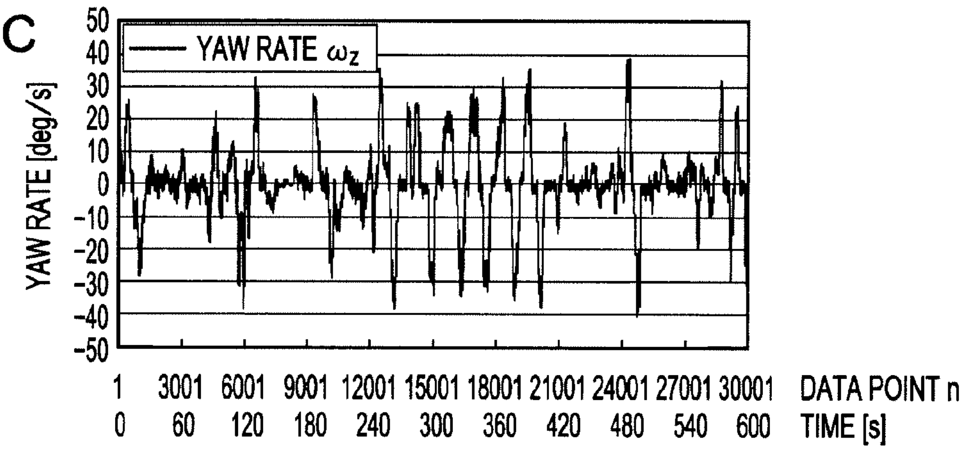

FIG. 33A

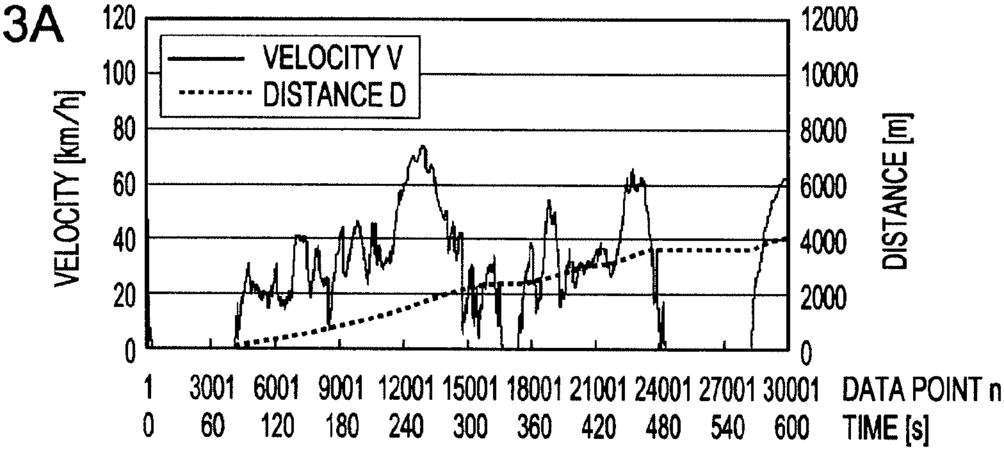


FIG. 33B

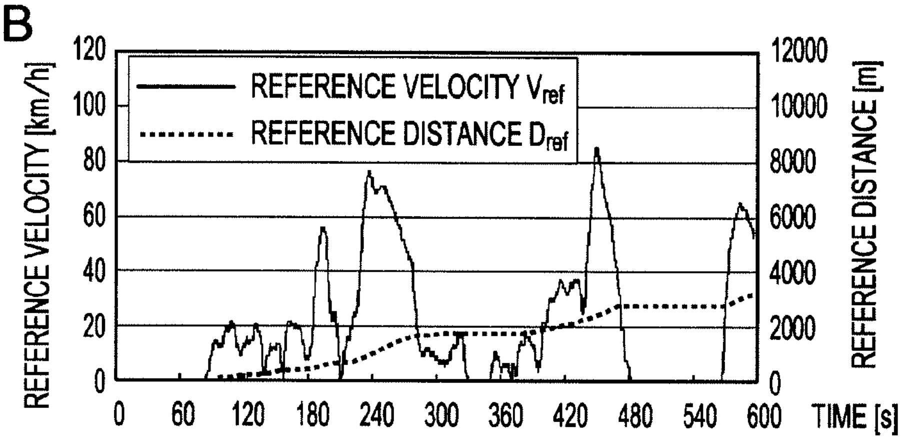


FIG. 33C

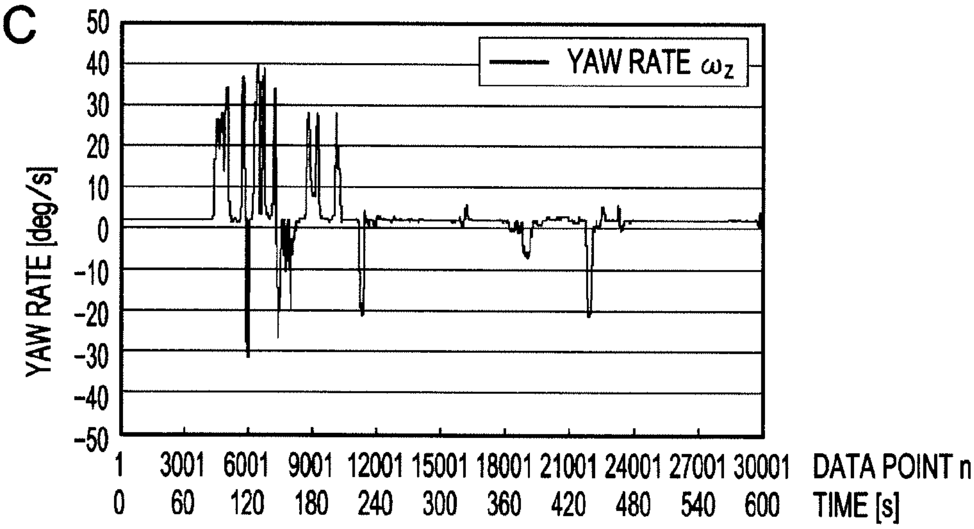

FIG. 34A

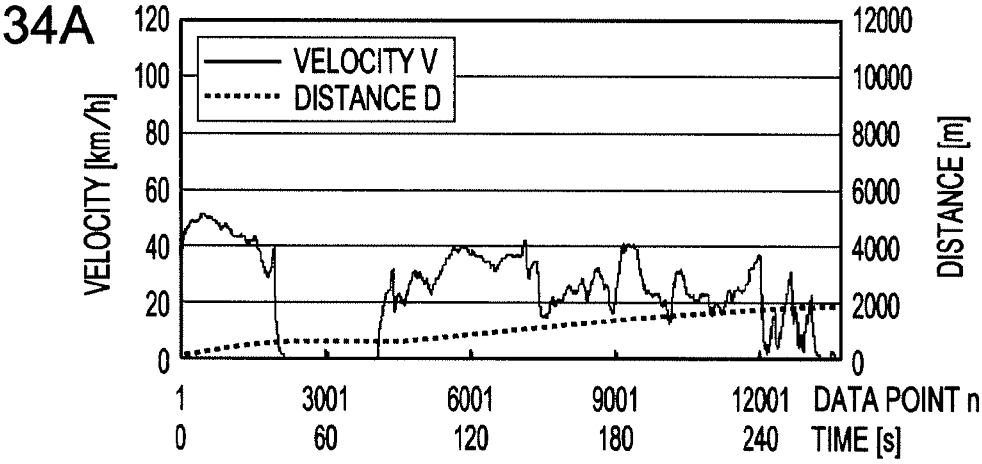


FIG. 34B

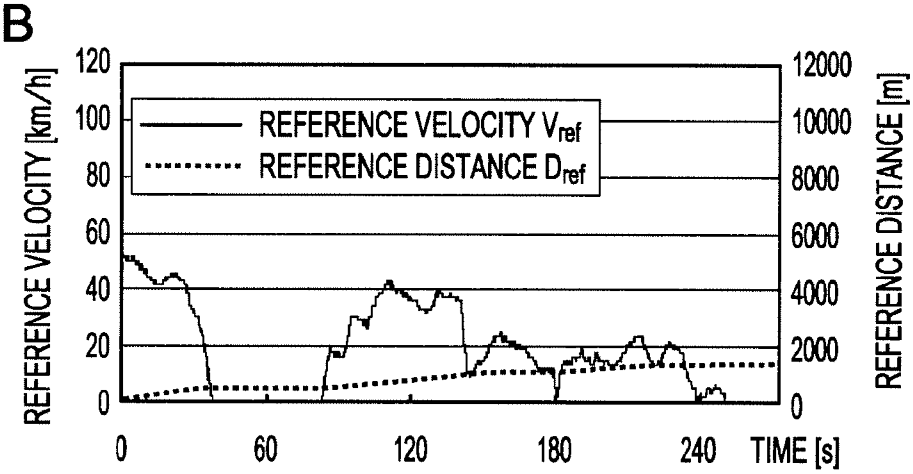


FIG. 34C

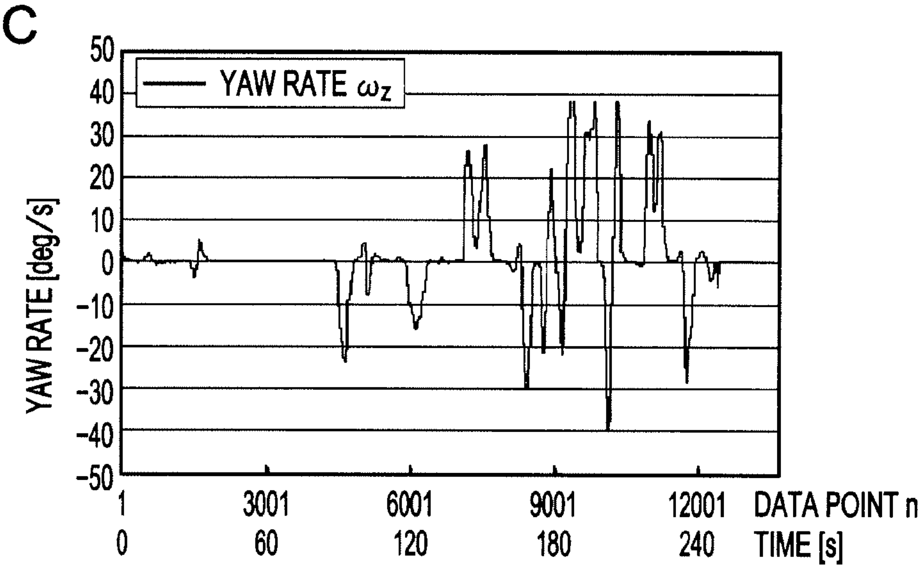

FIG. 35B

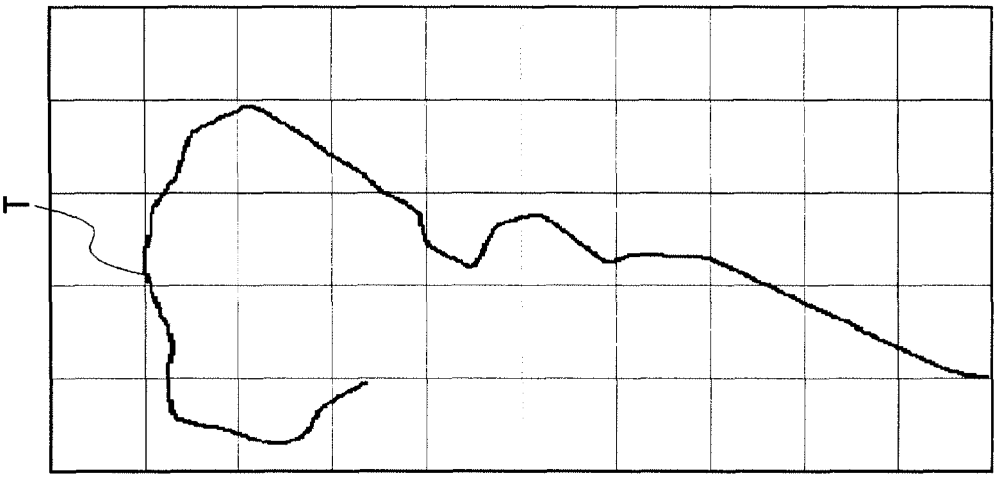


FIG. 35A

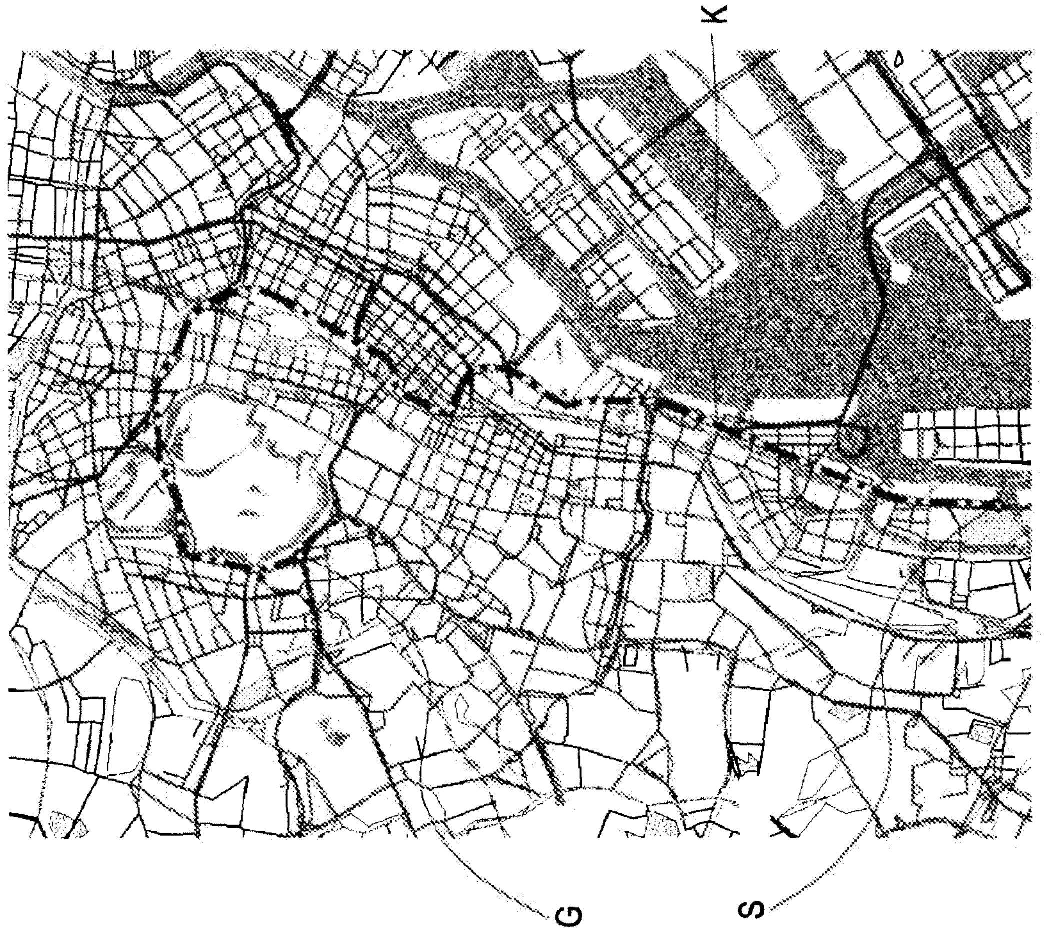

FIG. 36

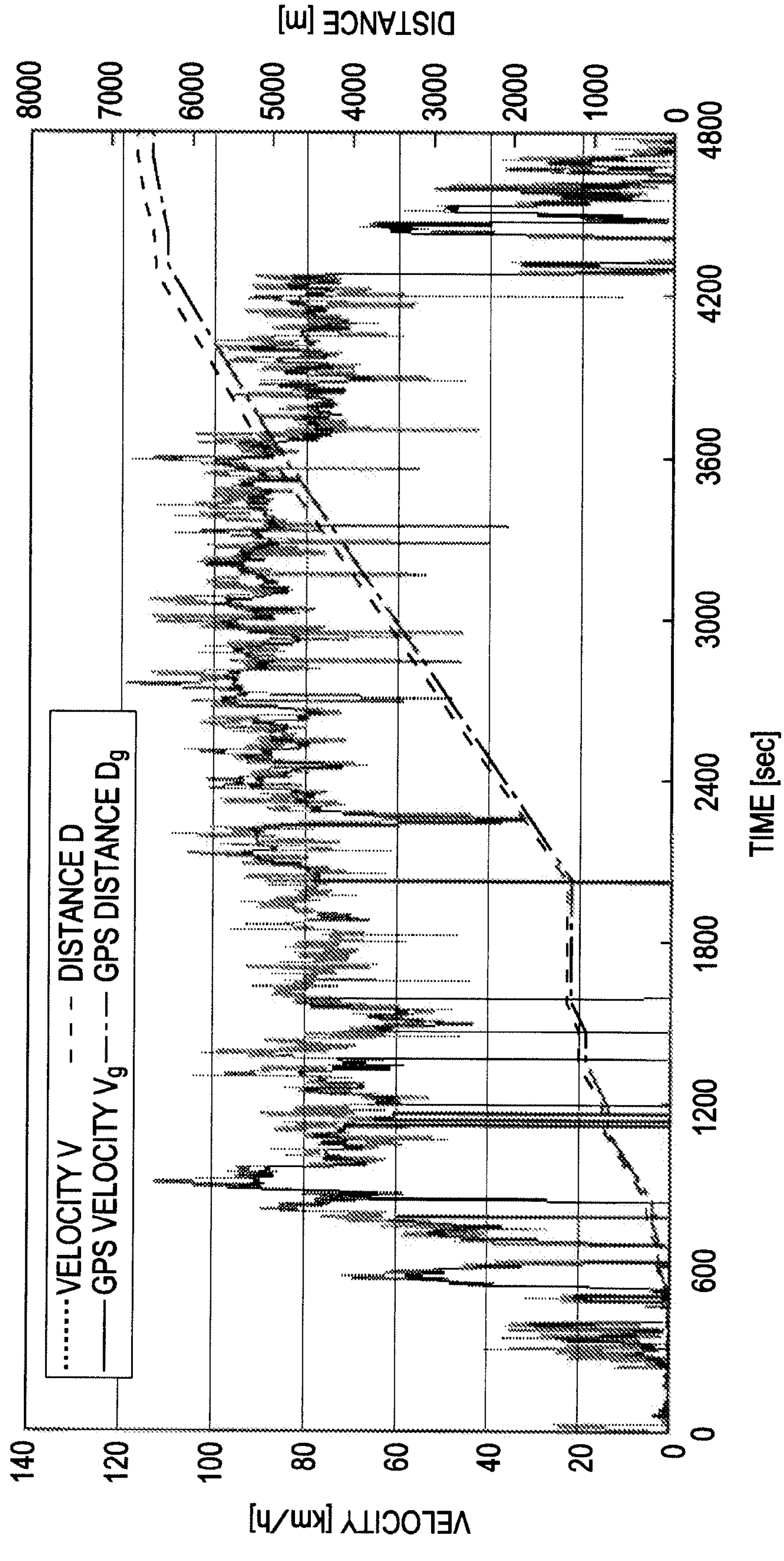

VELOCITY V
GPS VELOCITY $V_g$
DISTANCE D
GPS DISTANCE $D_g$
VELOCITY [km/h]
0
20
40
60
80
100
120
140
DISTANCE [m]
0
1000
2000
3000
4000
5000
6000
7000
8000
TIME [sec]
0
600
1200
1800
2400
3000
3600
4200
4800

FIG. 37

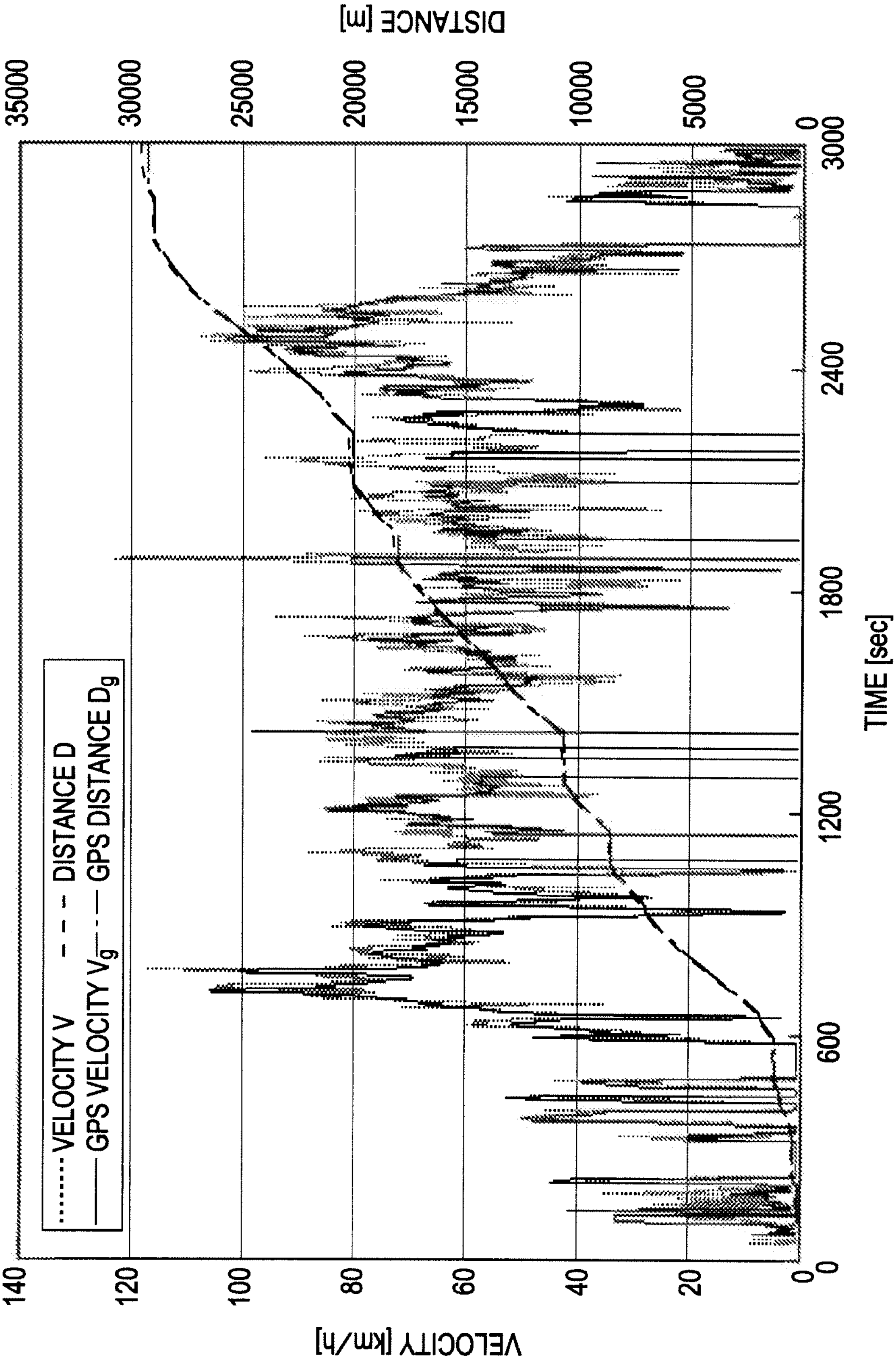
VELOCITY V
DISTANCE D
GPS VELOCITY $V_g$
GPS DISTANCE $D_g$
VELOCITY [km/h]
0
20
40
60
80
100
120
140
DISTANCE [m]
0
5000
10000
15000
20000
25000
30000
35000
TIME [sec]
0
600
1200
1800
2400
3000

FIG. 38

52

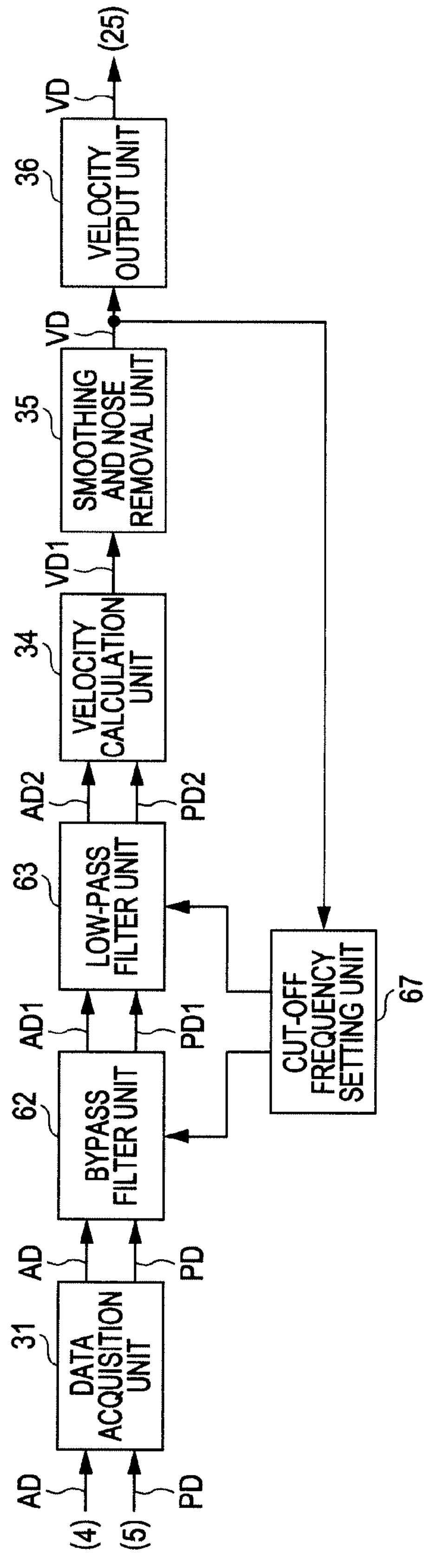
(4)
(5)
AD
PD
31
DATA ACQUISITION UNIT
AD
PD
62
BYPASS FILTER UNIT
AD1
PD1
63
LOW-PASS FILTER UNIT
AD2
PD2
34
VELOCITY CALCULATION UNIT
VD1
35
SMOOTHING AND NOSE REMOVAL UNIT
VD
36
VELOCITY OUTPUT UNIT
VD
(25)
CUT-OFF FREQUENCY SETTING UNIT
67

FIG. 39A

TBL1

| VELOCITY REGION | | FIRST | SECOND | THIRD | FOURTH |
|---|---|---|---|---|---|
| VELOCITY [km/h] | DURING ACCELERATION | 0 TO 25 | 25 TO 45 | 45 TO 65 | 65 OR MORE |
| | DURING DECELERATION | 0 TO 20 | 20 TO 40 | 40 TO 60 | 60 OR MORE |
| HIGH PASS CUT-OFF FREQUENCY [Hz] | | 0.7 | 0.8 | 0.9 | 1.0 |

FIG. 39B

TBL2

| VELOCITY REGION | | FIRST | SECOND | THIRD | FOURTH |
|---|---|---|---|---|---|
| VELOCITY [km/h] | DURING ACCELERATION | 0 TO 25 | 25 TO 45 | 45 TO 65 | 65 OR MORE |
| | DURING DECELERATION | 0 TO 20 | 20 TO 40 | 40 TO 60 | 60 OR MORE |
| LOW PASS CUT-OFF FREQUENCY [Hz] | | 1.4 | 1.6 | 1.8 | 2.0 |

FIG. 40

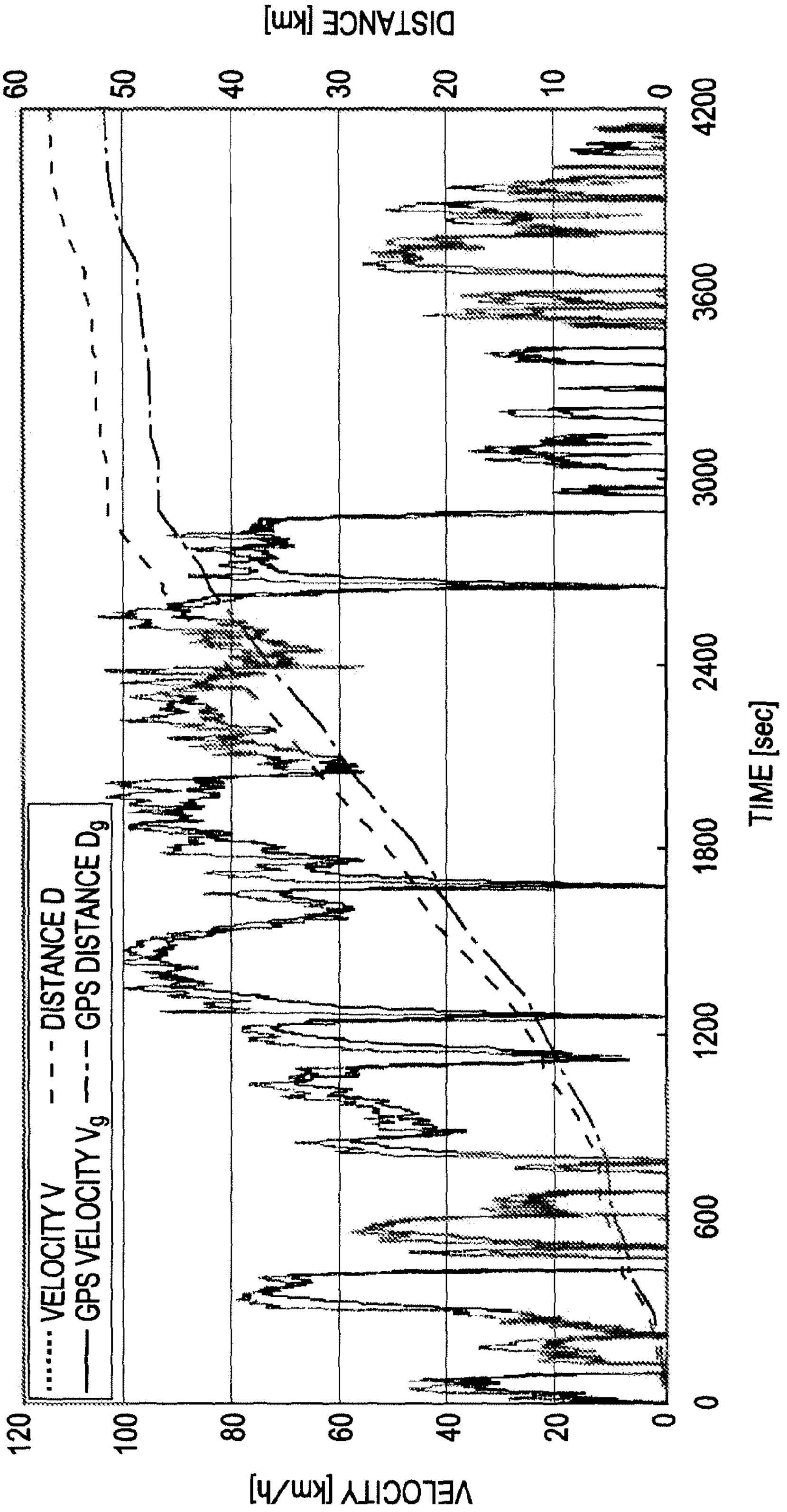
VELOCITY V
GPS VELOCITY $V_g$
DISTANCE D
GPS DISTANCE $D_g$
VELOCITY [km/h]
DISTANCE [km]
TIME [sec]
0
20
40
60
80
100
120
0
10
20
30
40
50
60
0
600
1200
1800
2400
3000
3600
4200

FIG. 41

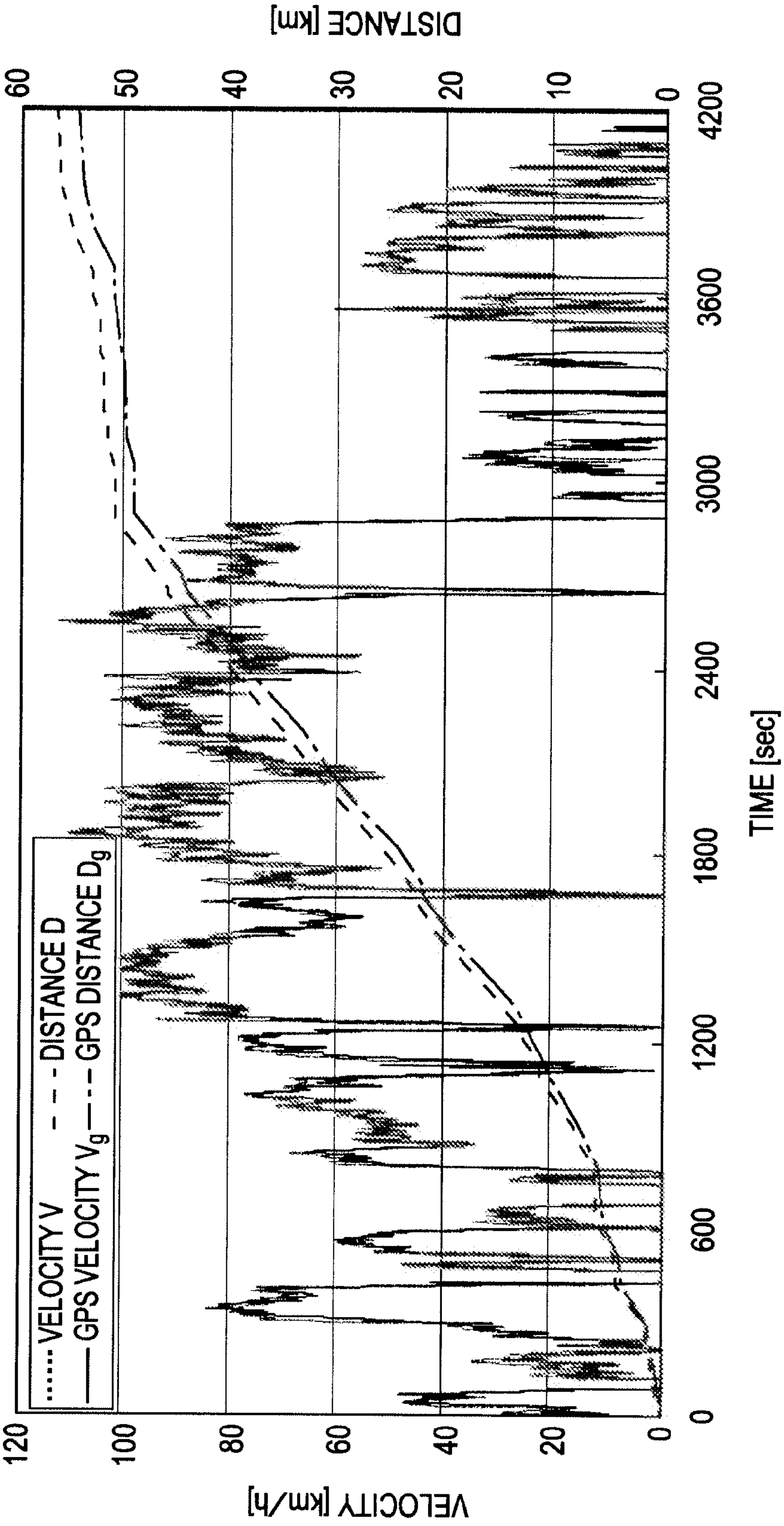
VELOCITY V
GPS VELOCITY $V_g$
DISTANCE D
GPS DISTANCE $D_g$
VELOCITY [km/h]
DISTANCE [km]
TIME [sec]
0
20
40
60
80
100
120
10
30
50
600
1200
1800
2400
3000
3600
4200

FIG. 42

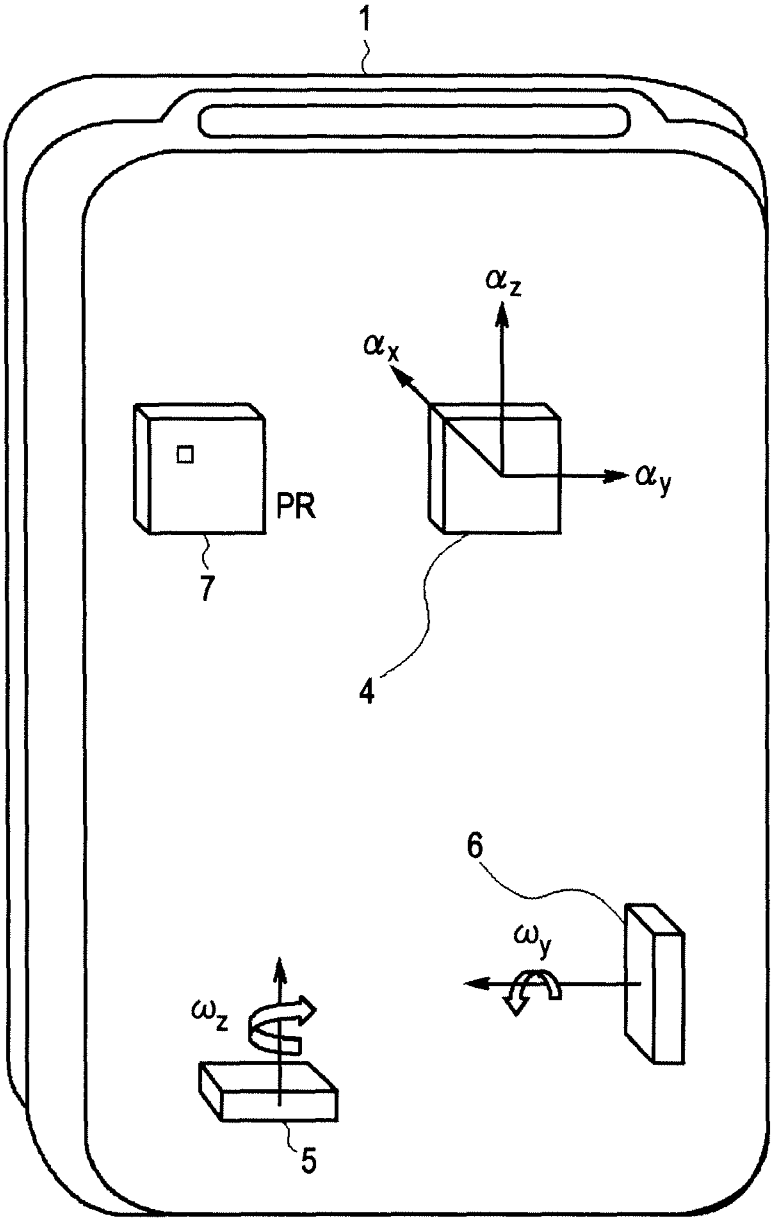

Europäisches Patentamt
European Patent Office
Office européen des brevets

# EUROPEAN SEARCH REPORT

Application Number
EP 10 17 3210

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P<br><br>L | EP 2 161 582 A2 (SONY CORP [JP]) 10 March 2010 (2010-03-10)<br>* valid priority application JP2008221713 of this document constitutes an earlier filing of the same subject matter by the same applicant; leads to no-validity of the priority claim of the present application;<br>paragraphs [0207], [0090], [0102] - [0115]; claims 1-6,8,9; figures *<br>----- | 1-6, 10-12<br>1-6, 10-12 | INV.<br>G01P3/50<br>G01C21/16<br>G01C21/26<br>G01P3/22 |
| X | DE 103 54 944 A1 (SIEMENS AG [DE]) 30 June 2005 (2005-06-30)<br>* paragraphs [0031], [0035]; figures *<br>----- | 1,2,11, 12 | |
| A | EP 1 903 306 A2 (ALPINE ELECTRONICS INC [JP]) 26 March 2008 (2008-03-26)<br>* paragraphs [0027], [0031] - [0034], [0057] - [0059]; claim 13; figures 1,2,4,10 * | 1-12 | |
| A,D | & JP 2008 076389 A (ALPINE ELECTRONICS INC) 3 April 2008 (2008-04-03)<br>----- | 1-12 | TECHNICAL FIELDS SEARCHED (IPC) |
| A | US 2008/243384 A1 (OHKUBO MASASHI [JP] ET AL) 2 October 2008 (2008-10-02)<br>* paragraphs [0022], [0031] - [0033], [0066] - [0075]; figures *<br>----- | 1-12 | G01P<br>G01C |

The present search report has been drawn up for all claims

1

| Place of search | Date of completion of the search | Examiner |
|---|---|---|
| The Hague | 12 January 2011 | Pflugfelder, Günther |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 17 3210

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2011

| Patent document cited in search report | Publication date | Patent family member(s) | Publication date |
|---|---|---|---|
| EP 2161582 A2 | 10-03-2010 | CN 101661048 A | 03-03-2010 |
| | | JP 2010078595 A | 08-04-2010 |
| | | US 2010057360 A1 | 04-03-2010 |
| DE 10354944 A1 | 30-06-2005 | NONE | |
| EP 1903306 A2 | 26-03-2008 | JP 2008076389 A | 03-04-2008 |
| | | US 2008071476 A1 | 20-03-2008 |
| US 2008243384 A1 | 02-10-2008 | JP 2008089517 A | 17-04-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008076389 A
- JP 2009198593 A
- JP 2008221713 A